(19) **Europäisches Patentamt / European Patent Office / Office européen des brevets**

(11) **EP 3 818 606 B1**

(12) # FASCICULE DE BREVET EUROPEEN

(45) Date de publication et mention de la délivrance du brevet:
**31.12.2025 Bulletin 2026/01**

(21) Numéro de dépôt: **19733835.3**

(22) Date de dépôt: **02.07.2019**

(51) Classification Internationale des Brevets (IPC):
$H02J\ 3/01^{(2006.01)}$    $H02J\ 3/14^{(2006.01)}$
$H02J\ 3/18^{(2006.01)}$    $H02J\ 3/38^{(2006.01)}$
$H02M\ 1/12^{(2006.01)}$

(52) Classification Coopérative des Brevets (CPC):
**H02J 3/01; H02J 3/14; H02J 3/1821; H02J 3/381; H02M 1/12;** H02J 2300/26; H02J 2310/12; H02J 2310/14; Y02B 70/3225; Y02E 10/56; Y02E 40/30; Y02P 80/10; Y04S 20/222

(86) Numéro de dépôt international:
**PCT/EP2019/067779**

(87) Numéro de publication internationale:
**WO 2020/007884 (09.01.2020 Gazette 2020/02)**

(54) **PROCÉDÉ DE MODÉLISATION DU FONCTIONNEMENT D'UN SITE INDUSTRIEL APPLIQUÉ AUX SITES INDUSTRIELS, RÉSEAUX PUBLICS, MICRO-RÉSEAUX ET SYSTÈMES EMBARQUÉS**

VERFAHREN ZUR MODELLIERUNG DES BETRIEBS EINER INDUSTRIEANLAGE, ANGEWANDT AUF INDUSTRIEANLAGEN, ÖFFENTLICHE NETZE, MIKRONETZE UND EINGEBETTETE SYSTEME

METHOD FOR MODELING THE OPERATION OF AN INDUSTRIAL SITE APPLIED TO INDUSTRIAL SITES, PUBLIC GRIDS, MICROGRIDS, AND EMBEDDED SYSTEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2018 EP 18305899**

(43) Date de publication de la demande:
**12.05.2021 Bulletin 2021/19**

(73) Titulaires:
• **ENSEA - Ecole Nationale Supérieure de L'Electronique et de ses Applications
95800 Cergy (FR)**
• **The University of Alabama in Huntsville
Huntsville, AL 35899 (US)**

(72) Inventeurs:
• **ALALI, Mohamad Alaa Eddin
95300 Pontoise (FR)**
• **SHTESSEL, Yuri
Owens Cross Roads, Alabama 35763 (US)**

• **BARBOT, Jean-Pierre
95320 Saint Leu la Foret (FR)**

(74) Mandataire: **Regimbeau
20, rue de Chazelles
75847 Paris Cedex 17 (FR)**

(56) Documents cités:
CN-A- 102 299 556    CN-U- 201 813 171
US-A1- 2013 030 590    US-A1- 2016 329 714

• **ALALI MHD A E ET AL: "A Lyapunov approach based higher order sliding mode controller for grid connected shunt active compensators with a LCL filter", 2017 19TH EUROPEAN CONFERENCE ON POWER ELECTRONICS AND APPLICATIONS (EPE'17 ECCE EUROPE), JOINTLY OWNED IEEE-PELS AND EPE ASSOCIATION, 11 September 2017 (2017-09-11), XP033250489, DOI: 10.23919/ EPE17ECCEEUROPE.2017.8099107**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## DOMAINE TECHNIQUE GÉNÉRAL ET ART ANTÉRIEUR

L'invention concerne le domaine général de l'électronique de puissance et de ses applications sur les réseaux électriques de distribution ou embarqués, les bâtiments intelligents et les micro-réseaux, et plus particulièrement des modules de filtrage et de compensation des réseaux électriques et à injection de puissance d'origines renouvelables.

Il est bien connu que la qualité du signal électrique délivré par le réseau de distribution a une conséquence directe sur les performances des systèmes alimentés par ce réseau, ainsi que la durée de vie des équipements électriques qui constituent le réseau ou qui y sont raccordés.

Notamment, la distorsion harmonique, le déphasage entre la tension et l'intensité, soit le réactif, ainsi que le déséquilibre des courants et tensions sont des facteurs permettant d'exprimer la qualité de l'énergie transitant dans ce réseau.

Il est entendu par déséquilibre une différence dans les grandeurs physiques du signal entre les différentes phases et/ou amplitudes, par exemple des niveaux de tension, d'intensité.

Le taux de distorsion harmonique est une mesure de la linéarité du traitement du signal effectuée en comparant le signal en sortie d'un appareil à un signal d'entrée sinusoïdal.

La non-linéarité du système déforme cette sinusoïde. Le signal de sortie reste un signal périodique qui peut s'analyser en une somme de sinusoïdes de fréquences multiples de celle donnant la période, appelée fréquence fondamentale.

Chacune de ces sinusoïdes est un harmonique de rang égal au quotient de sa fréquence par la fréquence fondamentale. Le taux de distorsion harmonique est le rapport des valeurs efficaces entre la fréquence fondamentale et les autres.

Un appareil comportant des charges non linéaires connecté à un réseau électrique reçoit une puissance du réseau électrique et réinjecte un signal dans le réseau, le signal réinjecté dans le réseau étant dégradé par le fonctionnement de l'appareil.

Il est entendu par charge non linéaire une charge à base de composants d'électronique de puissance consommant sur le système d'alimentation de la puissance active (avec ou sans puissance réactive) ainsi et surtout réinjecter au réseau d'alimentation de la puissance déformante (liée aux harmoniques). Ces harmoniques peuvent être à rangs conventionnels (5, 7, 11, 13, etc.) pour les systèmes d'alimentation à 3 fils : charges non linéaires triphasées (largement répandues dans les zones industrielles). Dans le cas des charges non linéaires monophasées installées dans un système d'alimentation à 4 fils (3 phases et le neutre) largement employées dans les zones résidentielles, commerciales ou administratives, des harmoniques de rang 3 et leurs multiples impaires (3, 9, 15, etc.) vont circuler dans ce réseau en plus des harmoniques conventionnels.

D'autre part, le déphasage entre la tension et l'intensité du signal implique l'apparition d'une puissance réactive qui entraîne, entre autres, la diminution de la puissance active transmissible dans le réseau.

Le développement des technologies de production d'énergie, notamment d'origine renouvelable, a entraîné l'apparition de nombreuses unités de production individuelles, notamment dans les solutions d'habitations dites à énergie positive.

Lorsqu'une unité de production de puissance, notamment dans le cas d'énergies renouvelables de type solaire ou éolien, est connectée au réseau, il est nécessaire de recourir à un ou plusieurs onduleurs ou redresseurs-onduleurs afin de gérer et convertir la puissance générée par l'unité en courant continu et tension continue en signal alternatif, avant de l'injecter dans le réseau.

Les onduleurs, constitués le plus souvent d'interrupteurs d'électronique de puissance commandés à l'ouverture et à la fermeture et bidirectionnels, tels que les IGBT (IGBT, de l'anglais *Insulated Gate Bipolar Transistor* ou transistor bipolaire à grille isolée) et les GTO (GTO, de l'anglais *Gate Turn-off Thyristor* ou thyristor à extinction par la gâchette). Par un jeu de commutations commandées de manière appropriée (généralement une modulation de largeur d'impulsion), on module la source afin d'obtenir un signal alternatif de la fréquence désirée.

Les fréquences de commutation des composants d'électronique de puissance des onduleurs induisent généralement des composantes harmoniques à hautes fréquences dans le signal injecté dans le réseau, ce qui dégrade la qualité du signal transitant dans le réseau.

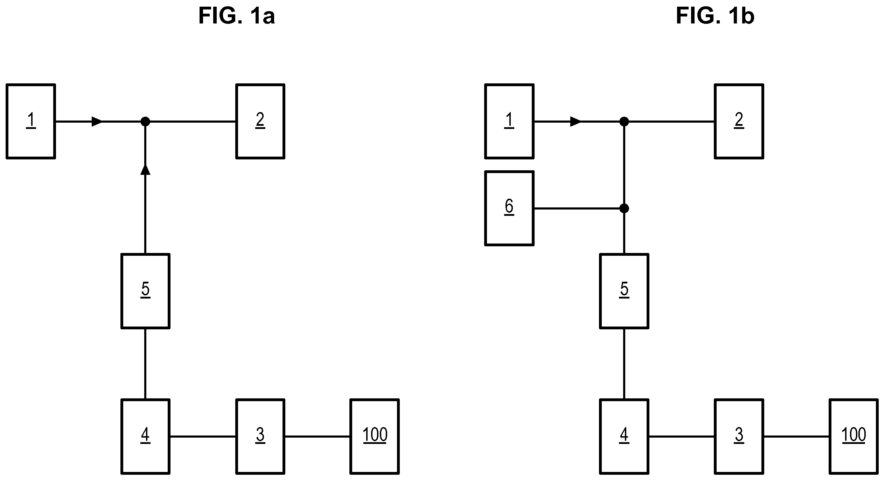

Dans un ensemble tel que représenté en figure 1a, comprenant un réseau général 1, une charge non linéaire et/ou linéaire 2, et un élément de stockage de l'énergie continue 3 connectée à un onduleur 4, il est connu de connecter en sortie de l'onduleur 4 un filtre 5 configuré pour bloquer les composantes à hautes fréquences de commutation contenues dans le signal à injecter dans le réseau électrique 1.

Ainsi, les harmoniques à hautes fréquences du signal causés par la commutation de l'onduleur 4, ne sont pas transmis via le filtre 5 au réseau 1 ; seul le signal souhaité est généré par l'onduleur 4 et injecté au réseau 1 ou à la charge 2.

Différentes structures de filtre 5 ont été proposées à cet effet.

Un filtre de premier ordre, le plus classiquement utilisé ; composé d'une simple inductance de résistance interne pratiquement négligeable, tel que représenté en figure 1b, ne permet notamment pas de remplir cette fonction.

En effet, plus l'inductance d'un tel filtre est élevée, plus la capacité du filtre à empêcher les composantes dues à la commutation d'être injectées sur le réseau 1 est élevée. Cependant, plus l'inductance est élevée, plus la vitesse de variation de l'intensité transitant dans le filtre est réduite et plus le filtre va occasionner un déphasage entre l'intensité réelle souhaitée et l'intensité à injecter à l'ensemble réseau 1 - charge 2 via le filtre 5.

Inversement, une valeur faible de l'inductance permet à la majorité des composantes dues à la commutation d'être injectée dans le réseau 1 et par conséquent d'affecter les installations et les équipements électriques.

Le bon dimensionnement du filtre de sortie du premier ordre dépendra donc du compromis à trouver entre la dynamique et l'efficacité du dispositif à base de l'onduleur surtout quand il fonctionne en tant que filtre actif parallèle à dépollution harmonique.

Ce compromis est très difficile à fixer sans l'emploi d'un filtre passif auxiliaire 6 installé à la sortie du filtre de sortie 5 ou en amont du côté réseau, pour filtrer les composantes à hautes fréquences tel que représenté en figure 1b.

Cependant, ce filtre auxiliaire 6 peut causer des effets secondaires non désirés comme la résonance avec d'autres éléments passifs installés sur le réseau électrique 1.

Ces phénomènes de résonance électrique entraînent dans certains cas des pics de tension ou d'intensité largement supérieurs aux valeurs admissibles par les appareils connectés au réseau 1 et provoquent la destruction de ces appareils.

Ce filtre auxiliaire occasionne également une consommation de puissance active par sa résistance d'amortissement. De plus, la qualité de filtrage de ces filtres auxiliaires se dégrade avec le temps à cause du vieillissement de ses éléments passifs.

## PRÉSENTATION GÉNÉRALE DE L'INVENTION

Un but de l'invention est de « dépolluer » le courant consommé par une charge non linéaire, en annulant, du côté réseau, son contenu harmonique, le contenu déséquilibré ainsi que le contenu réactif du courant dans l'objectif d'améliorer la qualité de la tension du côté réseau électrique. Cette invention, ayant une structure à 4 fils, est adaptée au spectre harmonique contenant les rangs conventionnels (5, 7, 11, 13, etc.) des zones industrielles ainsi que ceux du rang 3 et leurs multiples impaires (3, 9, 15, etc.) des zones résidentielles, commerciales ou administratives.

Un autre but est de maximiser la puissance active productible par une unité de génération d'énergie renouvelable des Figures 1a, 1b.

Un autre but est d'optimiser la consommation d'énergie d'un bâtiment intelligent.

Un autre but est d'optimiser la production énergétique d'une unité de production d'énergie conventionnelle (à origine fossile : pétrole, gaz, etc.) au sein d'un micro-réseau.

Un autre but est d'optimiser la gestion de l'énergie transitant entre les unités de production (renouvelable et conventionnelle) et les unités de consommation.

Afin d'y parvenir, l'invention propose un procédé de modélisation du fonctionnement électrique d'un site industriel qui comporte une pluralité de machines commandées et réparties sur une ou plusieurs lignes de production selon la revendication 1.

Optionnellement mais avantageusement, dans un tel procédé, les machines avec leurs commandes, basées, entre autre, sur des convertisseurs d'électronique de puissance, sont modélisées par des sources de courant, représentant la consommation totale (actif, réactif et harmoniques, etc.) des machines, mesurée par l'analyseur de la qualité d'énergie installé à l'entrée de chaque ligne de production.

Plus précisément, les étapes de la modélisation sont les suivantes :

1- installer un appareil de mesures qui est un analyseur de spectre/analyseur de la qualité d'énergie, à l'entrée de chaque ligne de production du site étudié, et qui fournit toutes les grandeurs électriques du réseau, à savoir : les puissances active, réactive et apparente, le facteur de puissance, les composantes fondamentales du courant et de la tension, le taux total de distorsion harmonique (THD) du courant et de la tension, le taux individuel de distorsion harmonique des courants et des tensions, etc.,

2- modéliser les puissances active et réactive par une branche R-L parallèle ou par une seule source de courant qui représente le courant fondamental, avec un angle correspondant au facteur de puissance ; le sens de passage du courant va du réseau électrique 1 vers la charge 2 (représentée ici par les sources de courant),

3- modéliser le taux individuel de distorsion harmonique des courants et des tensions par des sources de courant ; chacune correspondant à un rang harmonique, le sens de passage des courants harmoniques va de la charge (2) (représentée ici par les sources de courant) vers le réseau électrique (1),

4- connecter toutes ces sources de courant à une ou plusieurs résistances de valeurs très élevées (de l'ordre du MΩ), pour forcer le passage des courants dans un seul sens.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1a est un schéma représentant un réseau électrique alimentant une charge et une unité de puissance à génération d'énergie renouvelable connecté à un onduleur, via un ou plusieurs éléments de stockage capacitif, comportant un filtre selon l'art antérieur ; la figure 1b représente ce même réseau avec une autre structure de filtre de l'art antérieur ;

- la figure 2 est un schéma représentant un réseau électrique alimentant une charge avec un onduleur, inclus dans un dispositif de compensation active selon un exemple ;

- la figure 3 est un schéma représentant la structure d'un dispositif de compensation active selon un exemple, notamment la structure de l'unité de contrôle-commande ;

- la figure 4 est un schéma représentant un système électrique selon un exemple, dans lequel le dispositif de compensation s'insère, en parallèle, entre une unité de production d'énergie renouvelable, au sein d'un bâti d'autoconsommation, et l'ensemble réseau-charges ;

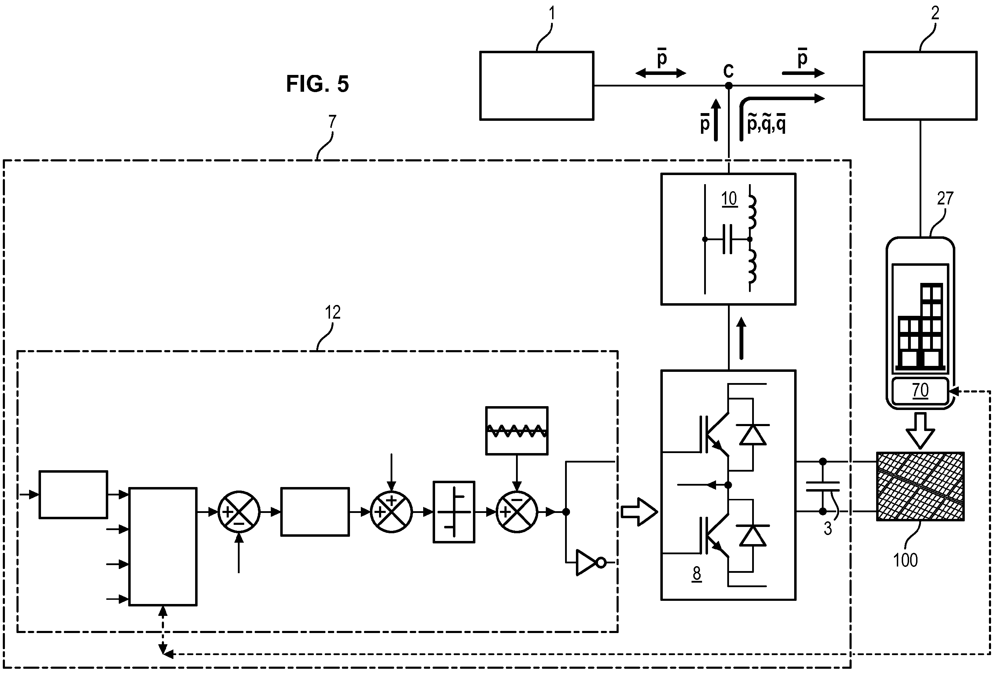

- la figure 5 est un schéma représentant un système électrique selon un mode de réalisation d'un exemple, dans lequel le système est connecté à un bâtiment intelligent ;

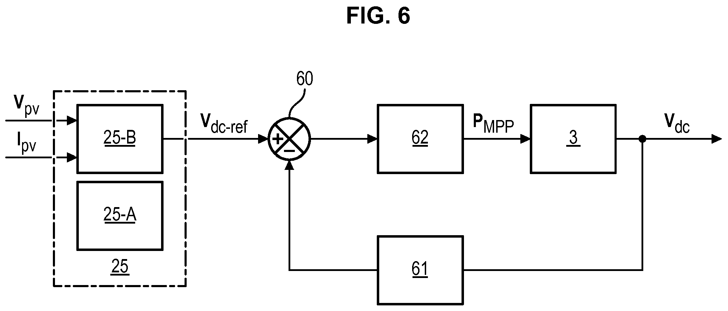

- la figure 6 représente la boucle de régulation de l'élément de stockage capacitif dans l'objectif, entre autres, d'extraire la puissance maximale active de l'unité de puissance à génération d'énergie renouvelable ;

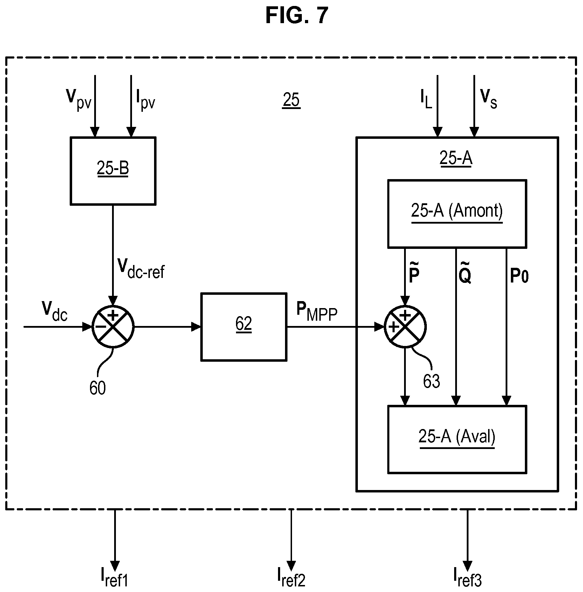

- la figure 7 représente l'intégration de la méthode de calcul de cette puissance maximale active dans l'algorithme d'identification/calcul des courants non actifs (harmoniques, réactifs et déséquilibré, etc.) ;

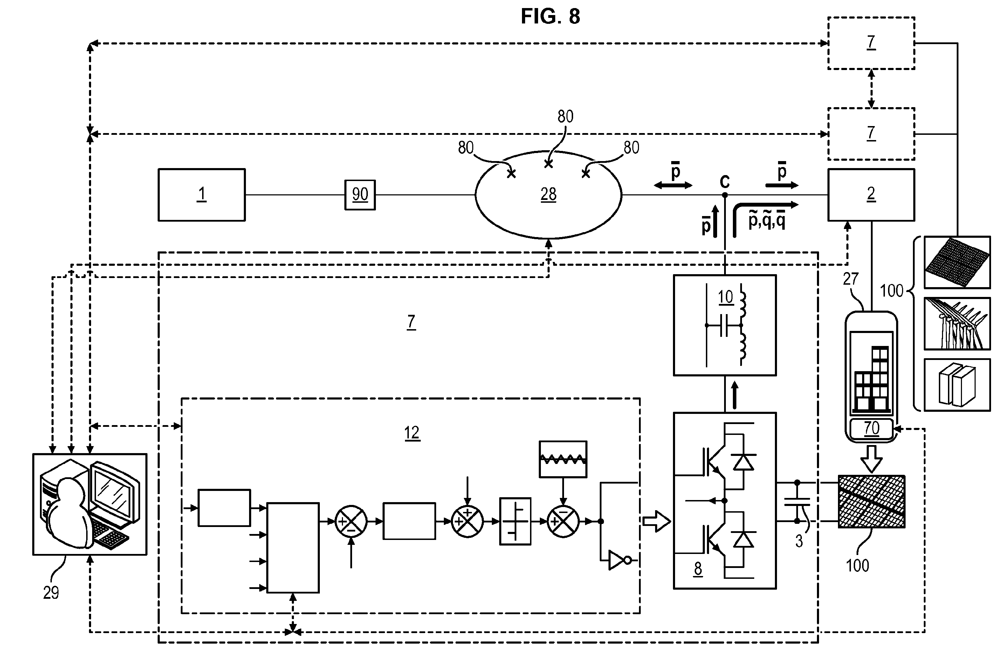

- la figure 8 est un schéma représentant un système électrique selon un deuxième mode de réalisation de l'invention, dans lequel le système électrique comprend un système de gestion semi-centralisée qui gère la production d'énergie conventionnelle du réseau ainsi, qu'en cas d'urgences, le mode de fonctionnement des unités centralisées via les dispositifs de compensation active connectés, à leur tour, aux unités de production d'énergie renouvelable ;

- la figure 9 représente une structure générale du filtre actif parallèle selon un exemple ;

- la figure 10 représente un schéma équivalent par phase du filtre de sortie de troisième ordre LCL selon un exemple ;

- la figure 11 représente le diagramme du gain du filtre de sortie de troisième ordre LCL ;

- la figure 12 représente un schéma blocs général de l'algorithme de contrôle du courant du filtre actif ;

- la figure 13 représente un effet du déphasage sur la qualité de compensation du filtre actif ; plus particulièrement la figure 13a représente l'intensité de la charge, la figure 13b représente le courant de consigne et le courant injecté, et la figure 13c représente le courant du réseau avec l'effet du déphasage ainsi que le courant idéal estimé sans l'effet du déphasage ;

- la figure 14 représente les diagrammes du gain et de la phase de la fonction de transfert de la boucle de contrôle du filtre actif avec RST qui est un contrôleur linéaire basé, entre autres, sur un placement des pôles de la boucle fermée (boucle de contrôle);

- la figure 15 représente la poursuite et le signal de commande monophasé avec les contrôleurs à mode glissant utilisant les fonctions de commande Signe, Sigmoïde et augmentation artificielle du degré relatif ;

- la figure 16 représente la poursuite et le signal de commande monophasé avec les contrôleurs à mode glissant d'ordre supérieur utilisant les algorithmes de commande SMC, C-HOSM, 2-SMC Twisting, 2 SMC Super-Twisting et l'approche de Lyapunov ;

- la figure 17 représente un schéma électrique du site industriel étudié ;

- la figure 18 représente une photographie de l'analyseur de la qualité d'énergie installée dans le site industriel étudié ;

- la figure 19 représente un modèle de la charge globale de la ligne de production de l'usine étudiée ;

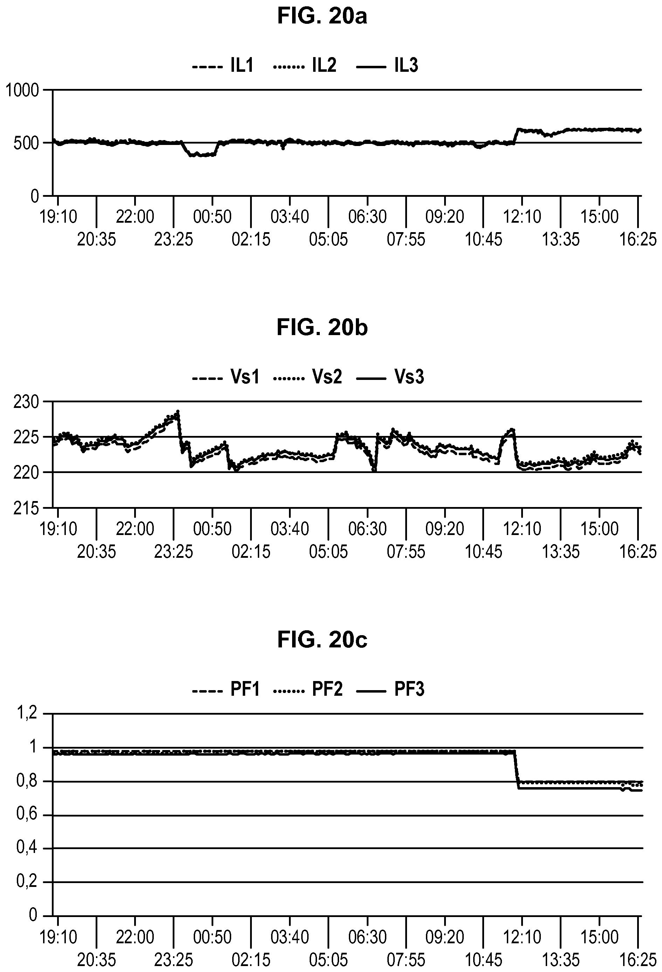

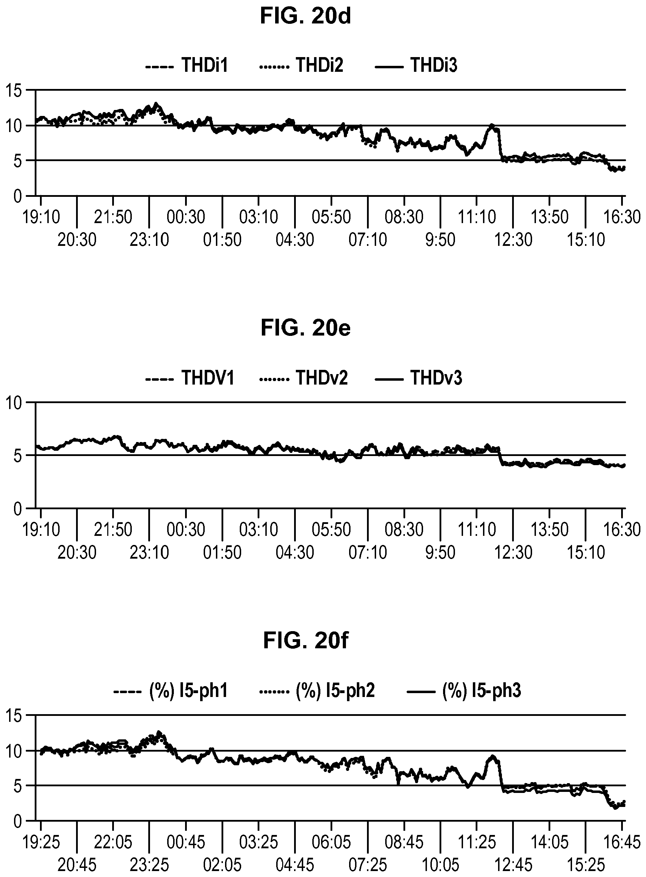

- les figures 20a à 20i représentent les courbes de mesure délivrées par l'analyseur de la qualité d'énergie ; plus précisément la figure 20a représente les tracés triphasés (Ph1, Ph2 et Ph3) des courants de la charge totale IL123 en A ; la figure 20b représente les tensions du réseau électrique Vs123 en V ; la figure 20c représente les facteurs de puissance PF123 ; la figure 20d représente les distorsions harmoniques totales THD des courants de la charge totale THDi123 en % ; la figure 20e représente les distorsions harmoniques totales des tensions du réseau THDv123 en % ; les figures 20f à 20i représentent respectivement les taux de distorsion harmonique individuels pour les rangs 5, 7, 11 et 13 des courants des charges pour chacune des phases, les taux de distorsion étant exprimés en % ;

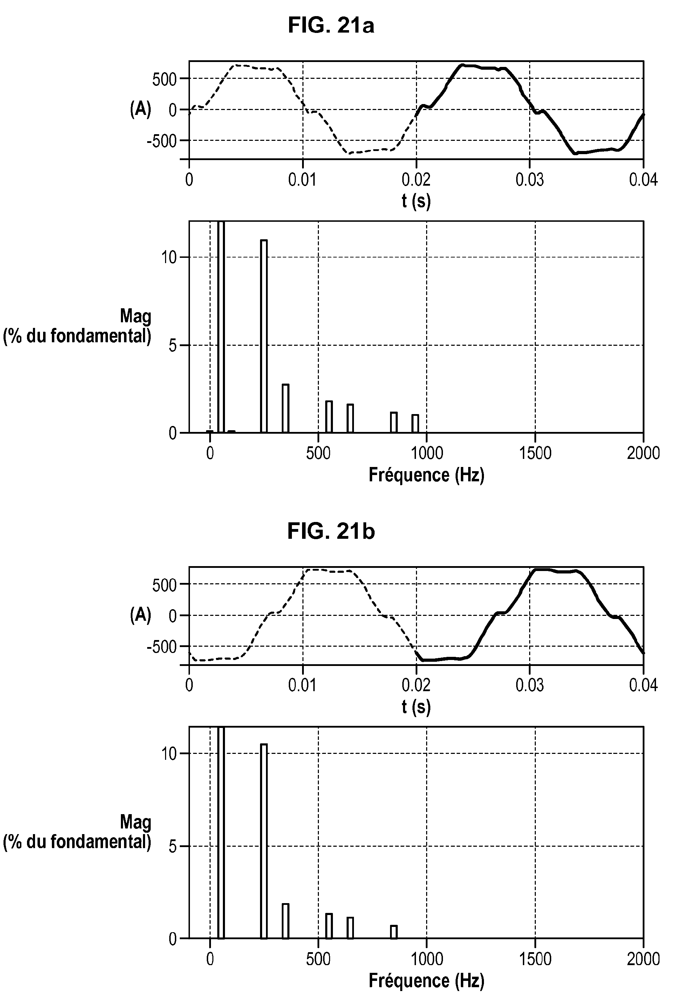

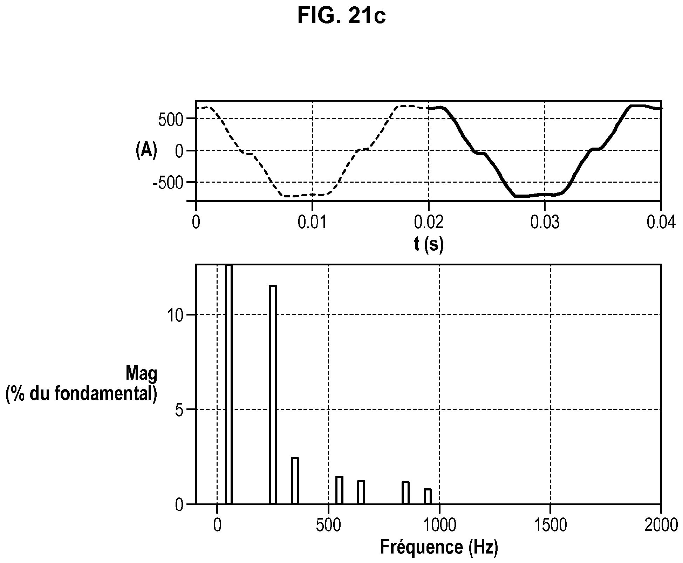

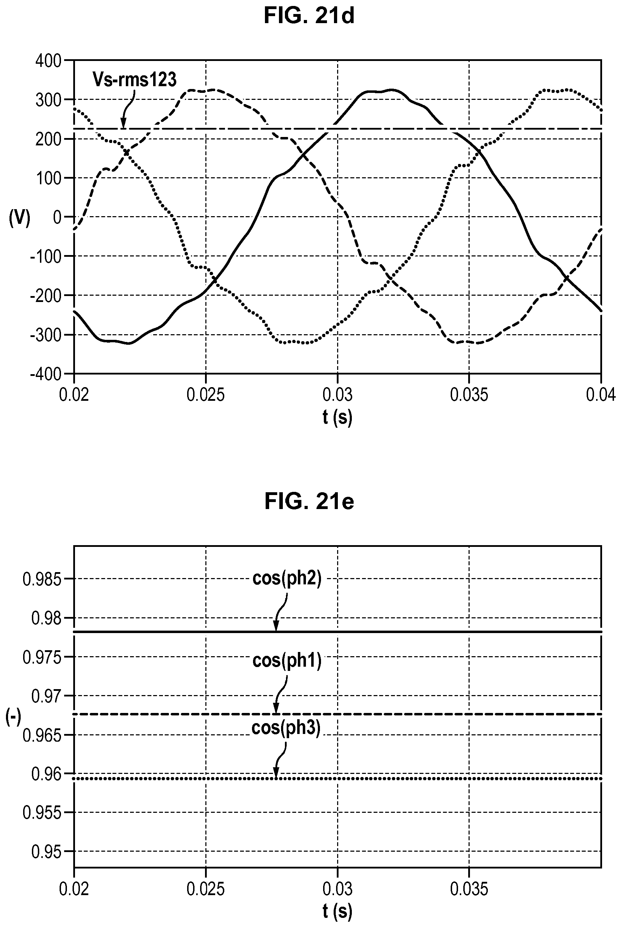

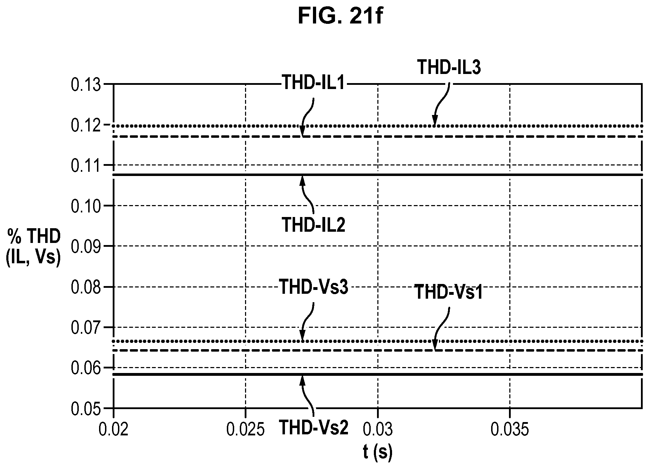

- les figures 21a à 21f représentent les résultats de simulation pour la validation du modèle proposé; en particulier la figure 21a représente les courants de la charge totale sur la phase ph1 y compris les harmoniques ; la figure 21b représente les courants de la charge totale sur la phase ph2 y compris les harmoniques ; la figure 21c représente les courants de la charge totale sur la phase ph3 y compris les harmoniques ; la figure 21d représente les tensions simples du réseau; la figure 20e représente les facteurs de puissance ; la figure 21f représente les taux de distorsion harmonique sur les différentes phases, et notamment le THD-V, ainsi que le THD-I;

- la figure 22 représente le filtrage du courant du réseau perturbé étudié en employant les contrôleurs à mode glissant utilisant les fonctions de commande Signe, Sigmoïde et augmentation artificielle du degré relatif ;

- la figure 23 représente le filtrage de la tension du réseau étudié en employant les contrôleurs à mode glissant utilisant les fonctions de commande Signe, sigmoïde et augmentation artificielle du degré relatif ;

- la figure 24 représente le filtrage du courant et la tension du réseau perturbé étudié en employant le contrôleur C-HOSM ;

- la figure 25 représente le filtrage du courant et la tension du réseau perturbé étudié en employant le contrôleur 2-SMC Twisting ;

- la figure 26 représente le filtrage du courant et la tension du réseau perturbé étudié en employant le contrôleur Super-Twisting ;

- la figure 27 représente les caractéristiques courant-tension et puissance tension d'un générateur photovoltaïque ;

- la figure 28 représente une boucle de régulation de la tension continue de l'unité de l'élément de stockage de l'onduleur ;

- la figure 29 représente un algorithme d'identification des courants perturbateurs (non actifs) intégrant la poursuite du point de puissance maximale.

## DESCRIPTION D'UN OU PLUSIEURS MODES DE MISE EN ŒUVRE ET DE RÉALISATION

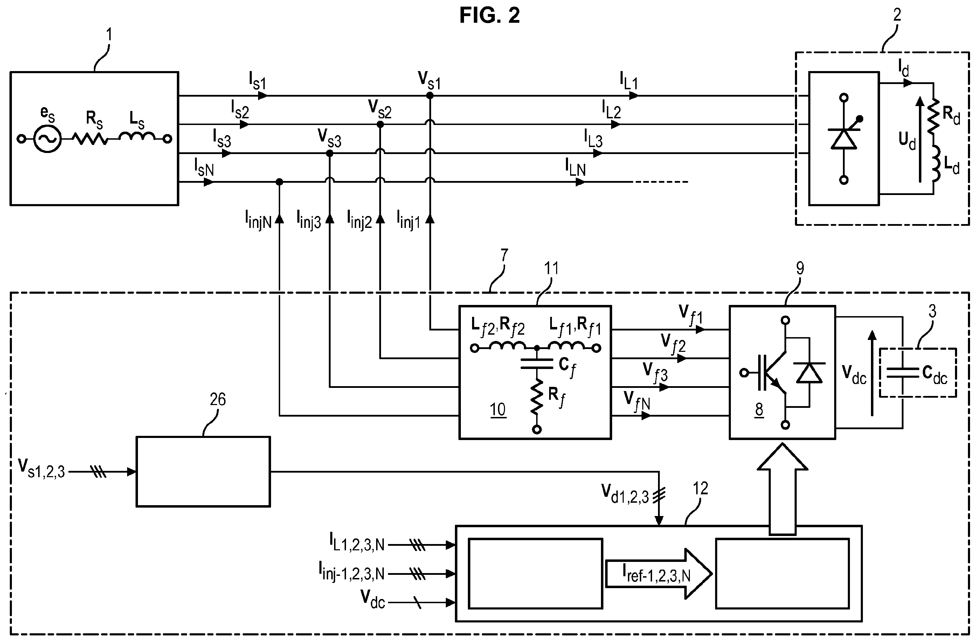

Un exemple concerne un système électrique tel que représenté en figures 2-3, comprenant un réseau 1 d'alimentation à 3 phases et un neutre, une charge 2 non linéaire ou linéaire ou les deux connectées au réseau 1, un élément de stockage capacitif d'énergie 3, une unité de puissance à génération d'énergie renouvelable 100 et un ensemble de compensation 7 connecté d'une part à son entrée, en aval, à la sortie de l'unité de puissance à génération d'énergie renouvelable 100 associée à l'élément de stockage 3 et d'autre part en parallèle à sa sortie, en amont à un point de raccordement (C) situé entre le réseau 1 et la charge 2.

L'ensemble de compensation 7 comporte :

- une unité de conversion 8 de puissance, comportant un onduleur 9, générant un courant alternatif avec une bande de fréquence allant de 50 à 2500Hz, couvrant :

a) toute la bande de fréquences du courant perturbateur non actif qui présente : tout ou une partie des harmoniques, et à la fréquence fondamentale tout ou une partie de la puissance réactive et/ou le courant déséquilibré, etc.

b) ainsi que le courant actif généré par l'unité de puissance à génération d'énergie renouvelable 100 ;

- une unité de filtrage 10, comportant au moins un filtre 11 de type LCL associant donc deux inductances, et un condensateur, pour chacune des phases et un neutre, et connecté : d'une part en aval de l'onduleur 9 de tension, et d'autre part en parallèle au point de raccordement C entre le réseau 1 électrique donné et les charges 2 électriques non linéaires et linéaires, le filtre 11 de sortie LCL étant dimensionné pour bloquer les composantes harmoniques dues à la commutation de l'onduleur 9 ;
- une unité de contrôle-commande 12 configurée pour identifier et contrôler le courant injecté au réseau 1 et commander l'onduleur 9 pour générer ce courant.

L'unité de contrôle-commande 12 est configurée pour commander l'onduleur 9 de manière à ce que l'onduleur 9 génère un signal d'intensité $I_{inj}$ configurée en opposition de phase pour annuler, au point de raccordement C, les perturbations non actives du signal générées par la charge 2 et injectées au réseau.

Le signal émis en sortie de l'unité de filtrage 10, et donc en sortie de l'ensemble de compensation 7, présente donc les harmoniques du signal causés par la partie non linéaire de la charge 2.

Pour tout harmonique présent dans le signal perturbateur, causé par la charge 2, le signal émis par l'unité de filtrage 10 présente une valeur de tension inverse (en opposition de phase) à la valeur de tension du signal de la charge 2 non linéaire à cet harmonique n.

Ainsi, en injectant le signal de sortie de l'ensemble de compensation 7 au point de raccordement C, les harmoniques du signal émis par la charge 2 non linéaire sont annulés et le courant transitant du côté réseau 1 est dépourvu d'harmoniques.

De manière similaire, le signal de sortie de l'ensemble de compensation 7 présente, pour la fréquence fondamentale et les harmoniques, un déphasage configuré pour générer une puissance réactive inverse (en opposition de phase) à la puissance réactive du signal perturbateur de la charge 2.

De cette manière, la puissance réactive consommée par la charge 2 est complétement compensée, dans la limite du dimensionnement du dispositif 7, du côté réseau.

L'unité de contrôle commande 12 est en outre configurée pour compenser le déséquilibre du signal transitant dans la charge 2 non linéaire ou linéaire.

Il est entendu par déséquilibre une consommation de courant différente en fonction des différentes phases de plusieurs charges 2 monophasées.

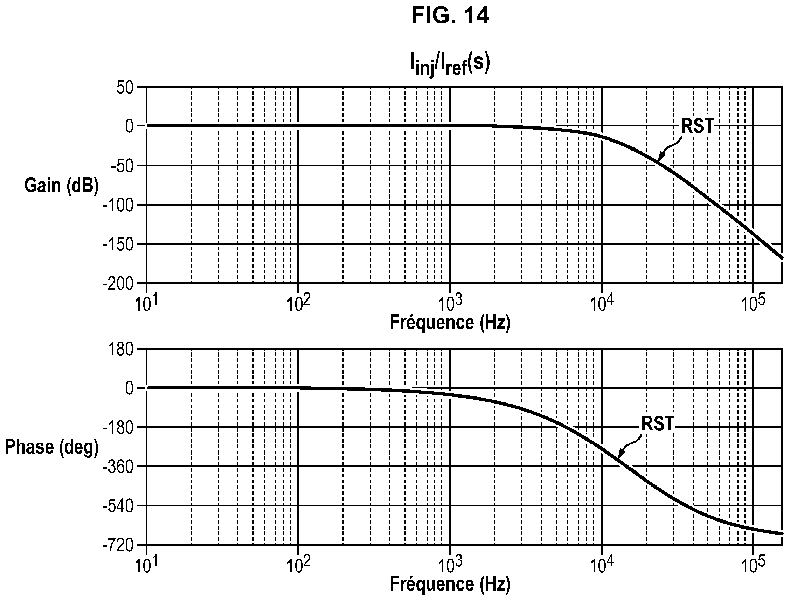

Il est à noter que tout courant perturbateur à fréquence inclut dans la bande de fréquences de la boucle de contrôle du courant injecté, allant de 0 Hz à 2500 Hz, peut être compensé/filtré par le dispositif 7 (*cf. Fig. 14*). Des harmoniques non conventionnels peuvent être inclus.

L'ensemble de compensation 7 est configuré pour être installé dans un réseau électrique déjà pollué au niveau de sa tension en amont tout en offrant la possibilité de fonctionner à deux fréquences fondamentales (50 et 60 Hz), qui peuvent varier chacune de $\pm$ 10%, tout en étant capable de s'adapter aux variations de tension de $\pm$ 15%.

Cela permet un fonctionnement correct de l'ensemble de compensation 7 même dans le cas de groupes électrogènes se substituant au réseau électrique.

L'unité de contrôle commande 12 est en outre configurée pour réguler (charger et maintenir constante) la tension $V_{dc}$ aux bornes de l'élément de stockage capacitif 3.

L'unité de contrôle commande 12 est en outre configurée pour détecter le point de puissance maximale MPPT (de l'anglais *Maximum Power Point Tracking*) d'une unité de puissance à génération d'énergie renouvelable 100 et générer, via l'onduleur 9, le courant actif correspondant à cette puissance maximale ; la tension $V_{dc}$ aux bornes de l'élément de stockage capacitif 3 est égale, dans ce cas, à la tension de la puissance maximale de l'unité 100 de production d'énergie renouvelable.

L'unité de conversion 8

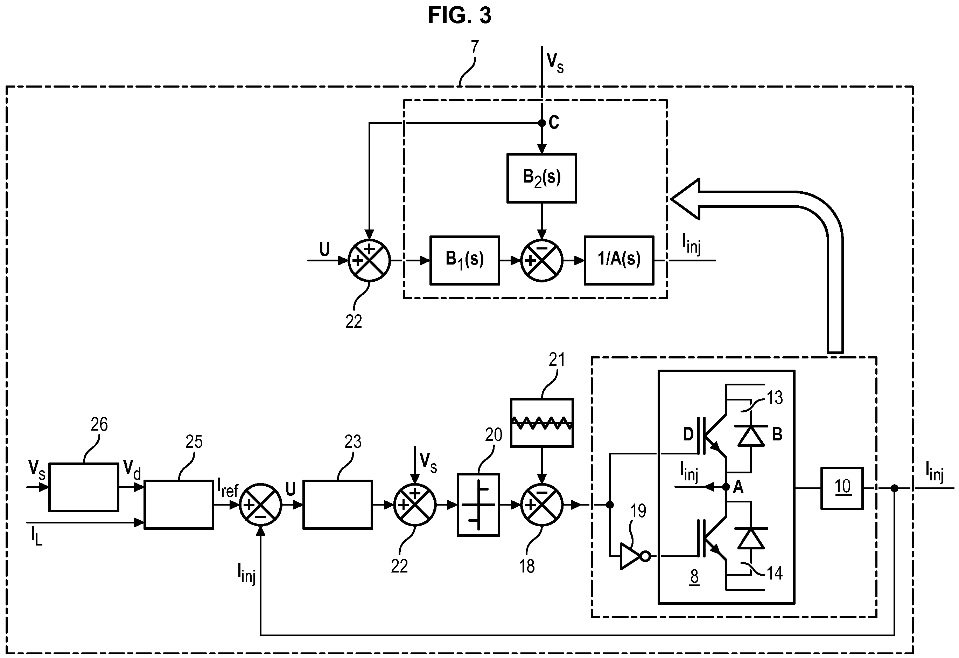

L'unité de conversion 8 comporte, tel que représenté en figures 2 et 3, l'onduleur 9 à 3 phases et un neutre qui présente une structure similaire à un onduleur de tension classique à deux niveaux de tension, de manière à assurer la fiabilité et minimiser les coûts de la structure.

L'onduleur 9 est ici piloté par l'unité de contrôle-commande 12 de manière à occuper, avec les unités 3 et 11, une fonction de filtre actif parallèle.

L'onduleur 9, à 4 fils et à 4 bras, comporte pour chacun des 4 bras, deux dispositifs de commutation 13 et 14 connectés chacun d'une part à une borne de sortie de l'élément de stockage capacitif 3 et d'autre part à un point de connexion commun A auquel un des 4 fils est également connecté.

Ce point de connexion situé, pour chaque bras, entre le premier dispositif de commutation 13 et le deuxième dispositif de commutation 14 forme un point de connexion d'un des 4 fils de l'onduleur 9 connecté à l'autre extrémité l'unité de filtrage 10 dont la sortie est connectée au point de raccordement C.

Chaque dispositif de commutation est composé d'un interrupteur d'électronique de puissance D, commandable à l'ouverture et à la fermeture (IGBT, GTO ou d'autres) et d'une diode en antiparallèle B (fonctionnement bidirectionnel).

L'onduleur 9 émet, sur chaque fil, un signal présentant une intensité $I_{inj}$.

L'onduleur 9 est configuré pour injecter des puissances qui couvrent une large bande de fréquence, comprise habituellement entre la fréquence du fondamental, par exemple 50 Hz, jusqu'au rang harmonique 50, présentant dans l'exemple d'un fondamental de 50 Hz une fréquence de 2500 Hz.

L'unité de filtrage 10

L'unité de filtrage 10 comprend dans ce mode de réalisation un filtre 11 de type LCL, qui présente l'avantage d'être facile à mettre en œuvre par rapport à un filtre de premier ordre, volumineux, lourd et coûteux.

Le filtre 11 comporte donc, sur chacun des 4 fils (trois phases avec le neutre), une première inductance 15 connectée d'une part à un fil d'entrée de l'unité de filtrage 10 (sortant d'un des 4 points de connexion commun A), et d'autre part à une deuxième inductance 16, la deuxième inductance 16 étant connectée d'autre part à un des 4 points de raccordement C via un fil de sortie l'unité de filtrage 10.

Le filtre 11 associé à chaque fil comporte en outre un condensateur 17 connecté d'une part à un point commun E et d'autre part à un point de connexion F entre la première inductance 15 et la deuxième inductance 16.

Le filtre 11 permet d'empêcher la propagation des composantes dues à la fréquence de commutation de l'onduleur 9 au réseau 1 d'alimentation sans dégrader la dynamique du système de compensation 7. Il permet donc de limiter le risque de résonance, et ainsi de se passer d'un filtre passif auxiliaire destiné à la limitation de cette propagation, dans le cas de l'emploi d'un filtre de sortie de premier ordre (une inductance simple) associé à ce filtre auxiliaire.

L'unité de contrôle commande 12

L'unité de contrôle-commande 12 est configurée pour réguler la tension aux bornes de l'élément de stockage 3 ainsi qu'identifier et contrôler le courant injecté, via l'unité de filtrage 10, aux points de raccordement C pour les 4 fils et pour commander l'onduleur 9 pour générer ce courant. L'identification des courants à injecter aux points de raccordement C se fait par l'unité de calcul des courants de références 25.

Le courant à injecter aux points de raccordement C comporte le courant actif de l'unité de puissance à génération d'énergie renouvelable 100 ainsi que des courants non actifs perturbateurs, pouvant présenter des harmoniques, du déséquilibre, et du réactif, etc. configurés en opposition de phase pour s'opposer aux harmoniques, au déséquilibre et au réactif du signal transitant dans la charge 2 de manière à les réduire, voire les annuler du côté réseau électrique 1.

Le contrôleur 23 assure la poursuite du courant entre le courant injecté $I_{inj}$ et le courant de référence issu de l'unité 25. De son côté, le contrôleur 62 assure la poursuite de la tension entre la tension $V_{dc}$ aux bornes de l'élément de stockage 3 et la tension de la puissance maximale de l'unité 100, délivrée par l'unité 25-B; l'unité 3 sera par conséquent chargée.

Enfin, l'unité de pilotage 21 assure la commande des interrupteurs de l'onduleur 9 afin de générer $I_{inj}$.

Le fonctionnement et la structure de l'unité de contrôle 12 seront par la suite décrits pour une phase. Il est entendu que chacun des 4 fils (les trois phases ainsi que le neutre) est piloté de manière similaire et indépendante par l'unité de contrôle 12, qui comporte donc une chaîne de contrôle-commande par fil.

Pour la commande des dispositifs de commutation 13, 14 d'un fil, l'unité de contrôle commande 12 comporte donc deux sorties, l'une connectée au pôle de déclenchement du premier dispositif de commutation 13, l'autre étant connectée au pôle de déclenchement de la deuxième unité de commutation 14.

Les deux sorties sont connectées conjointement à la sortie d'un comparateur logique 18, de manière à commander simultanément la commutation des deux dispositifs de commutation 13, 14.

L'une des sorties de l'unité de contrôle-commande 12 comporte un inverseur de niveau logique 19, de manière à ce que l'activation d'un des dispositifs de commutation 13, 14 entraîne la désactivation de l'autre, avantageusement au cours d'une unique impulsion de commande grâce à leur connexion commune, en amont de l'inverseur de niveau logique 19, à un même comparateur 18.

Le comparateur 18 émet un signal logique de sortie correspondant à la comparaison entre un signal de sortie d'un élément de saturation 20 et un signal de sortie d'un dispositif de pilotage de commutation 21.

Le dispositif de pilotage de commutation 21 commande la commutation de l'onduleur 9 via un contrôleur non linéaire 23 par mode glissant continu, adapté au filtre 11 de type LCL qui assure en boucle fermée le contrôle de toute la bande de fréquence de 50 à 2500 Hz pour l'injection du courant perturbateur non actif et du courant actif, en fonction de l'identification des courants de référence par l'unité de calcul 25.

La commande de commutation de l'onduleur 9 est réalisée de manière à laisser passer à travers l'unité de filtrage 10 de sortie au point de raccordement C :

- une partie ou la totalité des courants perturbateurs non actifs injectés en opposition de phase comprenant : des courants harmoniques, ainsi que des courants réactif et déséquilibré à la fréquence fondamentale, dans les charges 2 électriques non linéaires et linéaires, pour satisfaire la demande de consommation d'énergie non active des charges 2 électriques non linéaires et linéaires, tout en dépolluant le réseau 1 électrique de ces courants perturbateurs non actifs ;
- un courant actif correspondant à un point de puissance maximale disponible au sein de l'unité de puissance à génération d'énergie renouvelable 100, pour satisfaire la demande de consommation d'énergie active des charges électriques 2 non linéaires et linéaires.

Le dispositif de pilotage de commutation 21 émet un signal (appelé une onde porteuse) à une fréquence prédéterminée, en fonction du dimensionnement des unités 9, 10 et 3, de manière à provoquer la commutation des dispositifs de commutation 13, 14.

Dans la plupart des cas, les lois de commande, conçues pour contrôler les onduleurs de tension qui sont connectés au réseau électrique via un filtre LCL, ont été à l'origine établies pour les systèmes d'énergie renouvelable (photovoltaïque et éolien).

Dans ce cas, les contrôleurs linéaires peuvent être proposés car l'onduleur a uniquement des composantes fondamentales (principalement une puissance active) à injecter au réseau, le déphasage, à la fréquence fondamentale, entre le signal identifié $I_{ref-fondamental}$ via l'unité de calcul des courants de référence 25-B et celui injecté $I_{inj-fondamental}$ étant négligeable dans ce cas. Il est à noter que dans ce mode de fonctionnement, l'unité 25-A, à cause d'un problème de déphasage, n'est pas inclue dans le bloc d'identification et l'unité 25 se limite ainsi à l'unité 25-B.

En effet, dans le cas d'un filtre actif parallèle, l'onduleur 9 doit injecter au réseau électrique à la fois des composantes fondamentales (réactive et déséquilibrée) et harmoniques, ce qui implique une maîtrise totale d'une très large bande passante de fréquence. Un déphasage important limite l'applicabilité des contrôleurs linéaires dans le cas d'un filtrage harmonique.

Un contrôle non-linéaire du courant injecté $I_{inj}$ permet de surmonter ce problème de déphasage, rencontré lors de l'emploi d'un filtre LCL associé à un contrôleur linéaire.

Dans ce mode de réalisation, le contrôleur 23 effectue un contrôle par mode glissant (en anglais *Sliding mode control* ou SMC), ce qui permet d'assurer une réponse dynamique souhaitée, une forte robustesse /insensibilité aux perturbations bornées ainsi que de bonnes propriétés de contrôle dans une large gamme de conditions de fonctionnement.

Il est bien connu qu'un contrôle par mode glissant classique avec une fonction dite Signe (*sign* en anglais), génère une commande des interrupteurs de l'onduleur à très haute fréquence (commande discontinue), afin d'assurer une convergence en temps fini vers la surface de glissement où les états du système sont maintenus par la suite, même en présence de perturbations bornées.

La fonction Signe d'un signal est donnée par la relation :

$$sign\ u = \frac{u}{|u|}$$

En pratique, l'onduleur de tension est commandé par une fonction de commutation à fréquence limitée, fixe ou variable. Des commutations à très hautes fréquences causent une surchauffe qui peut aller jusqu'à la destruction de l'onduleur.

Afin d'éviter le fonctionnement en mode de commande discontinue, cette invention emploie deux contrôleurs par mode glissant à commande continue, l'un étant associé à une fonction Signe approximée en fonction sigmoïde et l'autre étant associé à une méthode d'augmentation artificielle du degré relatif, suivie par un intégrateur. Les deux contrôleurs sont associés à deux surfaces de glissement appropriées.

La première méthode consiste à remplacer la fonction Signe par une approximation continue. Il s'agit d'une fonction Signe approximée en une fonction Sigmoïde donnée par la formule :

$$sign\ u = \frac{u}{|u| + \varepsilon}$$

avec $\varepsilon$ l'épaisseur du voisinage de la surface de glissement.

Le système, dans ce cas, ne converge plus vers la valeur désirée, mais vers un voisinage de cette dernière, ce qui permet de limiter les commutations à très hautes fréquences.

La méthode d'augmentation artificielle du degré relatif consiste à augmenter l'ordre de la surface de glissement d'un degré (conduisant à une dérivée supplémentaire), ce qui permet d'insérer à la sortie de la fonction Signe un intégrateur, la commande dans ce cas devient continue. En effet, en dérivant une fois de plus l'erreur de poursuite entre le signal $I_{ref}$ identifié par l'unité 25 et le courant injecté $I_{inj}$, le signal à la sortie de la fonction Signe représente la dérivée de la commande (discontinue jusqu'ici). Une action intégrale à la sortie de la fonction Signe générera une commande continue.

Les deux contrôleurs employés permettent d'éviter une discontinuité de la commande, notamment causée par des commutations variables de l'onduleur à très hautes fréquences, causées par un contrôle à mode glissant classique.

De plus, trois autres contrôleurs non linéaires à base de la méthode de mode glissant d'ordre supérieur sont aussi employés ; Il s'agit de l'algorithme de contrôle de mode glissant de deuxième ordre 2-SMC Twisting et 2-SMC super-Twisting ainsi que l'algorithme de contrôle de mode glissant d'ordre supérieur continu C-HOSMC.

Ces contrôleurs assurent, dans une large gamme de conditions de fonctionnement, comme décrit par la suite, la robustesse en performances et en stabilité assurée par la méthode de contrôle en mode glissant classique à commande discontinue, tout en offrant une commande continue qui assurent un fonctionnement nominal de l'onduleur (9).

Optionnellement mais avantageusement, le dispositif de pilotage de commutation 21 comporte un dispositif de modulation de largeur d'impulsion, dans lequel la commande est comparée à une onde porteuse à fréquence de commutation prédéterminée en fonction du dimensionnement des unités 9, 10 et 3.

Cela permet de faire fonctionner l'onduleur 9 à une fréquence de commutation fixe.

Un effet synergique est obtenu en améliorant de ce fait la rétention des composantes à hautes fréquences, dues aux commutations, par le filtre 11 de type LCL.

Un élément de saturation 20 est classiquement configuré pour imposer des limites haute et basse sur le signal de commande. Ces limites sont déterminées par l'amplitude de l'onde porteuse qui est liée, à son tour, à la tension de l'élément de stockage capacitif 3.

Le signal d'entrée de l'élément de saturation 20 provient de la sortie d'un sommateur 22, dont le signal de sortie est la somme d'une tension de commande u émise par un contrôleur 23 et de la tension $V_s$ du point de raccordement C. Le rajout de la tension $V_s$ dans la boucle de contrôle du courant injecté $I_{inj}$ empêche un fort appel de courant réactif de la part des inductances du filtre LCL 11.

L'unité de calcul des courants de référence 25 comporte une pluralité d'entrées mesurées.

Les grandeurs du système qui sont mesurées comportent :

- l'intensité $I_L$ du courant de chaque fil consommé par la charge 2,

- l'intensité $I_{inj}$ du courant de chaque fil sortant de l'unité de filtrage 10,

- la tension $V_{dc}$ aux bornes de l'élément de stockage capacitif 3, qui est également la tension de la puissance maximale de sortie de l'unité de puissance à génération d'énergie renouvelable 100,

- la tension $V_s$ de chacune des phases au niveau des points de raccordement C, par l'intermédiaire d'une boucle à verrouillage de phase (PLL) 26. La boucle à verrouillage de phase 26 est utilisée pour extraire la composante positive triphasée $V_{d123}$ de la tension du réseau 1 au niveau des points de raccordement C. Il est à noter que la composante positive triphasée $V_{d123}$ de la tension du réseau (1) est indispensable pour un fonctionnement efficace de l'unité d'identification 25.

- l'intensité $I_{pv}$ du courant de l'unité de puissance à génération d'énergie renouvelable 100,

- la tension $V_{pv}$ de l'unité de puissance à génération d'énergie renouvelable 100,

L'unité de calcul des courants de référence 25 comporte une sortie pour chaque phase, chaque sortie correspondant à la chaîne de contrôle-commande de la phase associée (y compris le neutre), ladite chaîne de contrôle-commande comprenant un comparateur 24, un contrôleur 23, un sommateur 22, un élément de saturation 20 et un comparateur logique 18 dont la sortie se divise en deux branches dont l'une comporte un inverseur de niveau logique 19.

L'unité de calcul des courants de référence 25 émet donc un signal de consigne par phase, y compris le neutre, présentant une intensité $I_{ref}$.

L'intensité $I_{inj}$ de chaque phase, y compris le neutre, du signal émis par l'onduleur 9 est retournée à l'unité de contrôle 12 et comparée, via le comparateur 24 avec la consigne $I_{ref}$ de la chaîne de contrôle-commande de la phase correspondante, délivrée par l'unité 25. La différence entre $I_{ref}$ et $I_{inj}$ est corrigée via le contrôleur 23 qui émet la commande u.

La tension $V_{dc}$ appliquée aux bornes de l'unité de stockage capacitive 3 est régulée (maintenue constante) en la comparant, via un comparateur 60, avec une tension de référence $V_{dc-ref}$, qui est égale à la tension du point de puissance maximale $V_{MPP}$ de l'unité de puissance à génération d'énergie renouvelable 100, calculé via l'unité 25-B.

Le signal mesuré de la tension $V_{dc}$ est filtré des fluctuations à 300 Hz ou autres, via un filtre passe-bas de deuxième ordre 61. Le signal d'erreur ($V_{dc-ref}$ - $V_{dc}$) est contrôlé par un contrôleur PI (Proportionnel Intégral) 62 ou autre, afin d'obtenir la puissance maximale $P_{MPP}$.

La tension $V_S$ du réseau 1 est ajoutée dans le sommateur 22 à la commande u, la sortie du sommateur 22 étant limitée dans l'élément de saturation 20, la sortie de l'élément de saturation 20 étant comparée via le comparateur logique 18 avec le signal délivré par le dispositif de modulation de largeur d'impulsion 21 (la porteuse).

Le signal de sortie du comparateur 18 est à un niveau 1 si le signal de sortie de l'élément de saturation 20 est plus grand que la porteuse. Autrement il est à un niveau 0. Suivant cette chaîne logique, le dispositif de commutation 13 ou 14, qui ne comporte pas d'inverseur de niveau logique 19, est respectivement fermé ou ouvert (l'autre dispositif fonctionnant d'une façon complémentaire).

L'unité contrôle-commande 12 comporte au moins un processeur et au moins une mémoire, la mémoire comprenant un programme exécuté par le processeur de manière à mettre en œuvre le procédé de détermination du signal de consigne $I_{ref}$, contenant le courant non actif ainsi que le courant $I_{MPP}$ du point de puissance maximale MPPT, via l'unité de calcul des courants de référence 25, du contrôle de courant injecté $I_{inj}$ via l'unité 23 de contrôle, de réguler la tension $V_{dc}$ au bornes de l'unité de stockage 3 via le contrôleur 62 et de générer ce courant injecté en commandant les dispositifs 13, 14 de chaque fil de l'onduleur 9 via l'unité de pilotage 21.

Le procédé de détermination du signal de consigne $I_{ref}$, délivré par l'unité de calcul des courant de référence 25, comporte les étapes suivantes :

- traitement des mesures (basé sur l'algorithme d'identification des puissances instantanées ou autres 25-A) du courant $I_L$ de la charge 2 et de la tension au point de raccordement $V_s$ de manière à estimer les courants non actifs harmoniques, réactif et déséquilibré, etc. ;

- génération d'une consigne $I_{ref}$ calculée pour annuler (en partie ou en totalité suivant le dimensionnement de l'unité 7) le contenu non actif du courant $I_s$ du côté réseau d'alimentation 1.

Optionnellement mais avantageusement, l'unité de calcul des courants de référence 25 est configurée pour identifier, via l'unité 25-B, le point de puissance maximale MPPT de fonctionnement de l'unité de puissance à génération d'énergie renouvelable 100, installée au sein d'un champ de production d'énergie renouvelable, d'un bâtiment ou d'une usine d'autoconsommation 99, de la façon suivante :

- traitement des mesures du courant $I_{pv}$ et la tension $V_{pv}$ (basé, via l'unité 25-B, sur un algorithme de type P&O de l'anglais *« Perturb and Observe »* ou autres, qui fait partie de l'unité 25) de l'unité de puissance à génération d'énergie renouvelable 100.

- génération de la tension maximale $V_{MPP}$, via l'unité 25-B, et par conséquent la puissance maximale $P_{MPP}$ et le courant maximal $I_{MPP}$ qui sera intégré dans le courant de consigne $I_{ref}$ via la puissance $P_{MPP}$ calculée à la sortie du contrôleur 62.

Avantageusement, seul l'algorithme de calcul du point de puissance maximale (unité 25-B) est à intégrer dans l'unité 25, via l'algorithme d'identification des courants perturbateurs (unité 25-A). En effet, la boucle de régulation de la tension du condensateur (unité (3)) de l'onduleur est déjà prévue dans l'unité 25-A pour charger le condensateur de l'onduleur lors du fonctionnement en pur filtre actif, afin de compenser les pertes causées par les composants de l'onduleur ainsi que du filtre LCL. Dans cette invention et lors du fonctionnement en filtre actif avec injection de la puissance maximale d'une source d'énergie renouvelable, la tension de référence Vdc-ref devient la tension de la puissance maximale, délivrée par l'unité 25-B, au lieu d'être prédéfinie selon un cahier des charges orienté filtrage pur. Cette méthodologie allège, minimise et améliore la précision, d'une façon notable, lors de la mise en œuvre de la partie contrôle-commande, en comparaison de l'état de l'art qui prévoit une boucle supplémentaire de courant qui impose aussi l'emploi d'un hacheur.

L'unité de contrôle-Commande 12 est configurée en outre pour effectuer la régulation de la tension $V_{dc}$ aux bornes de l'élément de stockage capacitif 3, et assurer, par conséquent, la recharge du condensateur 3. En effet, le condensateur 3 a, entre autres, pour rôle de couvrir les pertes des unités 9 et 10 ainsi que de fournir le courant actif maximal $I_{MPP}$ de l'unité de puissance à génération d'énergie renouvelable 100 aux points de raccordement C, via l'onduleur 9 et l'unité de filtrage 10.

La suite du processus au sein de l'unité 12 :

- traitement des mesures de la tension $V_{dc}$ aux bornes de l'élément de stockage capacitif 3 ;

- filtrage, via un filtre passe-bas de deuxième ordre 61, du signal mesuré de la tension $V_{dc}$ des fluctuations à 300 Hz ou autres ;

- poursuite, via le contrôleur 62, entre $V_{dc-ref}=V_{MPP}$ et la tension $V_{dc}$, afin d'assurer une tension maximale $V_{MPP}$ constante aux bornes de l'élément de stockage capacitif 3 ;

- génération du courant perturbateur injecté en opposition de phase par rapport à celui circulant dans la charge et du courant de la puissance maximale de l'unité 100.

Pour cette poursuite via le contrôleur 62, l'unité de calcul des courants de référence 25 est configurée pour intégrer le calcul du courant de la puissance maximale, via l'unité 25-B, dans l'algorithme du calcul des courants non actifs, assuré par l'unité 25-A.

Le processus de cette intégration est fait de la façon suivante :
la sortie du contrôleur 62 étant la puissance maximale $P_{MPP}$ de l'unité 100, ce signal est rajouté au sommateur 63, qui a à sa deuxième entrée la puissance perturbatrice active $\tilde{P}$ issue de l'unité 25-A (Amont) du calcul des puissances instantanées perturbatrices (active $\tilde{P}$, réactive $\tilde{Q}$ et homopolaire $P_0$). L'unité 25-A (Amont) assure le calcul, à partir des tensions $V_s$ aux points de raccordement C et des courants $I_L$ de la charge 2, des puissances instantanées perturbatrices (active $\tilde{P}$, réactive $\tilde{Q}$ et homopolaire $P_0$ dans le repère $\alpha$, $\beta$ et 0) causées par les courants perturbateurs non actifs présents dans le courant de la charge 2 $I_L$.

Le calcul des courants de la consigne/référence $I_{ref}$ se fait via un passage inverse, par rapport à l'unité 25-A (Amont), à travers l'unité (25-A Aval). Ce courant de référence contient les courants non actifs ainsi que le courant de la puissance maximale, d'abord calculé dans le même repère $\alpha$, $\beta$ et 0 puis dans le repère triphasé à 4 fils.

Les unités 25-A(Amont) et 25-A(Aval) sont configurées pour identifier les courants perturbateurs ; les unités 25-A(Amont), 25-A(Aval) et 25-B représentent l'unité de calcul des courants de référence 25.

Ensuite, l'unité 12 ayant le courant de consigne $I_{ref}$, issu de l'unité 25, ainsi que celui injecté $I_{inj}$ contrôlé à son tour via le contrôleur 23, l'onduleur 9 est commandé via l'unité de pilotage 21 pour générer le courant $I_{inj}$.

Cela permet d'éviter l'utilisation d'un dispositif supplémentaire, un hacheur, pour générer la puissance maximale issue de l'unité de puissance à génération d'énergie renouvelable 100.

L'onduleur, impose dans ce cas la tension du côté continu. Cala représente une fiabilité supplémentaire du dispositif du Filtre actif parallèle ainsi qu'un gain financier important.

Optionnellement, l'unité de contrôle-commande 12 peut comporter un hacheur configuré pour maintenir une tension continue prédéterminée aux bornes de l'élément de stockage d'énergie (3) de l'onduleur. Cette tension peut correspondre à la tension d'un parc de batteries à charger. Par exemple, l'unité de contrôle-commande 12 peut comporter :

- un hacheur configuré pour maintenir une tension continue constante prédéfinie aux bornes de l'élément de stockage d'énergie 3 de l'onduleur, indépendamment du niveau de tension de la source 100 d'énergie renouvelable pour assurer un filtrage harmonique inchangé. Une tension fixe prédéfinie peut assurer la charge d'un parc de batteries, ou servir comme un bus continu commun d'un micro-réseau, etc.

- un double hacheur pour le cas d'un réseau électrique îloté. Le deuxième hacheur peut fournir, pour le cas du réseau îloté et pour d'autres applications, un niveau supplémentaire de la tension continue, y compris pour le cas de la charge d'un parc de batteries. L'onduleur, dans le cas d'un réseau îloté, impose la tension et la fréquence du côté alternatif, alors que c'est le deuxième hacheur qui impose la tension du côté continu.

Dans un mode de réalisation, le dispositif de compensation 7 est installé au sein d'un bâtiment 27 dit intelligent, c'est-à-dire que les appareils électriques que contient le bâtiment intelligent 27 peuvent, entres autres, être commandés et activés sélectivement par une unité de gestion décentralisée 70, par exemple pour fonctionner lors des périodes dites creuses de la journée, pendant lesquelles la demande énergétique du réseau est faible et le coût de l'énergie, du point de vue du consommateur, diminue.

L'unité de contrôle-commande 12 est connectée à l'unité de gestion décentralisée 70 du bâtiment intelligent 27. L'unité de gestion décentralisée 70 communique en temps réel à l'unité contrôle-commande 12 les puissances des charges (appareils électriques) en état de marche ou non du bâtiment 27.

L'unité de contrôle-commande 12, ayant en temps réel la puissance maximale de l'unité de puissance à génération d'énergie renouvelable 100 délivrée par l'unité 25-B et le contrôleur 62 ainsi que les puissances des charges en état de marche ou non du bâtiment 27 communiquées par l'unité de gestion décentralisée 70, est configurée pour réguler la consommation des différents appareils selon au moins deux modes de répartition économique des charges.

Dans un premier mode de répartition économique des charges, le bâtiment intelligent 27 comportant une unité de puissance à génération d'énergie renouvelable 100 et en cas d'une forte disponibilité des sources primaires renouvelables, l'unité de contrôle commande 12 est configurée pour piloter l'unité de gestion décentralisée 70 de manière à activer la plupart des appareils du bâtiment intelligent 27 en fonction de la production de l'unité 100 ; ce mode de consommation est appelé mode adapté.

Dans un deuxième mode où l'énergie primaire renouvelable est peu disponible, l'unité de contrôle-commande 12 est configurée pour piloter l'unité de gestion décentralisée 70 de manière à activer sélectivement les appareils du bâtiment intelligent 27, de manière à présenter une courbe de charge plate ou autres, suivant la puissance productible du réseau ; ce mode de consommation est appelé mode modulé.

Cela permet d'éviter des pics de demande sur le réseau 1 et de bénéficier d'un coût réduit de l'énergie consommée.

La majeure partie voire l'intégralité de l'énergie consommée est, dans ce cas, d'origine renouvelable, ce qui permet de minimiser la consommation d'énergie provenant du réseau 1. En cas de forte nécessité d'alimentation et en complément du deuxième mode de répartition et si le réseau électrique 1 est intelligent, un troisième mode de répartition adapté à la production du réseau électrique 1 intelligent est envisageable.

Dans un mode de réalisation, le dispositif de compensation 7 est installé entre le réseau 1 et un site industriel ou un bâtiment résidentiel, administratif ou commercial, assimilable du point de vue du réseau 1 à une charge perturbatrice non linéaire/linéaire 2.

Avant l'installation d'un tel dispositif sur un site industriel existant, il est parfois nécessaire de démontrer les qualités du dispositif au propriétaire du site, qui prendra la décision d'équiper ou non son site avec le dispositif.

Il est donc nécessaire de modéliser le site afin de simuler ses performances avec et sans le dispositif, afin d'apprécier l'apport du dispositif de compensation.

Classiquement, la modélisation de sites industriels est réalisée en produisant un modèle complet contenant toutes les machines ainsi que leurs commandes (basées sur des convertisseurs d'électronique de puissance) présentes sur la zone étudiée.

Or, ce type de modélisation est confronté à deux problèmes : matériel et informatique, qui limitent son adoption comme modèle crédible permettant de valider des solutions appliquées à ce type de réseaux électriques.

En effet, il faut dans ce cas autant d'appareils de mesure que de machines commandées. De plus, il s'avère difficile d'effectuer une simulation d'un réseau industriel à plusieurs niveaux de tension, contenant plusieurs transformateurs de puissance, de nombreuses lignes et câbles électriques, ainsi qu'une pluralité de machines commandées avec plusieurs filtres de dépollution.

Dans ce mode de réalisation, un seul dispositif de mesure est installé à l'entrée de chaque ligne de production.

La modélisation du site est réalisée en remplaçant les machines commandées par leurs courants (actif, réactif et harmoniques) mesurés par un des dispositifs de mesure triphasés.

Le modèle de simulation en est fortement allégé car des sources de courant, dont le nombre est limité par un rang harmonique maximal fixé théoriquement à 50, remplacent le modèle des machines commandées.

Il est à noter qu'une source de courant est toujours associée à une résistance très élevée (de l'ordre du MΩ) connectée en parallèle avec la source de courant.

Le modèle est ensuite validé en comparant les résultats de la simulation avec des mesures effectuées à l'entrée des lignes de production.

Le modèle est enfin utilisé pour simuler, avec crédibilité, l'effet du dispositif de compensation 7 sur le signal transitant dans les charges du site industriel et sur le courant perturbateur circulant dans le réseau 1.

Dans un mode de réalisation, le système comporte une pluralité d'unités de puissance à génération d'énergie renouvelable 100, par exemple de type éolien ou photovoltaïque, chacune connectée, directement ou via un dispositif 7, à un réseau local 28, lui-même connecté au réseau 1.

Le réseau local 28 correspond aux acteurs producteurs, consommateurs et conso-producteurs (des bâtis à autoconsommation ou à énergie positive).

Dans la plupart du temps, chaque unité de production 100 est connectée au réseau local 28 au moyen d'un dispositif de compensation 7 configuré pour maximiser la production de puissance de l'unité de production 100 ainsi que pour empêcher la propagation des perturbations électriques, en cas de leurs présence, du côté amont du dispositif de compensation 7 vers le réseau local 28 et du réseau électrique 1.

Chaque dispositif de compensation 7 est connecté, informatiquement, à un système de gestion semi-décentralisée 29, auquel il communique, en temps réel, des informations concernant la consommation ainsi que la production d'énergie des unités de production 100 réelle et prévisionnelle.

En outre, le système de gestion semi-décentralisée 29 reçoit des informations en temps réel sur le productible d'énergie des unités de production d'énergie conventionnelle (fossile) 80, installées au sein du réseau local 28.

Le système de gestion semi-décentralisée 29 gère la répartition économique des générateurs à énergies conventionnelles (fossiles) au sein du réseau local 28, en fonction de la production totale d'origine renouvelable ainsi que la consommation totale au sein du même réseau local 28.

Le système de gestion semi-décentralisée 29 reçoit en temps réel les informations sur les puissances d'origine renouvelable et conventionnelle disponible à tout moment sur le réseau local 28.

Le système comporte également une pluralité de postes de consommation, par exemple un bâtiment intelligent ou un site industriel intelligent, chaque poste de consommation étant assimilable du point de vue du réseau à une charge 2 non linéaire/linéaire, chacun des postes de consommation étant connecté au réseau local 28, est équipé d'un dispositif de compensation 7 configuré pour dépolluer le courant circulant du côté réseau local 28 des perturbations causées par la charge 2 et pour piloter l'activation des différents appareils du poste de consommation via l'unité de gestion décentralisée 70.

Chaque dispositif de compensation 7 est connecté au système de gestion semi-décentralisée 29, auquel il communique des informations concernant la consommation instantanée et la consommation à venir en fonction du fonctionnement programmé des postes de consommation, de manière à estimer la demande en énergie.

Le système de gestion semi-décentralisée 29 recevant à tout moment l'ensemble des données (réelles et prévisionnelles) de l'énergie productible ainsi que celles à consommer par les différents acteurs du réseau local (producteur, consommateurs, conso-producteurs), il peut intervenir, uniquement en cas de besoin quand la demande totale d'énergie au sein du réseau local 28 est largement supérieure à la production totale, auprès des pilotes des unités de contrôle décentralisée des bâtiments intelligents 27 pour faire basculer le mode de consommation en mode modulé (courbe de charge plate) au profit du système global.

Il est entendu par poste/acteur conso-producteur un bâtiment à autoconsommation ou à énergie positive. Le système de gestion semi-décentralisée 29 est donc configuré pour estimer, sur une période donnée, la demande totale en énergie du réseau local 28 qu'il supervise.

En fonction des estimations de production de puissance et de demande en énergie, le système de gestion semi-décentralisée 29 est configuré pour :

- effectuer, en temps réel, la répartition économique de production aux unités de production d'énergie conventionnelle 80,

- intervenir, uniquement en cas de besoin quand la demande totale d'énergie au sein du réseau local 28 est largement supérieure à la production totale, auprès des unités de contrôle décentralisé 70, via les unités contrôle-commande 12 des dispositifs 7, pour faire basculer le mode de consommation en mode modulé (courbe de charge plate).

- piloter, en dernier recours et en cas de risque de déficit de production, le disjoncteur 90 pour permettre une consommation énergétique de la part du réseau 1. Ce mode de fonctionnement n'est pas possible quand le réseau local est îloté, c'est-à-dire non relié au réseau 1.

Le système de gestion 29 est donc habilité à prioriser le fonctionnement de certains postes de consommation par rapport à d'autres, afin de répartir la demande en énergie sur la période donnée.

De plus, le système de gestion semi-décentralisée 29 peut répartir dans le temps la demande en puissance de manière à ce que, lorsqu'une puissance provenant du réseau 1 est nécessaire, elle est consommée lors de périodes de faible demande de manière à minimiser les coûts et éviter de charger le réseau 1 lors de pics de demande.

Il est à noter que la maximisation de la puissance des unités de production d'énergie renouvelable 100 ainsi que l'optimisation de la consommation, au sein d'un bâtiment intelligeant 27, sont assurées localement par les dispositifs 7 via les unités de contrôle-commande 12. Le système de gestion semi-décentralisée 29 est appelé ainsi car il n'est sollicité que pour assurer la répartition économique de production des unités de production d'énergie conventionnelle 80 et pour redresser la consommation en cas de besoin.

Suite à une étude concernant l'invention menée par les inventeurs, les inventeurs souhaitent formuler les commentaires suivants.

Comparaison Invention/Art antérieur

**1. Structure générale du filtre actif parallèle de l'art antérieur**

Topologie générale

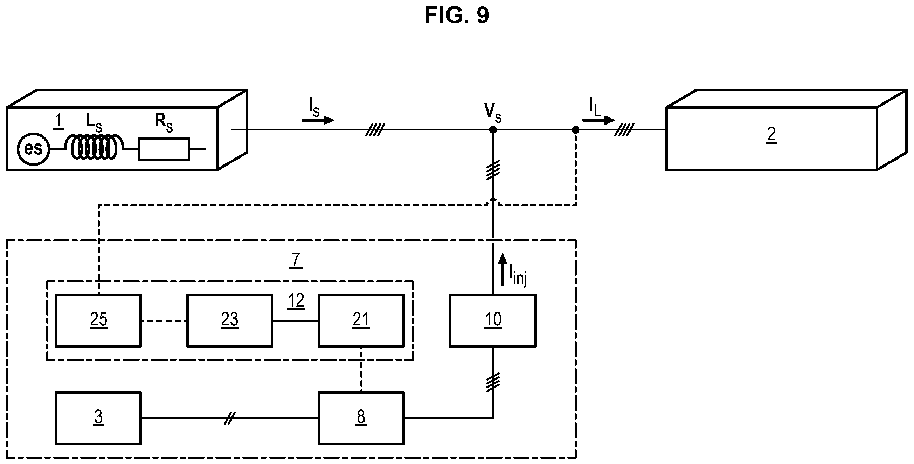

La Fig. 9 présente la structure générale du filtre actif parallèle, laquelle se présente sous la forme de deux blocs :

le circuit de puissance et le circuit de contrôle-commande. Le circuit de puissance est constitué :

- d'un onduleur de tension à base d'interrupteurs de puissance, commandables à l'amorçage et au blocage (GTO, IGBT, ...etc.), avec des diodes en antiparallèle,

- d'un circuit capacitif de stockage d'énergie,

- d'un filtre de sortie.

Le circuit de contrôle-commande quant à lui, est constitué :

- de la méthode d'identification des courants perturbés,
- du système à base de PLL (boucle à verrouillage de phase ou en anglais *« Phase Locked Loop »* en anglais) qui est intégré dans la méthode d'identification des courants perturbateurs,
- de la régulation de la tension continue appliquée aux éléments de stockage d'énergie,
- du contrôle du courant injecté sur le réseau à partir de l'onduleur de tension,
- de la commande de l'onduleur de tension.

Filtre de sortie

Le filtre de sortie est un filtre passif utilisé pour connecter l'onduleur de tension au réseau électrique. Le filtre de sortie est dimensionné pour satisfaire les deux critères suivants :

- assurer la dynamique du courant

$$\frac{d}{dt}\vec{I}_{h-L} = \frac{d}{dt}\vec{I}_{inj}$$

avec $I_{h\_L}$ le courant harmonique contenu dans le courant de la charge $I_L$ et $I_{inj}$ le courant du filtre actif injecté au réseau,

- empêcher les composantes dues aux commutations de se propager sur le réseau électrique.

Deux types du filtre de sortie peuvent être employés : un filtre de sortie de premier ordre et un filtre de sortie de troisième ordre.

Filtre de premier ordre

Ce type de filtre est le plus utilisé dans la littérature ; il est composé d'une simple inductance $L_f$ de résistance interne pratiquement négligeable.

Un filtre de ce type ne permet pas de satisfaire simultanément les deux critères de dimensionnement du filtre de sortie. En effet, seule une valeur relativement faible de $L_f$ peut réaliser une bonne dynamique du filtre actif en satisfaisant l'égalité ci-dessus.

Malheureusement, une valeur faible de $L_f$ permet à la majorité des composantes dues aux commutations de se retrouver du côté réseau et par conséquent d'affecter les installations et les équipements électriques.

Inversement, une valeur relativement élevée de $L_f$ va empêcher ces composantes de se propager sur le réseau électrique, mais affectera la dynamique du filtre actif et dégradera alors la qualité de compensation.

Le bon dimensionnement du filtre de sortie de premier ordre dépendra donc du compromis à trouver entre la dynamique et l'efficacité du filtre actif parallèle.

Ce compromis est très difficile à fixer sans l'emploi d'un filtre passif auxiliaire installé à la sortie de l'onduleur ou en amont du côté réseau.

Cependant, ce filtre auxiliaire peut causer des effets secondaires non désirés comme la résonance avec d'autres éléments passifs installés sur le réseau électrique.

Il occasionne également une consommation de puissance active par sa résistance d'amortissement.

De plus, la qualité de filtrage de ces filtres auxiliaires se dégrade avec le temps à cause du vieillissement de leurs éléments passifs.

Filtre du troisième ordre (LCL) : modélisation dans le plan s

Le filtre de sortie de troisième ordre est une alternative à un filtre de premier ordre lourd, volumineux et coûteux , permettant d'échapper aux problèmes évoqués dans le cas du filtre de sortie de premier ordre.

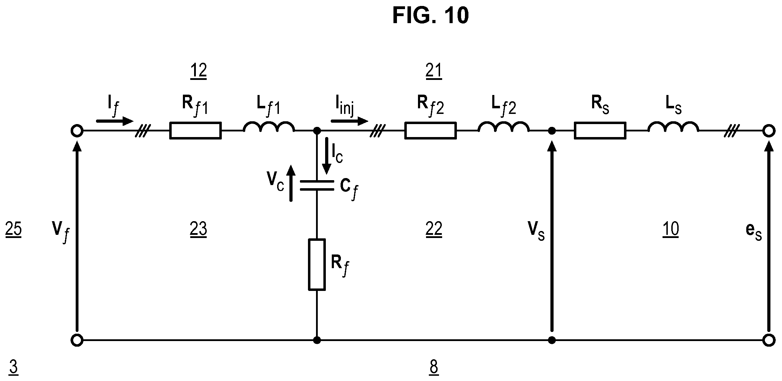

Ce filtre de sortie, se compose de deux inductances ($L_{f1}$, $L_{f2}$) de résistances internes respectives ($R_{f1}$, $R_{f2}$) et d'une capacité $C_f$ avec une petite résistance d'amortissement $R_f$ (voir la Fig. 10) que nous négligerons par la suite.

Il est à noter que ($L_s$, $R_s$ et $e_s$) représentent respectivement l'inductance, la résistance ainsi que la force électromotrice du réseau électrique en amont.

Ce type de filtre et grâce au degré de liberté supplémentaire, fourni par la capacité $C_f$, peut assurer les deux critères du dimensionnement du filtre de sortie que nous avons évoqués précédemment.

Les équations qui modélisent le filtre de sortie sont :

$$I_{inj} = \frac{B_1(s)}{A(s)} V_f(s) + \frac{B_2(s)}{A(s)} V_s(s) \qquad \text{(Maths. 1)}$$

avec $V_f$ la tension de sortie de l'onduleur, $B_1(s)/A(s)$ la fonction de transfert du filtre de sortie avec le réseau correspondant au système d'origine (à contrôler) et $B_2(s)/A(s)$ la fonction de transfert correspondant au modèle de perturbation.

Ces perturbations sont causées par la tension du réseau électrique e(s) que l'on considère désormais égale à la tension de raccordement Vs pour les réseaux électriques de forte puissance de court-circuit.

$$\begin{cases} A(s) = a_1 s^3 + a_2 s^2 + a_3 s + a_4 \\ B_1(s) = b_{11} s + b_{12} \\ B_2(s) = -(b_{21} s^2 + b_{22} s + b_{23}) \end{cases}$$

avec

$$a_1 = \left(L_s + L_{f2}\right) L_{f1} C_f$$

$$a_2 = \begin{bmatrix} \left(L_s + L_{f2}\right) R_{f1} C_f + \left(R_s + R_{f2}\right) L_{f1} C_f \\ + \left(L_{f1} + L_s + L_{f2}\right) R_f C_f \end{bmatrix}$$

$$a_3 = \begin{bmatrix} \left(L_s + L_{f2}\right) + L_{f1} + \left(R_s + R_{f2}\right) R_{f1} C_f \\ + \left(R_{f1} + R_s + R_{f2}\right) R_f C_f \end{bmatrix}$$

$$a_4 = R_{f1} + R_s + R_{f2}$$

$$b_{11} = R_f C_f$$

$$b_{12} = 1$$

$$b_{21} = L_{f1} C_f$$

$$b_{22} = \left(R_f + R_{f1}\right) C_f$$

$$b_{23} = 1$$

Des relations précédentes, si nous négligeons toutes les résistances (sauf $R_f$), nous pouvons établir la relation suivante, valable aux fréquences supérieures à 50 Hz :

$$\frac{B_1(s)}{A(s)} = \frac{\left(R_f\, C_f\right)s + 1}{\left(L_{f1}\, L_{f2}\, C_f\right)s^3 + R_f\, C_f\left(L_{f1} + L_{f2}\right)s^2 + \left(L_{f1} + L_{f2}\right)s}$$

La fréquence de résonance *fcp* du filtre LCL, si nous négligeons dans ce cas la résistance $R_f$ aussi, est donnée par la relation :

$$f_{cp} = \frac{1}{2\pi \sqrt{\left(\dfrac{L_{f1}\, L_{f2}\, C_f}{L_{f1} + L_{f2}}\right)}}$$

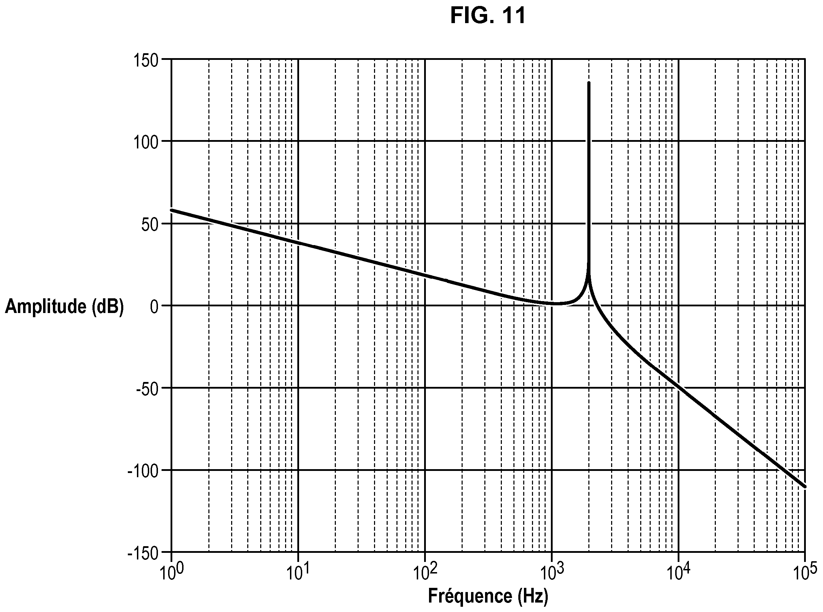

Le filtre de sortie LCL est dimensionné pour rejeter les composantes dues à la fréquence de commutation de l'onduleur, laquelle a été fixée à 16 kHz, pour correspondre à un cas d'application industrielle que nous proposons.
Ainsi, un rejet de plus que -50 dB est obtenu pour une fréquence de coupure de 1900 Hz.
Ce choix nous a permis de bien atténuer les composantes à hautes fréquences, comme le montre le diagramme du gain du filtre de sortie en fonction de la fréquence de la Fig. 11.

Filtre de troisième ordre (LCL) : modélisation dans l'espace d'état

En se basant sur la représentation de Laplace (Maths. 1), la représentation du filtre LCL dans l'espace d'état peut être donnée par les équations suivantes :

$$\frac{dv_c}{dt} = \frac{i_f - i_{inj}}{C_f}$$
$$\frac{di_f}{dt} = \frac{1}{L_{f1}}\left(v_f - v_c - R_f\left(i_f - i_{inj}\right) - R_{f1} i_f\right) \qquad \text{(Maths. 2)}$$
$$\frac{di_{inj}}{dt} = \frac{1}{L_{f2}}\left(v_c + R_f\left(i_f - i_{inj}\right) - v_s - R_{f2} i_{inj}\right)$$

La représentation vectorielle-matricielle est donnée par :

$$\dot{x} = A\, x + B\, v_f + P\, v_s \qquad \text{(Maths. 3)}$$

avec

$$A = \begin{bmatrix} -\dfrac{R_{f1}+R_f}{L_{f1}} & \dfrac{R_f}{L_{f1}} & -\dfrac{1}{L_{f1}} \\[2mm] \dfrac{R_f}{L_{f2}} & -\dfrac{R_{f2}+R_f}{L_{f2}} & \dfrac{1}{L_{f2}} \\[2mm] \dfrac{1}{C_f} & -\dfrac{1}{C_f} & 0 \end{bmatrix},\ B = \begin{bmatrix} \dfrac{1}{L_{f1}} \\ 0 \\ 0 \end{bmatrix},\ P = \begin{bmatrix} 0 \\ -\dfrac{1}{L_{f2}} \\ 0 \end{bmatrix}\ x = \begin{bmatrix} i_f \\ i_{inj} \\ v_c \end{bmatrix}$$

## 2. COMMANDE LINEAIRE PAR RST DE L'ONDULEUR DE TENSION DE L'ETAT DE L'ART CONNECTE AU RESEAU VIA LE FILTRE LCL

Contrôleur RST

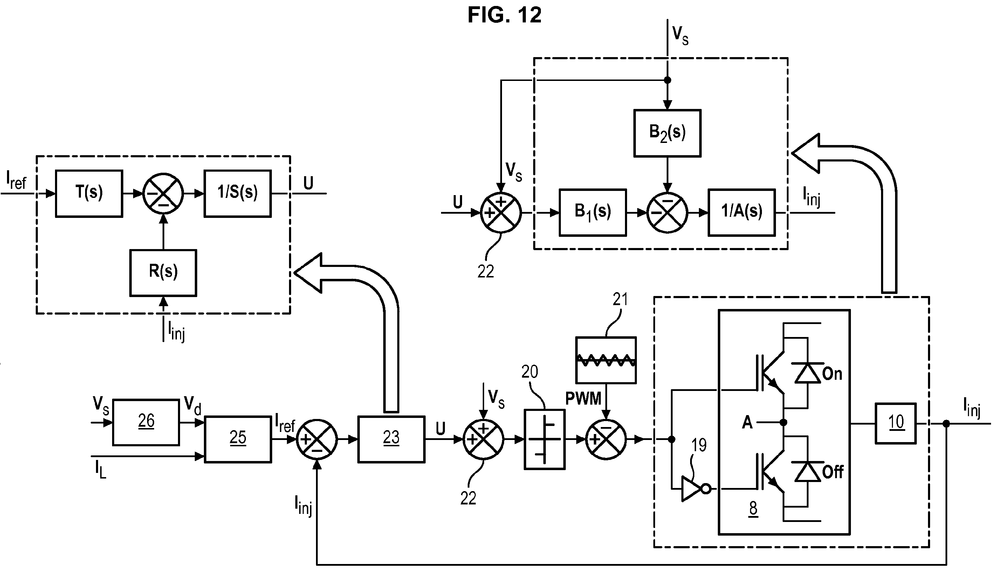

La stratégie de contrôle est basée sur l'estimation des perturbations de courant au moyen d'un algorithme d'identification. Ensuite, l'onduleur de tension, commandé par la commande MLI (Modulation de Largeur d'imputation, ou en anglais « PWM : *Pulse width modulation* »), génère les courants injectés au réseau I$_{inj}$, qui doivent poursuivre les courants de références identifiés I$_{ref}$ ($I_{inj} \rightarrow I_{ref}$). La boucle de contrôle ainsi fermée est conçue pour assurer une poursuite de haute précision.
Le diagramme général du système de commande du courant est représenté sur la Fig. 12. Dans ce diagramme, l'onduleur de tension (commandé par la PWM) est connecté au réseau électrique via un filtre LCL, avec un contrôleur du type RST, et la méthode des puissances instantanées ou autres pour l'identification des perturbations du courant. Une boucle à verrouillage de phase (PLL) est utilisée pour extraire la composante positive de la tension du réseau ($V_d$), afin de réaliser les bonnes performances attendues de l'algorithme d'identification employé.

La tension du réseau Vs représente ici une perturbation externe, dont les effets sont compensés en ajoutant la même tension de réseau au signal de commande (u). Cela empêchera le courant fondamental réactif de passer du réseau au filtre actif via les inductances du filtre LCL.

De l'équation (1) et en employant un contrôleur RST, nous obtenons :

$$I_{inj}(s) = \frac{(T\,B_1)(s)}{(S\,A + R\,B_1)(s)}\,I_{ref}(s) + \frac{(S\,B_2)(s)}{(S\,A + R\,B_1)(s)}\,V_s(s)$$

Avec $R(s)$, $T(s)$ et $S(s)$ sont les polynômes du contrôleur.

L'ordre de $R(s)$ et $S(s)$ est le même que l'ordre du système LCL $\left(\frac{B_1(s)}{A(s)}\right)$ ; donc les polynômes $R(s)$ et $S(s)$ sont de troisième ordre. Le polynôme $T(s)$ est choisi de telle sorte que $\frac{I_{ref}(s)}{I_{inj}(s)} = 1$ pour toute la bande de fréquence (50-2500 Hz) inclue dans le signal de référence $I_{ref}$ ; $T(s)$ peut être un gain simple dans ce cas.

Il est à noter que $\frac{R(s)}{S(s)}$ représente la fonction de transfert du contrôleur RST ; le dénominateur commun $D(s) = (S\,A + R\,B_1)(s)$, nommé polynôme de stabilité arbitraire, contient les pôles de la boucle fermée. Ces pôles sont placés dans un secteur du ($2 \times 45°$), pour assurer un amortissement de 0.7. Enfin, les pôles de la boucle de contrôle sont placés afin d'assurer une réponse rapide et précise, avec un bon rejet des perturbations. Il est à noter que les valeurs des pôles sont limitées par la fréquence de coupure en boucle fermée.

**Effet du déphasage**

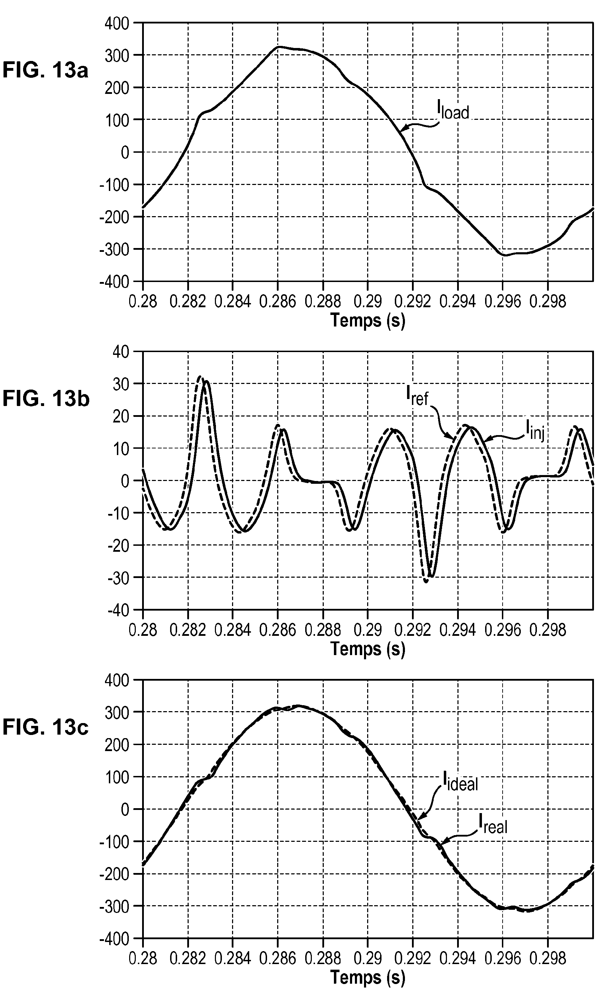

Le contrôleur RST, ainsi que tous les contrôleurs linéaires, peuvent être utilisé quand les références à poursuivre sont constituées de signaux constants ou à une fréquence seule et relativement faible (cas de la compensation du réactif ou du déséquilibre à la fréquence fondamentale 50 Hz). A cette fréquence, le déphasage entre les références identifiées ($I_{ref}$) et la sortie de la boucle fermée injectée ($I_{inj}$) est acceptable. Par contre, si la référence à suivre est composée de signaux à plusieurs fréquences, le déphasage n'est plus négligeable. En effet, le déphasage augmente avec la fréquence. L'effet du déphasage de la structure montrée en Fig. 12 est présenté sur la Fig. 13. De cette figure, nous pouvons observer que le courant perturbé ($I_{Load}$) n'est pas bien compensé pour ($I_{real}$: compensation avec déphasage), par rapport à la forme idéale ($I_{ideal}$: compensation sans déphasage).

La fonction de transfert de la boucle de contrôle avec le RST $I_{inj}(s)/I_{ref}(s)$ est présentée via la Fig. 14.

Le gain et la phase de la fonction de transfert en boucle fermée $I_{inj}(s)/I_{ref}(s)$ sont donnés via le Tableau I, pour des multiples de la fréquence fondamentale allant de 50 *Hz* jusqu'à ($23\times50$) *Hz*. Il est à noter que nous nous sommes limités à 1150 Hz car les réseaux électriques s'autofiltrent, via leur inductance, des courants harmoniques de rangs élevés.

Tableau. I. Gain et la phase de la fonction de transfert en boucle fermée avec RST

| F (Hz) | | 50 | 250 | 350 | 550 | 650 | 850 | 950 | 1150 |
|--------|---|----|-----|-----|-----|-----|-----|-----|------|
| RST | G | 1 | 1 | 1 | 1 | 0.99 | 0.98 | 0.98 | 0.97 |
| | PH° | -1 | -8 | -11 | -18 | -21 | -27 | -30 | -37 |

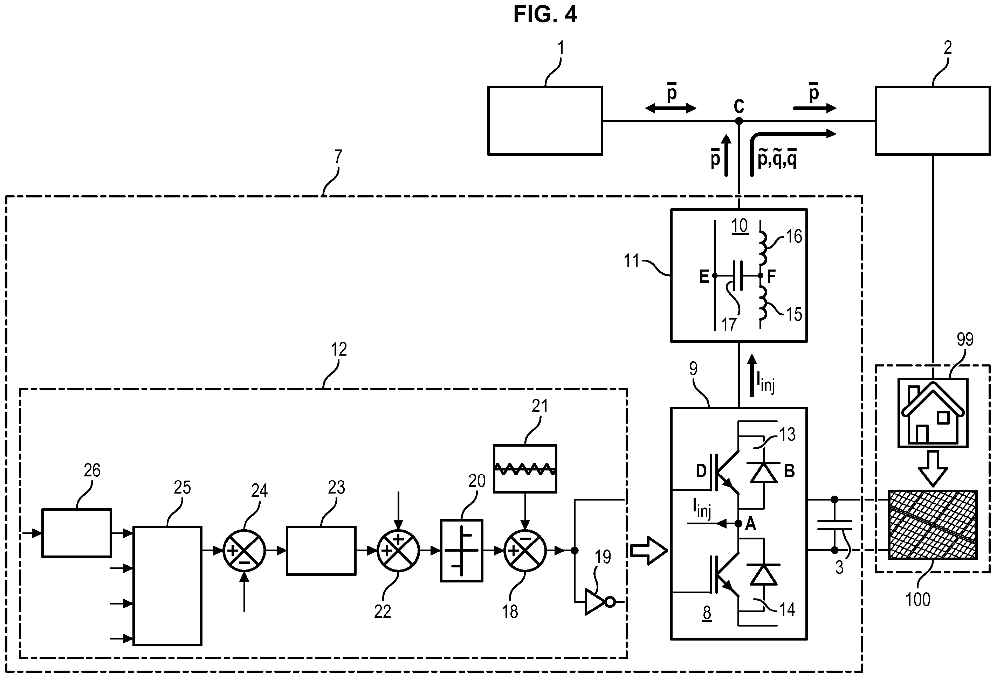

Il est à noter que le contrôleur linéaire de RST assure un gain unitaire (0 *dB*) pour pratiquement toute la bande de fréquence (50-2500 Hz : *cf. Fig. 4*). De plus, le RST est utilisé seulement pour compenser les courants déséquilibrés et/ou réactifs à la fréquence fondamentale.

En effet, à cette fréquence, un déphasage du (-1°) est négligeable. Après cette fréquence, le déphasage n'est plus négligeable, et le filtre actif parallèle ne peut pas compenser les courants harmoniques.

## 3. CONTROLE NON LINEAIRE (PAR MODE GLISSANT- de premier ordre) DE L'ONDULEUR DE TENSION SELON L'INVENTION CONNECTE AU RESEAU VIA LE FILTRE LCL

Dans la plupart des cas, les lois de commande, conçues pour contrôler les onduleurs de tension qui sont connectés au réseau électrique via un filtre LCL, ont été à l'origine établies pour les systèmes d'énergie renouvelable (photovoltaïque et éolien). Dans ce cas, les contrôleurs linéaires peuvent être proposés car l'onduleur a uniquement des composantes fondamentales (une puissance active) à injecter au réseau : le déphasage étant négligeable dans ce cas.

Cependant, dans le cas d'un filtre actif parallèle, l'onduleur doit injecter au réseau électrique à la fois des composantes fondamentales (réactive et déséquilibrée) et harmoniques, ce qui implique la maîtrise totale d'une très large bande passante de fréquences. Il est à noter qu'un déphasage important limite l'applicabilité des contrôleurs linéaires dans le cas d'un filtrage harmonique.

L'alternative pour surmonter ce problème de déphasage, rencontré lors de l'emploi d'un filtre LCL associé à un contrôleur linéaire, est la commande non linéaire. Dans cette invention, nous employons la méthode de contrôle par mode glissant (SMC pour *« Sliding Mode Control »* en anglais) pour assurer une réponse dynamique souhaitée, une forte robustesse /insensibilité aux perturbations bornées ainsi que des bonnes propriétés de contrôle dans une large gamme de conditions de fonctionnement.

Par contre, il est bien connu qu'un contrôleur SMC classique génère une commande, des interrupteurs de l'onduleur, à très haute fréquence, afin d'assurer une convergence en temps fini vers la surface de glissement où les états du système sont maintenus pendant tout le temps qui suit, même en présence de perturbations bornées.

En pratique, l'onduleur de tension est commandé par une fonction de commutation à fréquence limitée/fixe. Ainsi, des commutations variables à très hautes fréquences, si elles se produisent, pourraient entraîner une surchauffe qui peut aller jusqu'à la destruction de l'onduleur.

Par conséquent, nous employons un SMC classique (avec fonction *sign*) à commande continue. En effet, afin d'éviter une commande discontinue (des commutations variables de l'onduleur à très hautes fréquences), causées par un SMC classique, nous optons pour deux contrôleurs par mode glissant, l'un est associé à une fonction *sign* approximée en fonction *sigmoïde* et l'autre est avec une méthode que nous appelons AIRD (une augmentation artificielle du degré relatif, suivie par un intégrateur, en anglais : *« an Artificial Increase Relative Degree, followed by an integrator »*). Enfin, la commande du filtre actif générée par les SMCs continus sera modulée par une MLI, afin de permettre au filtre actif de fonctionner à une fréquence de commutation fixe, adaptée, d'un côté, à un fonctionnement nominal des composants d'électronique de puissance de l'onduleur et facile, de l'autre, à filtrer par le LCL, ce qui facilite, entre autres, le blocage des composantes à hautes fréquences par le filtre LCL.

Conception d'un contrôleur classique par mode glissant

Considérons le système (3) avec: $y := i_{inj}$ représentant l'entrée, $u := v_f$ est le signal de commande et $w := v_s$ comme perturbations, et pour $R_f = 0$, l'équation (3) devient :

$$\dot{x} = Ax + Bu + Pw, \quad y = Cx, C = [0\ 1\ 0] \qquad \text{(Maths. 4)}$$

avec

$$A = \begin{bmatrix} -\dfrac{R_{f1}}{L_{f1}} & 0 & -\dfrac{1}{L_{f1}} \\ 0 & -\dfrac{R_{f2}}{L_{f2}} & \dfrac{1}{L_{f2}} \\ \dfrac{1}{C_f} & -\dfrac{1}{C_f} & 0 \end{bmatrix}, B = \begin{bmatrix} \dfrac{1}{L_{f1}} \\ 0 \\ 0 \end{bmatrix}, P = \begin{bmatrix} 0 \\ -\dfrac{1}{L_{f2}} \\ 0 \end{bmatrix}$$

Il est clair que le degré relatif du système (4) est $r = 3$, car $CB = CAB = 0$ et $CA^2B = \dfrac{1}{(L_{f1}L_{f2}C_f)}$, alors une variable de glissement est choisie sous la forme :

$$\mathbb{S} = K_0\, e + K_1\, \dot{e} + K_2\, \ddot{e} \qquad\qquad\qquad \text{(Maths. 5)}$$

avec $e = i_{inj} - i_{ref}$. Il est à noter que $\dot{e}$, $\ddot{e}$ sont obtenues en utilisant un différenciateur en mode glissant d'ordre supérieur.

Les coefficients positifs $K_0$, $K_1$ et $K_2$ de l'équation 5 sont sélectionnés pour rendre le système (Maths. 4) exponentiellement stable avec le taux de convergence souhaité, dans le mode glissant défini par $\mathbb{S} = 0$.

Afin de concevoir un contrôleur SMC qui dérive $\mathbb{S} \to 0$ en temps fini et qui garde les états du système (Maths. 4) dans une surface de glissement $\mathbb{S} = 0$ pour tout le temps qui suit, les dynamiques de la variable de glissement sont dérivées :

$$\dot{\mathbb{S}} = F\left(\frac{di_{ref}}{dt}, \frac{d^2 i_{ref}}{dt^2}, v_s, \frac{dv_s}{dt}, \frac{d^2 v_s}{dt^2}, i_{inj}, i_f, v_c\right) + \left(\frac{K_2}{L_{f1}L_{f2}C_f}\right)u \qquad\qquad \text{(Maths. 6)}$$

*avec*

$$F\left(\frac{di_{ref}}{dt}, \frac{d^2 i_{ref}}{dt^2}, v_s, \frac{dv_s}{dt}, \frac{d^2 v_s}{dt^2}, i_{inj}, i_f, v_c\right) = K_0\dot{e} + K_1\ddot{e}$$

$$-K_2\left\{\frac{d^3 i_{ref}}{dt^3} + \left(-\left[\left(\frac{R_{f2}}{L_{f2}}\right)^2 - \frac{1}{L_{f2}C_f}\right]\left(\frac{R_{f2}}{L_{f2}}\right) + \frac{R_{f2}}{L_{f2}{}^2 C_f}\right)i_{inj} - \left(\frac{R_{f2}}{L_{f2}{}^2 C_f} + \frac{R_{f1}}{L_{f1}L_{f2}C_f}\right)i_f\right.$$

$$\left. + \left(\left[\left(\frac{R_{f2}}{L_{f2}}\right)^2\frac{1}{L_{f2}} - \frac{1}{L_{f2}{}^2 C_f}\right] - \frac{1}{L_{f1}L_{f2}C_f}\right)v_c - \left(\left[\left(\frac{R_{f2}}{L_{f2}}\right)^2 - \frac{1}{L_{f2}C_f}\right]\frac{1}{L_{f2}}\right)v_s + \left(\frac{R_{f2}}{L_{f2}}\right)\frac{dv_s}{dt} - \left(\frac{1}{L_{f2}}\right)\frac{d^2 v_s}{dt^2}\right\}$$

$$\text{(Maths. 7)}$$

Il est supposé que :

- la perturbation $V_s$ avec ses deux premières dérivées $\frac{dv_s}{dt}, \frac{d^2 v_s}{dt^2}$ ainsi que $\frac{d^3 i_{ref}}{dt^3}$ sont bornées,

- les deux premières dérivées de l'erreur de poursuite $\dot{e}$, $\ddot{e}$ ainsi que les variables $I_{inj}, i_f, v_c$ sont bornées dans un domaine d'état raisonnable, qui inclut le point de fonctionnement.

Alors, il existe $\eta > 0$ tel que

$$\left| F\left(\frac{di_{ref}}{dt}, \frac{d^2 i_{ref}}{dt^2}, \frac{d^3 i_{ref}}{dt^3}, v_s, \frac{dv_s}{dt}, \frac{d^2 v_s}{dt^2}, i_f, i_{inj}, v_c\right) \right| \leq \eta,$$

La condition d'existence d'un mode glissant $\mathbb{S}.\dot{\mathbb{S}} < 0$ peut être facilement réalisé par le SMC

$$u := v_f = -\lambda\, sign\,(\mathbb{S}) \qquad\qquad\qquad \text{(Maths. 8)}$$

avec $u$ la commande appliquée, via le PWM, à l'onduleur, $\lambda$ est fixé et défini par le bloc limiteur de saturation à 420V (voir Fig. 12). Ensuite, l'action du contrôle sur $\dot{\mathbb{S}}$ est proportionnelle à $\frac{K_2}{L_{f1}L_{f2}C_f}\, u$, ce qui explique le choix de $K_0, K_1$ et $K_2$ en (7) :

$K_0 = 306000000$, $K_1 = 35000$ et $K_2 = 1$

Dans ce contexte, il est important de signaler que la fonction Signe dans (Maths. 8) a été approximée en fonction Sigmoïde $sign\,\mathbb{S} = \frac{\mathbb{S}}{|\mathbb{S}| + \varepsilon}$ avec $\varepsilon = 2 \times 10^8$

**SMC avec augmentation artificielle du degré relatif (AIRD)**

Nous étendons le système (Maths. 4) comme suit :

$$x_4 = u, \ \dot{x}_4 = v$$

avec *v* le nouveau contrôle, le système, dans ce cas, devient

$$\dot{x} = A_e x + B_e v + P_e w, \ \ y = C_e x, \ C_e = [0 \ 1 \ 0 \ 0]$$

(Maths. 9)

et

$$A_e = \begin{bmatrix} -\frac{R_{f1}}{L_{f1}} & 0 & -\frac{1}{L_{f1}} & \frac{1}{L_{f1}} \\ 0 & -\frac{R_{f2}}{L_{f2}} & \frac{1}{L_{f2}} & 0 \\ \frac{1}{C_f} & -\frac{1}{C_f} & 0 & 0 \\ 0 & 0 & 0 & 0 \end{bmatrix}, B_e = \begin{bmatrix} 0 \\ 0 \\ 0 \\ 1 \end{bmatrix}, P_e = \begin{bmatrix} 0 \\ \frac{-1}{L_{f2}} \\ 0 \\ 0 \end{bmatrix}$$

Etant donné que le degré relatif *r* = 4 du système (9), la variable de glissement est choisie de la forme :

$$\mathbb{S}_e = K_0 \, e + K_1 \, \dot{e} + K_2 \, \ddot{e} + \ K_3 \, \dddot{e} \tag{Maths. 10}$$

avec $e = i_{inj} - i_{ref}$.

La dérivée par rapport au temps de la surface de glissement (Maths. 10) s ' obtient :

$$\dot{\mathbb{S}}_e = K_0 \, \dot{e} + K_1 \, \ddot{e} + K_2 \, \dddot{e} + \ K_3 \, F \left( i_f, \ i_{inj}, v_c, \frac{d^4 i_{ref}}{dt^4} \right) + K_3 \left( \frac{1}{L_{f1} L_{f2} C_f} \right) v \tag{Maths. 11}$$

avec

$$F = \frac{-d^4 i_{ref}}{dt^4} - \left( \frac{R_{f1}}{L_{f1} L_{f2} C_f} + \frac{R_{f2}}{L_{f2}^2 C_f} \right) \frac{di_f}{dt} + \left[ -\left( \left( \frac{R_{f2}}{L_{f2}} \right)^2 - \frac{1}{L_{f2} C_f} \right) \frac{R_{f2}}{L_{f2}} + \frac{R_{f2}}{L_{f2}^2 C_f} \right] \frac{di_{inj}}{dt} - \left[ \left( \left( \frac{R_{f2}}{L_{f2}} \right)^2 - \right. \right.$$

$$\left. \left. \frac{1}{L_{f2} C_f} \right) \frac{1}{L_{f2}} - \frac{1}{L_{f1} L_{f2} C_f} \right] \frac{dv_c}{dt} - \left[ \left( \left( \frac{R_{f2}}{L_{f2}} \right)^2 - \frac{1}{L_{f2} C_f} \right) \frac{1}{L_{f2}} \right] \frac{dv_s}{dt} + \left( \frac{R_{f2}}{L_{f2}^2} \right) \frac{d^2 v_s}{dt^2} - \left( \frac{1}{L_{f2}} \right) \frac{d^3 v_s}{dt^3}$$

(Maths 12)

Il est à noter que $\dot{e}$, $\ddot{e}$ et $\dddot{e}$ (en Maths 11) sont obtenues en utilisant un différenciateur en mode glissant d'ordre supérieur.

Les coefficients positifs $K_0$, $K_1$, $K_2$ et $K_3$ sont sélectionnés, dans ce cas aussi, pour assurer une stabilité dynamique exponentielle au système (Maths. 9) avec le taux de convergence souhaité dans le mode glissant défini par $\mathbb{S}_e = 0$ .

Nous supposons, dans ce cas, que toutes les perturbations et leurs dérivées, toutes les dérivées de l'erreur de poursuite ainsi que toutes les variables d'état du système sont bornées dans un domaine d'état raisonnable, qui inclut le point de fonctionnement.

Alors, il existe $\eta_1 > 0$ tel que $\left| \dot{\mathbb{S}}_e \right|_{v=0} \leq \eta_1$ et la condition d'existence d'un mode glissant $\mathbb{S}.\dot{\mathbb{S}} < 0$ pour $\mathbb{S}_e \neq 0$ peut être facilement réalisé par le SMC

$$v := -\lambda\, sign\,(\mathbb{S}_e) \qquad\qquad\qquad (\text{Maths. 13})$$

où la valeur de $\lambda = 10^7$ est choisie pour limiter l'effet des perturbations causées par la dérivée supplémentaire issue de l'augmentation artificielle du degré relatif.

Enfin, une commande continue $u = \int v\, dt$ est générée et limitée par le bloc de saturation à 420V (voir Fig. 12). Ceci est reflété dans le schéma de la Fig. 3 par un intégrateur à la sortie du contrôleur SMC. Il est à noter que $\dot{\mathbb{S}}_e$ est proportionnel à $\dfrac{K_3}{L_{f1}\, L_{f2}\, C_f}\, v$, ce qui explique le choix de $K_0$, $K_1$, $K_2$ et $K_3$ en (Maths 11) :

$$K_0 = 1.7576\mathrm{e} + 13,\ K_1 = 2.0280\mathrm{e} + 09\ \text{et}\ K_2 = 78000\ \text{et}\ K_3 = 1$$

<u>4. CONTROLE NON LINEAIRE (PAR MODE GLISSANT D'ORDRE SUPERIEUR) DE L'ONDULEUR DE TENSION SELON L'INVENTION CONNECTE AU RESEAU VIA LE FILTRE LCL</u>

Dans cette présente invention, l'utilisation des algorithmes de contrôle en mode glissant continu d'ordre supérieur modulé : suivi par une modulation de largeur d'impulsions (MLI, en anglais PWM), garantissant une fréquence de commutation prédéfinie pour la commande des composants de l'onduleur de tension associé au filtre LCL, est proposée **pour la première fois.**

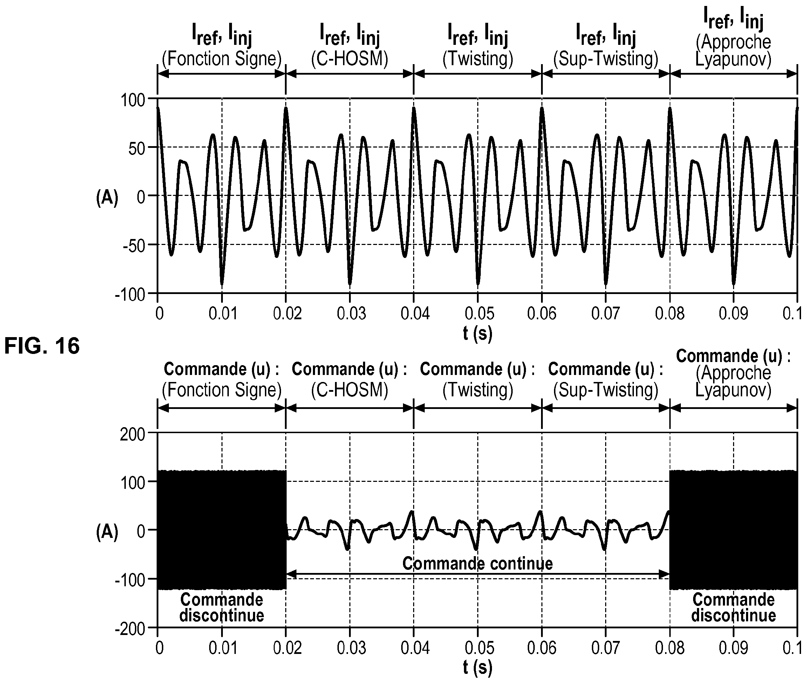

Il est à noter que le document [D2 : ALALI MHD A E ET AL: "A Lyapunov approach based higher order sliding mode controller for grid connected shunt active compensators with a LCL filter", 2017 19TH EUROPEAN CONFERENCE ON POWER ELECTRONICS AND APPLICATIONS (EPE'17 ECCE EUROPE) ] propose une commande de Lyapunov d'ordre supérieur dont la continuité du contrôleur n'est pas assurée : la commande est discontinue (voir Fig. 16), comme décrit page 7 de cette publication.

De plus, cette commande est impossible à implémenter, à cause d'abord de sa discontinuité, et aussi de sa dépendance aux perturbations causées, entre autres, par la tension du réseau habituellement perturbée, surtout dans les zones industrielles.

Il est à noter que l'approche de Lyapunov de contrôle est adaptée à des systèmes qui traitent des signaux constants (à fréquence égale à zéro) dans un milieu sain (dénué de perturbations). En effet, traiter le problème des harmoniques (avec une bande de fréquences incluant 50-2500 Hz) dans un milieu perturbé (les réseaux électriques en général et surtout les zones industrielles) tout en assurant la stabilité du filtre actif, rend la commande délivrée par cette approche de contrôle discontinue.

Dans cette présente invention **et pour la première fois,** trois algorithmes de contrôle de mode glissant continus de deuxième ordre et d'ordre supérieur sont employés. Il s'agit de l'algorithme de contrôle de mode glissant de deuxième ordre 2-SMC Twisting et 2-SMC super-Twisting ainsi que l'algorithme de contrôle de mode glissant d'ordre supérieur continu C-HOSM.

Ces contrôleurs fournissent, dans une large gamme de conditions de fonctionnement, une dynamique souhaitée du système en mode glissant, une forte insensibilité aux perturbations bornées correspondantes et une précision de stabilisation améliorée. Il est à noter que les algorithmes, C-HOSM et 2-SMC Twisting et Super-Twisting fournissent une convergence en temps fini vers la surface de glissement.

Donc, l'unité de contrôle-commande 12 peut ainsi comporter au moins un des trois contrôleurs suivants à mode glissant d'ordre supérieur :

- le premier se base sur un contrôleur par mode glissant d'ordre supérieur continu C-HOSMC, avec une surface de glissement adaptée du 1er ordre,
  associée à trois fonctions Signe, dont deux agissant directement sur la commande ainsi que la troisième agissant sur la partie de la commande liée aux perturbations,

- le deuxième emploie un contrôleur 2-SMC Twisting avec augmentation artificielle du degré relatif, avec une surface de glissement adaptée du 2ème ordre, suivie par un intégrateur, associée à deux fonctions Signe, agissant sur le dérivé de la commande respectivement via la surface de glissement et sa dérivée,

- le troisième est un contrôleur 2-SMC Super-Twisting avec une surface de glissement adaptée du 2ème ordre, sans augmentation artificielle du degré relatif, associée à une fonction Signe , agissant directement et par son terme intégral sur la commande.

**Conception du contrôleur C-HOSM**

L'algorithme C-HOSM de contrôle peut contrôler des systèmes avec un degré relatif arbitraire. Ici, la variable glissante est sélectionnée comme suit :

$$\mathbb{s} = \dot{e} + c\,e \qquad\qquad \text{(Maths. 14)}$$

Le degré relatif est r = 2 conformément à l'équation. (Maths.4). L'origine de l'équation (Maths.14) est la suivante. Dans un environnement bruyant de mesure, la variable de glissement $\mathbb{S}$ convergera vers un domaine dont la taille est proportionnelle à l'amplitude du bruit $w(t)$ de la mesure $\mathbb{S}$. Par conséquent, le mode de glissement réel $\mathbb{S} = \dot{e} + c\,e = w(t)$ et l'effet du bruit sur l'erreur de suivi $e$ est atténué grâce à un filtrage passe-bas d'une fréquence de coupure égale à $c$ (dans notre cas, $c = 10^4$).

La dynamique de la variable de glissement $\mathbb{S}$ entrée-sortie est calculée conformément aux équations. (Maths.4), (Maths.14)

$$\ddot{\mathbb{S}} = v + f(x,t) \qquad\qquad \text{(Maths. 15)}$$

La loi de commande de l'algorithme *C - HOSM* est conçue comme suit :

$$v = v_1 - v_2 \qquad\qquad \text{(Maths. 16)}$$

où :

$$v_1 = -\gamma_1 [\mathbb{S}]^{\alpha_1} - \gamma_2 [\dot{\mathbb{S}}]^{\alpha_2} \qquad\qquad \text{(Maths. 17)}$$

où $[\mathbb{S}]^{\alpha_1} = |\mathbb{S}|^{\alpha_1} sign(\mathbb{S})$

Avec :

$\gamma_1, \gamma_2 > 0$ sont sélectionnés pour que le polynôme $p^2 + \gamma_2 p + \gamma_1$ soit Hurwitz, avec un placement de pôles désiré, $(\alpha_1, \alpha_2)$ sont calculés tels que $\alpha_1 = \frac{\alpha}{2-\alpha}, \alpha_2 = \alpha, \alpha \in (0,1)$; si $\alpha = 1/2$ donc, $\alpha_1 = \frac{1}{3}, \alpha_2 = 1/2$ ; $v_2$ est choisi pour un rejet de perturbation tel que:

$$v_2 = -\omega \qquad\qquad \text{(Maths. 18)}$$

où:

$$\dot{\omega} = -\beta\, Sign(\sigma) - d/dt(\lambda[\sigma]^{\frac{1}{2}}) \Rightarrow \omega = -\beta \int_0^t Sign(\sigma)dt - \lambda[\sigma]^{1/2}$$

$$\text{and } \sigma = \dot{\mathbb{S}} - \int_0^t v_1 dt \qquad\qquad \text{(Maths. 19)}$$

Il est à noter que la loi de commande en (Maths. 16)-(Maths. 19) :

• fait tendre $\mathbb{S}$, $\dot{\mathbb{S}}$ vers zéro en temps fini,
• est continue et
• par conséquent, est un contrôleur de mode glissant continu de deuxième ordre (*C - HOSM*), sachant que la continuité de cette commande est assurée sans augmentation artificielle du degré relatif.

**Calcul de $\gamma_1, \gamma_2$**: Ils sont calculés comme des coefficients d'un polynôme du deuxième ordre ; les valeurs propres de ce polynôme sont choisies pour fournir une réponse transitoire donnée tout en étant limitées par la fréquence de commutation de l'onduleur de tension, imposée par la porteuse de la MLI.

**Calcul de** $\lambda$, $\beta$: Ils sont calculés comme suit :

$$\lambda = 1.5\sqrt{L}, \beta = 1.1\,L \qquad\qquad \text{(Maths. 20)}$$

Dans notre cas, $L$ est égale à $3 \times 10^{18}$

Finalement, la commande u appliquée aux composants de l'onduleur est donnée:

$$u = \left( \left( L_s + L_{f2} \right) L_{f1}\, C_f \right) v$$

avec $(L_s + L_{f2})\, L_{f1}\, C_f = a_1$ de la fonction de transfert $B_1(s)/A(s)$ de (Maths. 1).

**Conception du contrôleur 2-SMC Twisting**

La variable de glissement est choisie telle que :

$$\mathbb{S} = \gamma_1\,e + \gamma_2\,\dot{e} + \ddot{e}, \quad \gamma_1, \gamma_2 > 0 \qquad\qquad \text{(Maths. 21)}$$

Puis, $\dot{\mathbb{S}} = v + \varphi$ où $\varphi(x, t)$ représente les perturbations cumulées du système présenté par (Maths. 4). En dérivant la dérivée de la variable de glissement $\dot{\mathbb{S}}$, nous obtenons :

$$\ddot{\mathbb{S}} = \dot{v} + \dot{\varphi} \qquad\qquad \text{(Maths. 22)}$$

avec $\dot{\varphi}$ supposé borné dans un domaine d'état raisonnable du système présenté par (Maths. 4).

Le contrôle-commande 2-SMC Twisting, qui fait tendre $\mathbb{S}$, $\dot{\mathbb{S}}$ à zéro en temps fini, est conçue en fonction de la dérivée de la commande $v$ :

$$\dot{v} = -\alpha \left( \beta\, sign\,(\mathbb{S}) + sign\,(\dot{\mathbb{S}}) \right) \qquad\qquad \text{(Maths. 23)}$$

**Calcul de** $\gamma_1, \gamma_2$: Ils sont sélectionnés comme des coefficients d'un polynôme Hurwitz ; les valeurs propres de ce polynôme sont choisies en fonction de ce critère, tout en étant limités par la fréquence de commutation de l'onduleur de tension, imposée par la porteuse de la MLI.

**Calcul de** $\alpha$, $\beta$: avec $\alpha$, $\beta > 0$; Ils sont respectivement égaux à $10^8$, 0.6. Ils sont choisis afin d'assurer une réponse rapide ainsi qu'une réduction acceptable de la fréquence très élevée de commutation.

Finalement, le signal de commande appliqué aux composants de l'onduleur de tension est

$$u = \int_0^t \dot{v}\, dt \qquad\qquad \text{(Maths. 24)}$$

Il est à noter que la commande u en (24) est continue, alors que $\dot{v}$ présente une commande à très haute fréquence (discontinue).

**Conception du contrôleur 2-SMC Super-Twisting**

La variable de glissement est choisie telle que :

$$\mathbb{S} = \gamma_1\,e + \gamma_2\,\dot{e} + \ddot{e}, \quad \gamma_1, \gamma_2 > 0 \qquad\qquad \text{(Maths. 25)}$$

Puis :

$$\dot{\mathbb{S}} = u + f(x, t) \qquad\qquad \text{(Maths. 26)}$$

avec $f(x, t)$ représente le cumul des perturbations du système, présenté en (Maths. 4), dont la dérivée est supposée bornée.

Le contrôle-commande 2-SMC Super-Twisting, qui fait tendre $\mathbb{S}$, $\dot{\mathbb{S}}$ à zéro en temps fini est conçu tel que :

$$u = -\lambda\lceil\mathbb{S}\rceil^{1/2} - v \qquad \text{(Maths. 27)}$$

avec

$$\dot{v} = -\beta\, Sign(\mathbb{S}) \text{ and } v = -\beta \int_0^t sign(\mathbb{S})dt \qquad \text{(Maths. 28)}$$

**Calcul de $\gamma_1, \gamma_2$:** Comme dans les deux cas précédents, ces paramètres sont calculés en tant que coefficients d'un polynôme Hurwitz du second ordre, par conséquent les valeurs propres de ce polynôme sont choisies pour fournir une réponse rapide, tout en étant limitées par la fréquence de commutation de l'onduleur de tension, imposée par la porteuse de la MLI.

**Calcul de $\lambda, \beta$:** Ils sont choisis comme suit :

$$\lambda = 1.5\sqrt{L}, \beta = 1.1\, L \qquad \text{(Maths. 29)}$$

Avec une valeur de $L$ suffisamment élevée telle que $f(x, t) \leq L$, L étant dans notre cas égal à $1 \times 10^7$. Il est à noter que la loi de contrôle commande Super-Twisting (Maths.27)-(Maths.29) génère une commande continue.

RESULTATS DE SIMULATION DE L'ONDULEUR COMMANDE SELON L'INVENTION

Résultats de simulation avec Matlab-Simulink

**Contrôleurs SMCs continus de premier ordre**

Les simulations sont réalisées, dans un premier temps, via un simple schéma de Simulink. Dans ce schéma, les courants harmoniques de références identifiés $I_{ref}$ sont modélisés par des sources de courant des rangs 5, 7, 11, 13, 17 et 19, qui représentent le même spectre harmonique du courant que nous allons analyser via une étude de cas ci-après. Les simulations sont effectuées en employant d'abord le SMC classique puis le SMC avec une fonction sigmoïde et enfin avec le SMC associé à l'algorithme AIRD.

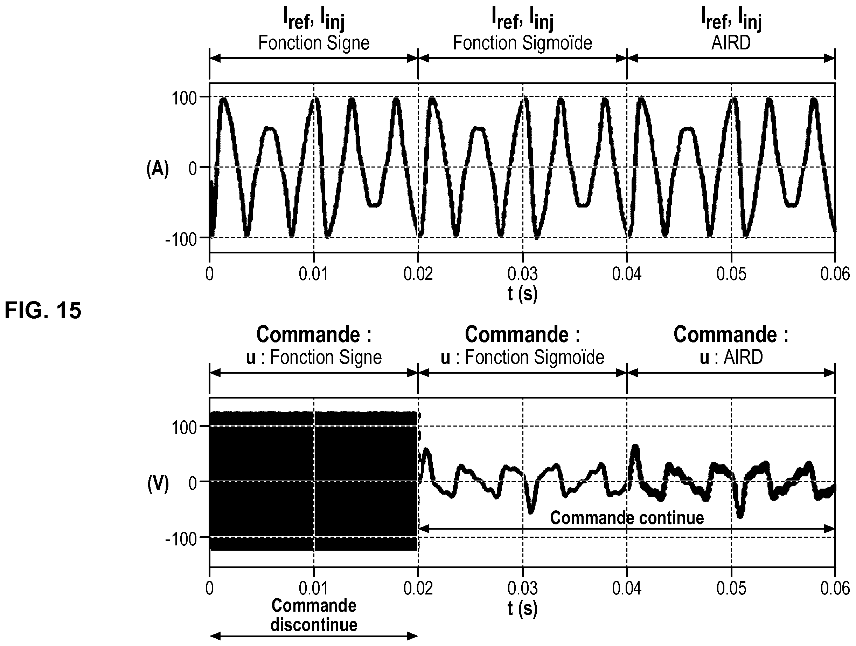

La Fig. 15 trace les courants monophasés $I_{ref}$, $I_{inj}$ (identifié et injecté respectivement) ainsi que le signal de contrôle de l'onduleur u. Nous observons qu'une poursuite très précise est assurée par la commande discontinue (à fréquence de commutation variable et très élevée) du SMC classique ainsi que par une commande continue (à fréquence de commutation fixée par le PWM) de l'algorithme AIRD. Cependant, la méthode de SMC avec une fonction sigmoïde assure une poursuite légèrement dégradée mais largement acceptable.

**Contrôleurs SMCs d'ordre supérieur**

Les simulations sont effectuées, pour les mêmes caractéristiques du cas précédant, en employant cette fois-ci, d'abord le SMC classique puis, et dans l'ordre, le C-HOSM, le 2-SMC Twisting, le 2-SMC Super-Twisting et finalement l'approche de Lyapunov du document D2.

La Fig. 16 trace les courants monophasés $I_{ref}$, $I_{inj}$ (identifié et injecté respectivement) ainsi que le signal de contrôle de l'onduleur u. Nous pouvons constater qu'une poursuite très précise est assurée par les cinq contrôleurs, avec un signal de commande discontinu pour le SMC classique et pour l'aproche de Lyapunov, tandis que les trois contrôleurs SMC d'ordre supérieur proposés assurent une commande continue.

Résultats de simulation avec Matlab®-Simulink®-Simscape Power system® (Etude de Cas)

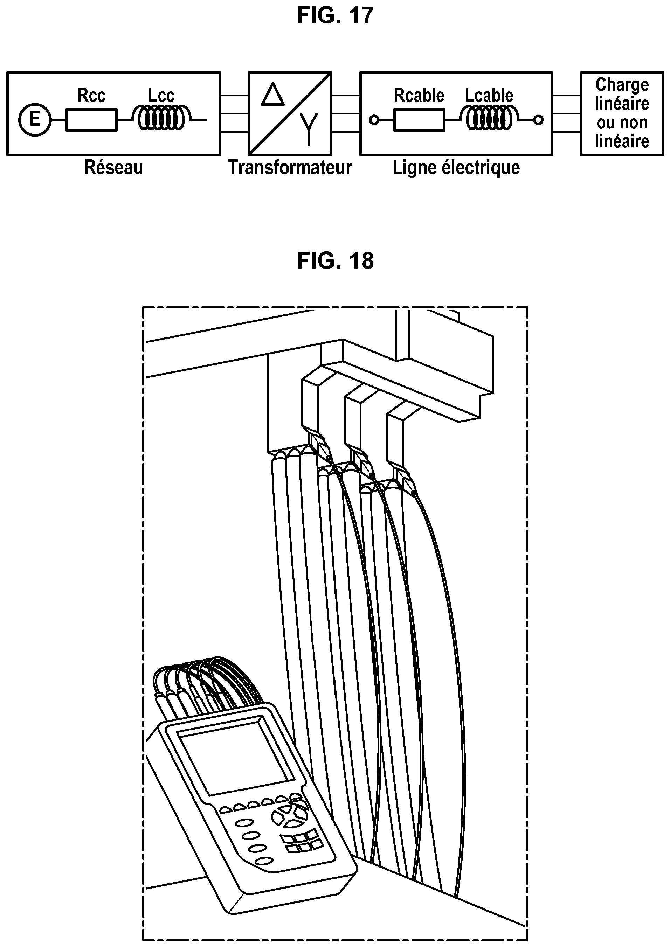

Il s'agit de l'usine de textile de Melaiece située dans la zone industrielle de Sheikh Najjar, à Alep, en Syrie ; le réseau électrique de l'usine est présenté via la Fig. 17.

La ligne de production de cette usine contient 56 moteurs asynchrones dont 40, commandés par des onduleurs de puissance et dont la puissance nominale varie entre 0.25 et 75 *kW*. Le facteur de puissance de l'usine est de 0.76 sans compensation de la puissance réactive, alors il remonte jusqu'à 0.98 avec compensation via des bancs de batteries de condensateurs commandés.

MODELISATION DE RESEAUX BASSE TENSION

Compte tenu du nombre important des machines commandées dans un site industriel (40 dans notre cas), il devient difficile, voire impossible, de modéliser les réseaux électriques de ces installations.

Une première contrainte est matérielle, en effet il faut autant d'appareils de mesure que de machines commandée (40 dans notre cas : il s'agit des dispositifs d'analyse de la qualité d'énergie, représentés en figure 18).

De plus, il s'avère difficile d'effectuer une simulation d'un réseau industriel à plusieurs niveaux de tension, contenant plusieurs transformateurs de puissance avec de longs câbles et lignes électriques, ainsi que des dizaines de machines commandées et associées à plusieurs filtres actifs de dépollution.

L'idée ici est de remplacer les machines commandées par leurs courants (actif, réactif et harmoniques) délivrés par les dispositifs d'analyse.

Dans ce cas, un dispositif d'analyse va être installé à l'entrée de chaque ligne de production, donc uniquement un appareil de mesure par une ligne de production au lieu d'un appareil de mesure par machine.

Du point de vue informatique, le schéma de simulation n'est plus lourd car des sources de courant, dont le nombre est limité par un rang harmonique maximal, fixé théoriquement à 50, vont remplacer le modèle des dizaines de machines commandées.

Il est à noter qu'une source de courant est toujours associée à une résistance très élevée (de quelques M $\Omega$) connectée en parallèle.

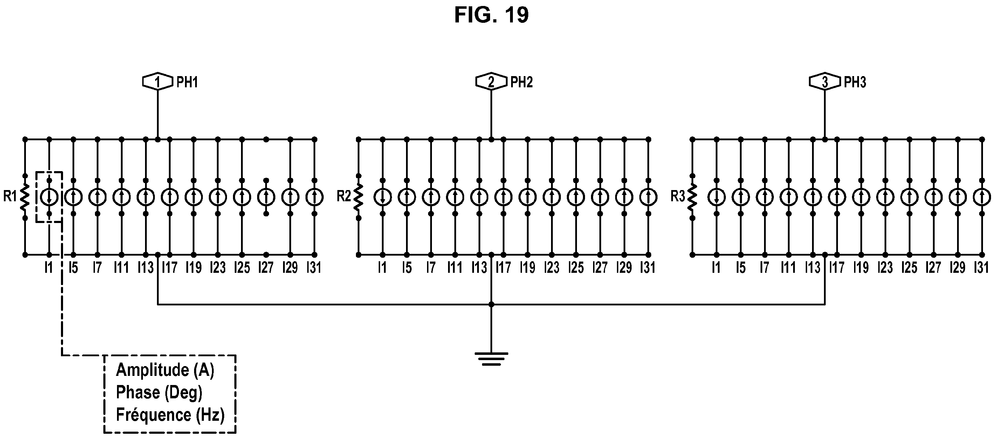

La Fig. 19 montre les sources des courants triphasés, qui modélisent la consommation globale d'énergie de la ligne de production de l'usine étudiée : le courant fondamental de la phase Ph1 est de 578 A, avec un facteur de puissance de FP= 0.76, en retard.

Le sens de passage des courants est adopté suivant la convention du sens du transit des puissances dans un réseau électrique : les courants harmoniques sont perturbateurs, donc ils sont injectés par la charge dite polluante, alors que le courant fondamental est fourni par le réseau.

Il est à noter que nous pouvons remplacer les courant fondamentaux par une charge R-L triphasée ; les sources des courants fondamentaux I1 seront, dans ce cas, enlevées du modèle précédent.

Validation du modèle proposé

Afin de modéliser la ligne de production de l'usine de textile étudiée, nous effectuons des mesures électriques à l'entrée de la ligne de production, comme le montre la Fig. 18.

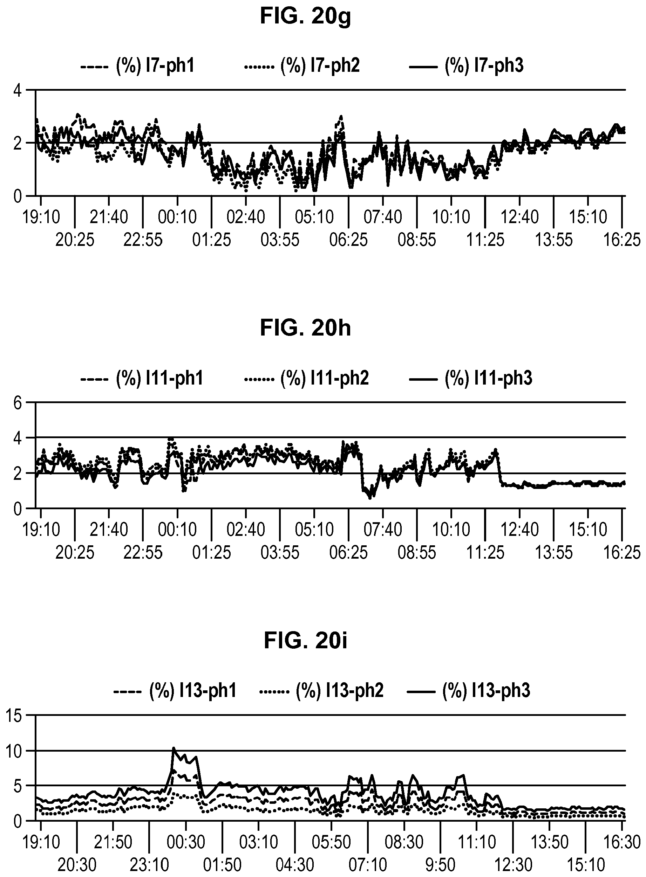

Les Figures 20 présentent ces mesures.

La figure 20a représente les tracés triphasés (Ph1, Ph2 et Ph3) des courants de la charge totale IL123 en A.

La figure 20b représente les tensions du réseau électrique Vs123 en V.

La figure 20c représente les facteurs de puissance PF123.

La figure 20d représente les distorsions harmoniques totales THD des courants de la charge totale THDi123 en %.

La figure 20e représente les distorsions harmoniques totales des tensions du réseau THDv123 en %.

Les figures 20f à 20i représentent respectivement les taux de distorsion harmonique individuelle pour les rangs 5, 7, 11 et 13 des courants des charges pour chacune des phases, les taux de distorsion étant exprimés en %.

Il est à noter que ces mesures ont été limitées par le rang harmonique maximal 50 (50$\times$ 50 Hz).

Enfin, les paramètres du réseau électrique, présenté en Fig. 17, sont quantifiés sur le Tableau II.

Tableau II. Fiche technique des composants électriques constituant le réseau traité

| Electrical Network | |
|---|---|
| es, Ssc, Rsc, Lsc | 20kV, 500MVA, 0.253$\Omega$, Ls=0.002425H |
| **Power Transformer** | |
| $S_n$, $\Delta P_{Cu}$, $\Delta Po$, $u_{cc}$, $I_o$ | 1MVA, 10.5kW, 1.7kW, 6%, 1.3% |
| **Electrical Cable** | |
| 3$\times$300 mm2, Len=20 m | Xcable=0.16$\Omega$/km, Rcable=0.059 $\Omega$/km |

En se basant sur les mesures présentées en figures 20a à 20i, nous choisissons l'instant où la distorsion harmonique de tension est la plus élevée ; il s'agit de l'instant (22h:05:00). L'état du réseau électrique, à cet instant, est regroupé dans le Tableau III.

Tableau III. Etat du réseau électrique à l'instant choisi

|  | DATE | Temps | Hz |
|---|---|---|---|
|  | 03/10/2009 | 22:05:00 | 49.98 |
|  | Ph 1 | Ph 2 | Ph 3 |
| $V_s$ (V) | 224.5 | 223.8 | 224.2 |
| $I_L$ (A) | 522.19 | 518.3 | 507.1 |
| $P_{Load}$ (W) | 114379,2 | 114054,2 | 110071,88 |
| $Q_{Load}$ (VAR) | 18812,18 | 15860,68 | 24532,81 |
| $S_{Load}$ (VA) | 116769,1 | 115968,4 | 113611,6 |
| PF | 0,97 | 0,98 | 0,96 |
| THD-$V_s$ (%) | 6,7 | 6,2 | 6,8 |
| THD-$I_L$ (%) | 11,6 | 10,7 | 12 |
| Ih5 (%) | 11 | 10,4 | 11,5 |
| Ih7 (%) | 2,8 | 1,7 | 2,4 |
| Ih11 (%) | 1,7 | 1,2 | 1,4 |
| Ih13 (%) | 1,4 | 0,9 | 1,1 |
| Ih17 (%) | 1 | 0.5 | 1.1 |
| Ih19 (%) | 0.9 | 0 | 0.7 |

Dans le Tableau III, les grandeurs $P_{Load}$, $Q_{Load}$, $S_{Load}$, respectivement sont les puissances active, réactive et apparente de la charge globale de la ligne de production.

En se basant sur les mesures réelles ainsi que les fiches techniques présentées respectivement via la Fig.20 et le Tableau II, des simulations, dans les domaines temporel et fréquentiel, ont été effectuées.

Les Figures 21a à 21g représentent les valeurs triphasées suivantes :

- la figure 21a représente les courants et les harmoniques de la charge totale sur la phase ph1 (IL1= 520.7841 A),
- La figure 21b représente les courants et les harmoniques de la charge totale sur la phase ph2 (IL2= 518.38 A),
- la figure 21c représente les courants et les harmoniques de la charge totale sur la phase ph3 (IL3= 507.13 A),
- la figure 21d représente les tensions simples du réseau (Vs1= 223.9 V, Vs2= 223.07 V, Vs3= 223.68 V),
- la figure 21e représente les facteurs de puissance (PF1=0.967, PF2= 0.978, PF3= 0.959),
- la figure 21f représente les taux de distorsion harmonique sur les différentes phases, et notamment le THD-V (THD-Vs1= 6.46%, THD-Vs2= 5.9%, THD-Vs3= 6.65%), ainsi que le THD-I (THD-I1= 11.65%, THD-I2= 10.76%, THD-I3= 11.95%).

Les figures 21a à 21c permettent d'estimer le taux de distorsion individuelle des courants des harmoniques de la charge totale : I5-ph1,2,3= (11.02 %, 10.42, 11.51%), I7-ph1,2,3= (2.72%, 1.78%, 2.36%), I11-ph1,2,3= (1.71%, 1.27%, 1.36%), I13-ph1,2,3= (1.5%, 1.08%, 1.17%), I17-ph1,2,3= (1.13%, 0.61%, 1.17%), I19-ph1,2,3= (0.94%, 0%, 0.72%).

En comparant les résultats de simulation avec les mesures présentées dans la Fig. 20 et le Tableau. III, il est observé que toutes les quantités (réelles et mesurées) sont presque identiques, avec une erreur maximale de 3%.

Ces résultats valident les modèles proposés et plus particulièrement celui des charges non linéaires (des machines commandées par des convertisseurs de puissance, tels que des onduleurs, des redresseurs, etc.). A partir de ces résultats, nous pouvons considérer que les résultats qui vont suivre sont valides aussi.

**Résultat des simulations du Filtre actif installé dans le réseau de l' usine étudiée**

**Contrôleurs SMCs de premier ordre**

Dans cette partie, nous allons valider l'emploi du filtre actif associé au filtre LCL avec les algorithmes de contrôle, le SMC classique, le SMC avec une fonction sigmoïde ainsi que le SMC avec la méthode AIRD.

La fiche technique des composants constituant le filtre actif, est présentée via le Tableau IV.

TABLEAU IV. FICHE TECHNIQUE DU FILTRE ACTIF PARALLELE

| Filtre actif parallèle | |
| --- | --- |
| Filtre de sortie LCL | $L_{f1}$=90 µH, $R_{f1}$= 5 mΩ<br>$L_{f2}$=100 µH, $R_{f2}$= 5 mΩ<br>$C_f$= 130 µF, |
| Condensateur de stockage | C= 0.6 mF, $V_{dc}$=840 V |
| Fréquence de coupure du LCL | 2000 Hz |
| Fréquence de commutation de la MLI | 16 kHz |

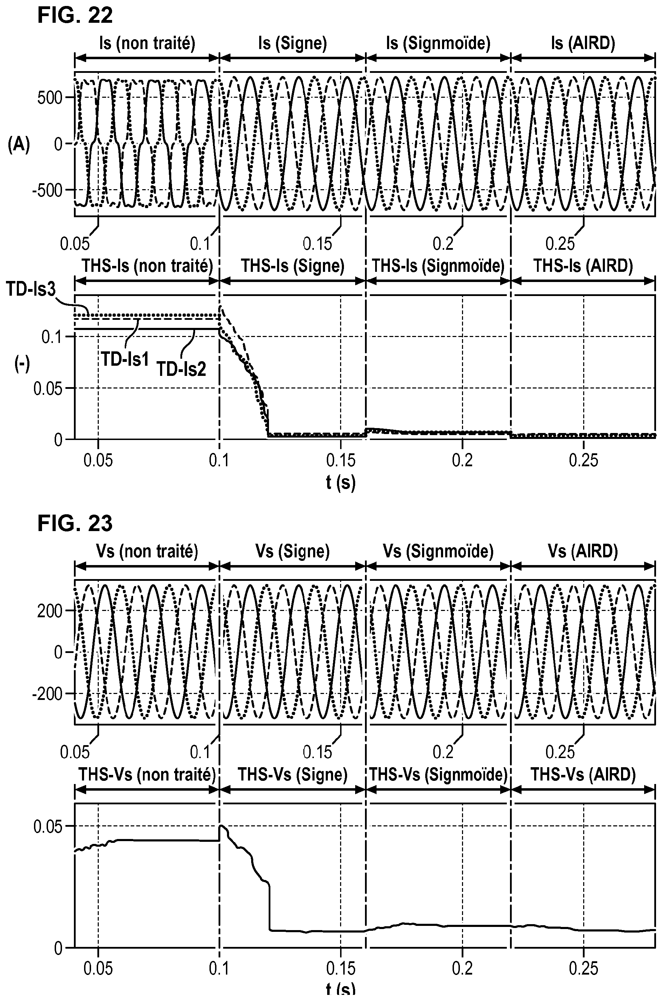

La Fig. 22 présente la simulation (avant et après filtrage) des courants triphasés du côté réseau $I_{s123}$, ainsi que le THD du courant de la phase 1 ($THD$ - $I_s$).

Le filtre actif est amorcé après 5 périodes du secteur (jusqu'à 0.1 s) ; il va fonctionner, d'abord pendant 3 périodes (jusqu'à 0.16 s) avec le SMC classique (à commande discontinue).

Après, pendant 3 périodes (jusqu'à 0.22 s), il va continuer avec le SMC à commande continue (associée à une fonction sigmoïde).

Enfin après 0.22 s et jusqu'à la fin de la simulation, (0.28 s), le filtre actif va être commandé par une commande continue issue du SMC avec l'algorithme AIRD.

On peut déduire de la figure 22 que malgré les courants et les tensions déséquilibrés du réseau, la distorsion harmonique de tension significative du site étudié ainsi que la présence du filtre LCL, toutes les méthodes de contrôle assurent une poursuite quasi-parfaite, reflétée, après filtrage, par une forme sinusoïdale du courant du côté réseau électrique.

Ceci peut être observé, par des THD négligeables des courants triphasés après filtrage.

En effet, le ($THD$ - $I_s$) après filtrage est de : 0.4%, 0.8%, 0.5%, ces valeurs étant les plus élevées respectivement des méthodes de contrôle, SMC à commande discontinue (classique), SMC à commande continue (avec une fonction sigmoïde) et SMC à commande continue (avec la méthode AIRD). Il est à noter que les THDs des courants avant l'activation du filtre actif était respectivement pour les trois phases (11.6%, 10.7% et 12%).

La réduction significative du THD du courant conduit, comme le montre la Fig. 23, à une réduction très prononcée du THD de la tension au point de raccordement ; les ($THD$ - $V_s$) passent des (6.7%,6.2% et 6.8%) avant filtrage aux (0.28%, 0.5% et 0.3%) après filtrage, respectivement pour les méthodes de contrôle, SMC discontinu (classique), SMC continu (avec une fonction Sigmoïde) et SMC continu (avec la méthode AIRD).

Il est à noter que les normes internationales (ex : IEEE STD 519-2014) imposent un THD maximal de tension entre 5%- 8% dans les zones industrielles, alors que les recommandations d'EDF exigent un taux total de la distorsion harmonique de tension inférieur à 1.6% pour chaque récepteur.

**Contrôleurs SMCs d'ordre supérieur**

Dans cette partie, nous allons valider l'emploi du filtre actif associé au filtre LCL avec les algorithmes de contrôle, C-HOSM puis 2-SMC Twisting et finalement 2-SMC Super-Twisting.

La fiche technique des composants constituant le filtre actif, est présentée via le Tableau IV précédent.

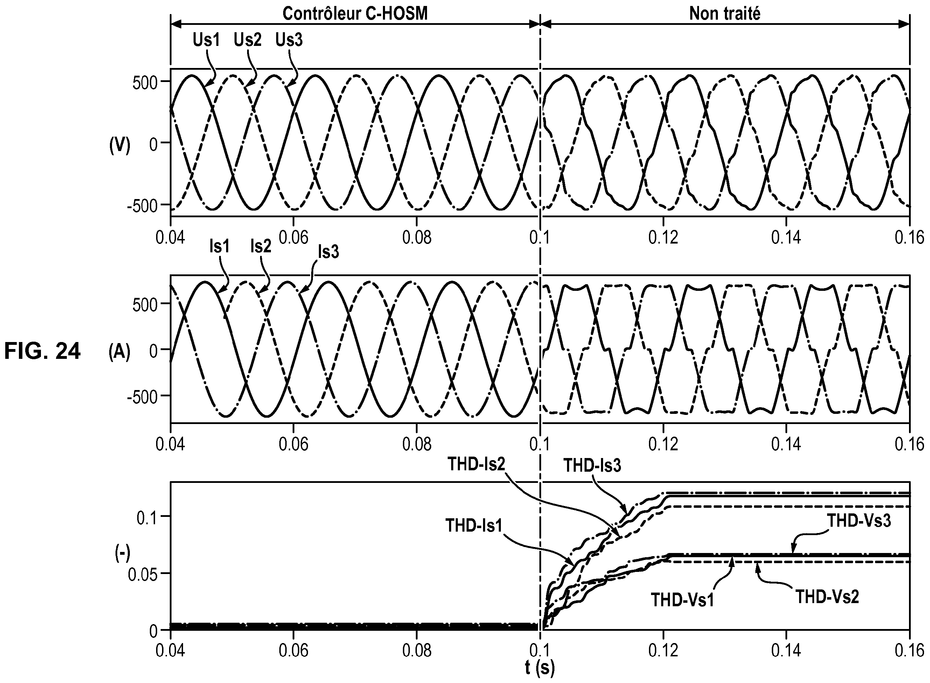

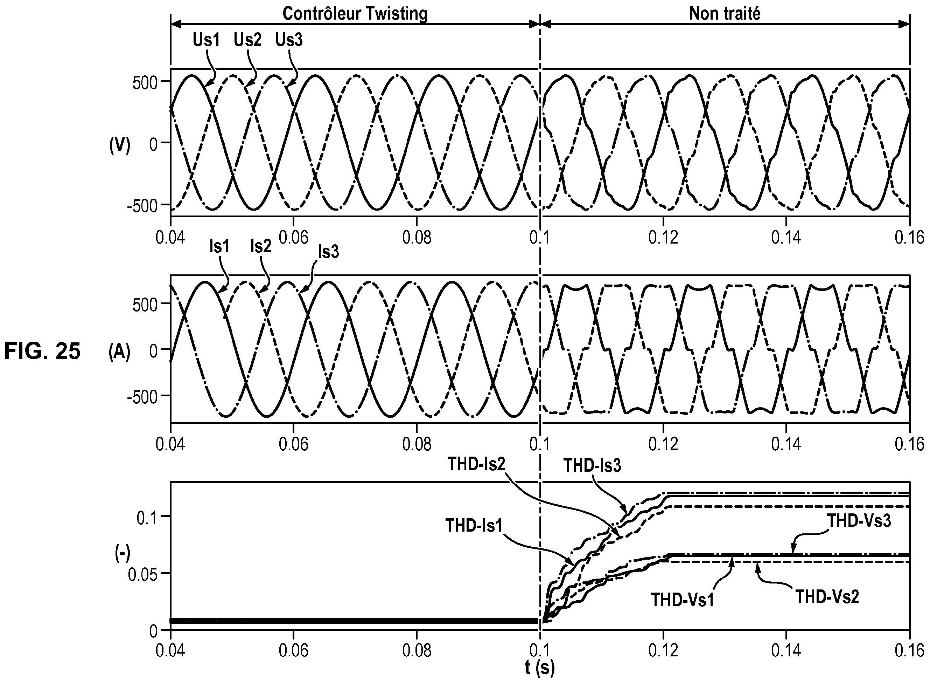

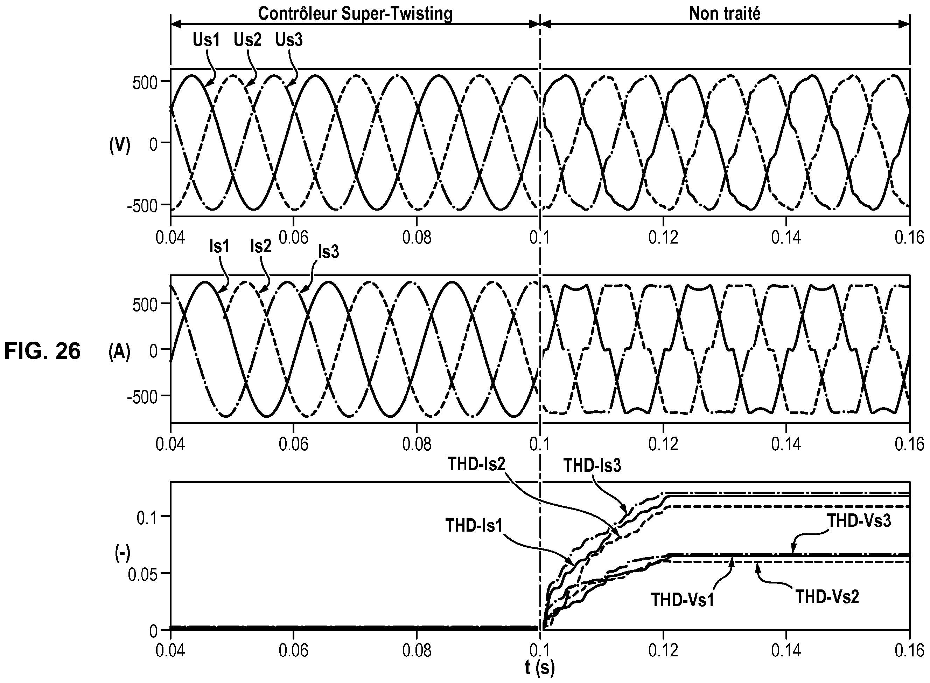

Les Figs 24, 25, 26 présentent la simulation (avant et après filtrage) des tensions triphasées composées aux points de raccordement Us123, des courants triphasés du côté réseau $I_{s123}$, le THD triphasé du courant ($THD$ - $I_s$) ainsi que celui de la tension ($THD$ - $V_s$) superposés, en utilisant respectivement les algorithme de contrôle C-HOSM puis 2-SMC Twisting et finalement 2-SMC Super-Twisting, sachant que dans les trois cas, le filtre actif est amorcé après cinq périodes du secteur (jusqu'à 0.1 s).

On peut déduire de ces figures que, malgré une tension détériorée et déséquilibrée du réseau, ainsi que la présence du filtre LCL, les trois méthodes de contrôle assurent une poursuite quasi-parfaite, reflétée, après filtrage, par une forme sinusoïdale du courant du côté réseau électrique.

En effet, le ($THD$ - $I_s$) après filtrage pour les trois phases sont : (0.92%, 0.65%, 0.75%), (0.55%, 0.35%, 0.42%) et (0.31%, 0.15%, 0.23%) pour respectivement les algorithmes de contrôle C-HOSM, 2-SMC Twisting et 2-SMC Super-Twisting. Il est à noter que les THDs des courants avant l'activation du filtre actif était respectivement pour les trois phases (11.6%, 10.7% et 12%).

Ces très bons résultats de filtrage de courant sont traduits par une baisse significative du THD triphasé de tension ($THD$ - $V_s$) de (6.7%,6.2% et 6.8%) respectivement pour les trois phases avant filtrage à (0.59%, 0.55%, 0.66%), (0.23%, 0.16%, 0.25%), (0.2%, 0.15%, 0.22%) après filtrage, respectivement en employant les algorithmes de contrôle C-HOSM, 2-SMC Twisting et 2-SMC Super-Twisting.

Il est à noter que les trois algorithmes de contrôle proposés préservent la robustesse et la très bonne qualité de filtrage assurés par le SMC classique discontinu, tout en garantissant, via des commandes continues, un THD de tension bien inférieur au 1,6% requis par la norme de recommandation la plus exigeante (norme EDF). Ce résultat très important est atteint malgré les courants et les tensions déséquilibrés du réseau, la distorsion harmonique de tension significative du site étudié ainsi que la présence du filtre LCL.

Il est à noter que les normes internationales (par exemple, IEEE STD 519-2014) imposent un THD maximal de tension entre 5%- 8% dans les zones industrielles, alors que les recommandations d'EDF exigent un taux total de la distorsion harmonique de tension inférieur à 1.6% pour chaque récepteur.

Calcul et intégration du point de puissance maximale dans le schéma contrôle-commande du filtre actif :

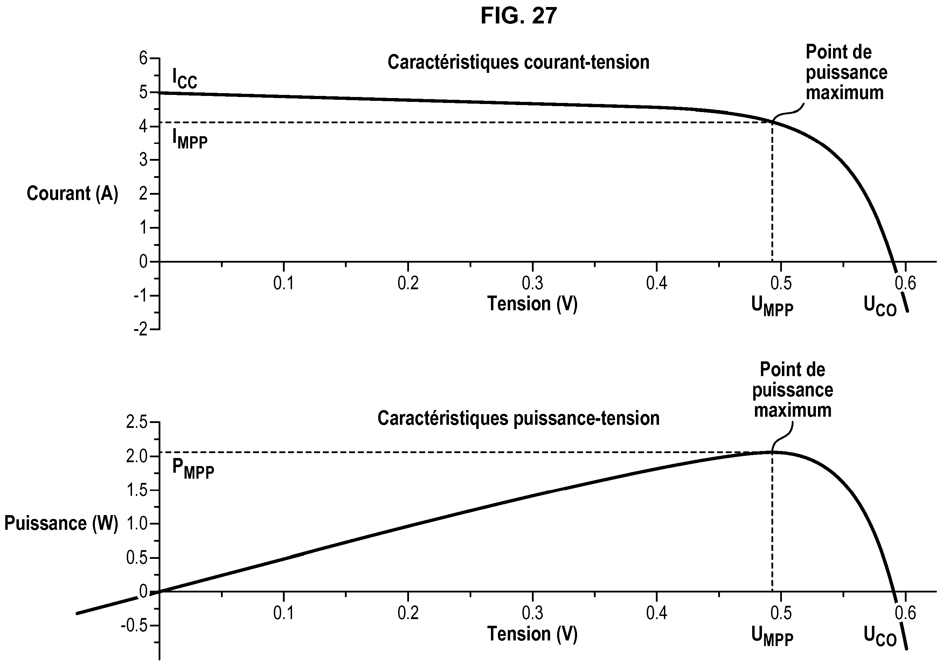

L'objectif ici est de poursuivre le point de puissance maximale d'un générateur photovoltaïque, afin d'augmenter le rendement de ce système de génération. La Fig. 27 montre les quatre paramètres caractérisant le fonctionnement d'un panneau/générateur PV ; il s'agit du courant de court-circuit $I_{cc}$, de la tension à vide $V_{co}$, du courant de la puissance maximale $I_{mpp}$ et de la tension de la puissance maximale $V_{mpp}$ (par conséquent la puissance maximale disponible au sein du générateur PV : $P_{mpp}= V_{mpp} \times I_{mpp}$).

Dans cette invention, l'algorithme employé pour l'extraction du point de puissance maximale est l'algorithme P&O (en anglais *« Perturb and Observe »),* qui se base sur la perturbation et l'observation de la tension du générateur PV, jusqu'à l'obtention de la tension maximale qui correspondra au point MPPT.

Boucle de régulation de la tension continue (poursuite de la puissance maximale) :

Nous allons profiter de la boucle de régulation de la tension du condensateur, du côté continu de l'onduleur, pour assurer la poursuite de la puissance maximale du générateur PV. En effet, dans le cas d'un filtre actif parallèle qui n'est pas connecté à un générateur PV, le condensateur de stockage d'énergie se régule (se charge avec un maintien d'une tension constante) via le réseau électrique, à travers l'onduleur, pour compenser les pertes par effet Joule des composants d'électronique de puissance de l'onduleur et du filtre de sortie LCL. La tension du condensateur $V_{dc}$ doit poursuivre une tension de référence $V_{dc-ref}$ dont l'amplitude est choisie pour renforcer la dynamique du système, tout en respectant le dimensionnement des composants électriques du filtre actif parallèle.

Dans cette invention, la même boucle de régulation de la tension du condensateur est employée pour assurer la poursuite du point de puissance maximale en se basant sur la poursuite de la puissance $P_{MPP}$ et ne pas du courant $I_{MPP}$. En effet, contrairement aux méthodes de régulation du condensateur de l'onduleur, qui adoptent la poursuite du courant $I_{MPP}$ dans le cas de la présence d'un système de génération d'énergie renouvelable, cette méthode va extraire directement la puissance maximale du générateur PV.

Modélisation de la boucle de régulation de la tension du condensateur :

La relation entre la puissance active produite par le générateur PV et la tension aux bornes du condensateur peut être écrite sous la forme :

$$P_{pv} = \frac{d}{dt}\left(\frac{1}{2}\, C_{dc}\, V_{dc}\right)$$

(Maths 30)

La relation (Maths 30) étant non linéaire, et pour des petites variations de la tension $V_{dc}$ autour de sa référence $V_{dc-ref}$, elle peut être linéarisée via la relation suivante :

$$P_{pv} = C_{dc}\, V_{dc-ref}\, \frac{d}{dt}(V_{dc})$$

(Maths 31)

Il est à noter que pour: $V_{dc-ref} = V_{MPP}$ (délivrée par l'algorithme de P&O de l'unité 25-B), on aura $P_{pv} = P_{MPP}$. Par conséquent, la tension du condensateur calculée dans le domaine de Lablace devient :

$$V_{dc}(s)\big|_{V_{dc}=V_{MPP}} = \frac{P_{MPP}(s)}{V_{dc-ref}\, C_{dc}\, s}$$

(Maths 32)

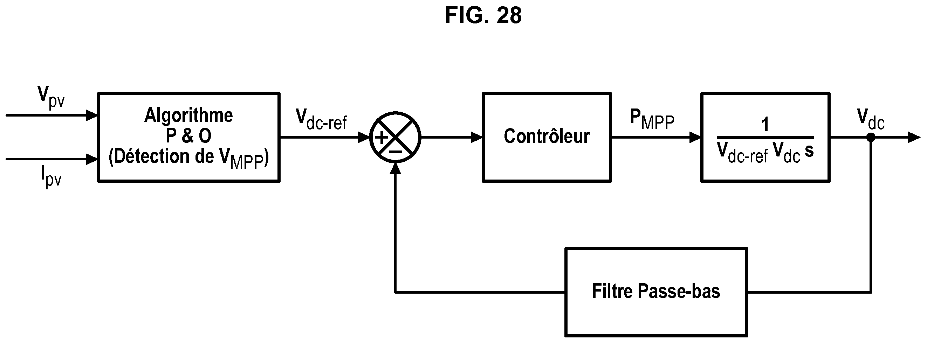

A partir des relations (Maths 31) et (Maths 32) et en employant un régulateur linéaire (Proportionnel - Intégral) ou autre, la boucle de régulation de la tension continue $V_{dc}$ et par conséquent la puissance $P_{MPP}$ peuvent être présentées via la Fig. 28. Le Choix des paramètres de ce contrôleur assure une poursuite rapide et précise de la puissance maximale du générateur PV. Il est à noter que le signal mesuré de la tension $V_{dc}$ sera filtré des fluctuations à 300 Hz ou autres, via un filtre passe-bas du deuxième ordre (*voir Fig.28*).

Intégration de la boucle de poursuite de la puissance maximale au sein d'un filtre actif :

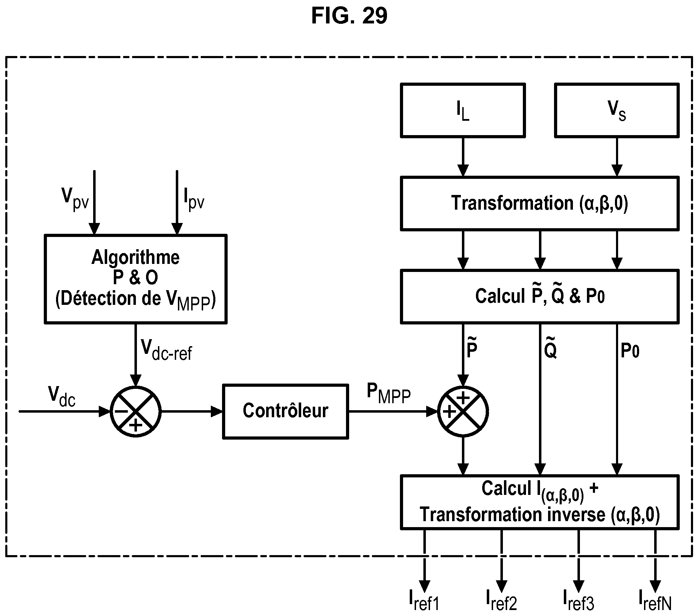

L'avantage de la poursuite de $P_{MPP}$ (par rapport à $I_{MPP}$) est de pouvoir intégrer (avec le moins d'opérations de calculs possibles) la boucle de poursuite de $P_{MPP}$ dans l'algorithme d'identification des courants perturbateurs de la partie contrôle-commande du filtre actif parallèle. Dans ce cas, la tension de référence $V_{dc-ref}$ de l'algorithme d'identification/-régulation de la tension du condensateur du filtre actif, est remplacée par la tension de la puissance maximale $V_{MPP}$ ($V_{dc-ref}$ = $V_{MPP}$) issue de l'algorithme (P & O) comme le montre la Fig. 29. De cette figure 29, la sortie du contrôleur PI étant la puissance maximale $P_{MPP}$ du générateur PV, ce signal est rajouté à la puissance perturbatrice active $\tilde{P}$ délivrée par l'algorithme d'identification des courants perturbateurs 25-A ; les puissances instantanées perturbatrices (réactive $\tilde{Q}$ et homopolaire $P_0$) sont aussi calculées. En effet, cet algorithme assure, dans un premier temps, le calcul des puissances instantanées perturbatrices, causées par les courants perturbateurs non actifs (harmoniques, réactif et déséquilibré ou autre) présents dans le courant de la charge $I_L$, dans le repère $\alpha$, $\beta$ et 0. Le calcul des courants de référence $I_{ref123}$ se fait via un passage inverse, d'abord calculé dans le même repère $\alpha$, $\beta$ et 0 puis dans le repère triphasé. Ces courants de références du filtre actif ($I_{ref123}$) contiennent alors les courants perturbateurs ainsi que le courant maximal du générateur PV : $I_{MPP}$. Il est à noter qu'en se basant sur une régulation de tension $V_{dc}$ dont la sortie du régulateur (PI par exemple) est la puissance maximale, nous assurons que la méthode des puissances instantanées, employée dans cette invention pour identifier les courants perturbateurs, reste inchangée tout en garantissant l'identification du courant maximal du générateur PV : $I_{MPP}$ en amplitude, avec angle égal à celui de la composante directe de tension déjà extraite via la PLL 26 (voir Fig. 2). Le courant $I_{MPP}$ aura, dans ce cas, systématiquement une phase égale à cet angle sans passer par la boucle de la PLL, car la tension employée dans la méthode d'identification des courants perturbateurs non actifs 25-A est celle de la composante directe. Donc pas de méthode d'identification spéciale, ni en amplitude ni en phase/angle, dédiée à l'extraction du courant $I_{MPP}$, comme habituellement adopté dans l'état de l'art.

En effet, En plus de toute la partie dédiée à l'identification de courants perturbateurs qui sera à ajouter, les algorithmes qui adoptent la poursuite du courant $I_{MPP}$, à la place de $P_{MPP}$, impliquerait la multiplication de $I_{MPP}$ par trois fonctions *sinus* (déphasées d'un tiers de période) d'amplitude unitaire et d'angle/phase issu de la PLL (angle de la composante directe de tension du réseau électrique $V_s$). Cela demande plus de calculs et plus de précisions de la part de la PLL.

## Revendications

**1.** Procédé de modélisation du fonctionnement électrique d'un site industriel qui comporte une pluralité de machines commandées à partir de convertisseurs électroniques de puissance et réparties sur une ou plusieurs lignes de production, Les machines commandées étant modélisées par des sources de courant, représentant la consommation totale (actif, réactif et harmoniques) des machines commandées, mesurée par un analyseur d'énergie installé à l'entrée de chaque ligne de production, **caractérisé en ce que** les étapes du procédé sont les suivantes :

1- installer un seul appareil de mesures qui est un analyseur de spectre/analyseur de la qualité d'énergie, à l'entrée de chaque ligne de production du site industriel étudié, chaque ligne de production comprenant plusieurs machines commandées, l'appareil de mesure fournissant les grandeurs électriques du réseau : les puissances active, réactive et apparente, le facteur de puissance, les composantes fondamentales du courant et de la tension, le taux total de distorsion harmonique, THD, du courant et de la tension, le taux individuel de distorsion harmonique des courants et des tensions,

2- modéliser les puissances active et réactive par une branche R-L parallèle ou par une seule source de courant qui représente le courant fondamental, avec un angle correspondant au facteur de puissance ; le sens de passage du courant va du réseau électrique (1) vers une charge (2) ,

3- modéliser le taux individuel de distorsion harmonique des courants et des tensions par des sources de courant ; chacune correspondant à un rang harmonique, le sens de passage des courants harmoniques allant de la charge (2) vers le réseau électrique (1),

4- connecter toutes ces sources de courant modélisées lors des étapes 2 et 3 à une ou plusieurs résistances de valeurs choisies pour forcer le passage des courants dans un seul sens :

- du réseau électrique (1) vers les charges (2) pour le courant fondamental, et
- des charges (2) vers le réseau électrique (1) pour les courants harmoniques, et

5- obtenir la modélisation du fonctionnement électrique du site industriel donné (1) en sources de courant et résistances.

2. Procédé selon la revendication 1, dans lequel le réseau a plusieurs niveaux de tension, comprend plusieurs transformateurs de puissance avec câbles et lignes électriques, ainsi que des dizaines de machines commandées et associées à plusieurs filtres actifs de dépollution.

3. Procédé selon l'une des revendications 1 à 2, dans lequel les machines sont commandées par des convertisseurs de puissance, tels que des onduleurs, des redresseurs.

4. Procédé selon l'une des revendications 1 à 3, dans lequel le site industriel donné étudié présente :

- des charges (2) non-linéaires/linéaires,
- au moins une unité de puissance à génération d'énergie renouvelable (100), et

- un dispositif de compensation (7) de courant du type filtre actif parallèle à génération d'énergie renouvelable, apte à être connecté :

> à son entrée, en aval d'au moins une unité de puissance à génération d'énergie renouvelable (100) couplée à un élément de stockage d'énergie (3), et
> en parallèle, à sa sortie, en amont à un point de raccordement (C) entre d'une part un réseau électrique donné (1), et d'autre part des charges (2) électriques non linéaires et linéaires,

le dispositif de compensation de courant (7) présentant :

- une unité de conversion (8) de puissance, comportant au moins un onduleur de tension (9) générant un courant alternatif, avec une bande de fréquence allant de 50 à 2500Hz, couvrant :

a) toute la bande de fréquences du courant perturbateur non actif qui présente : tout ou une partie des harmoniques, et à la fréquence fondamentale tout ou une partie de la puissance réactive et/ou un déséquilibré,
b) ainsi que le courant actif maximal généré par l'unité de puissance à génération d'énergie renouvelable (100);

- une unité de filtrage (10) de sortie, comportant un filtre (11) de type LCL pour chacune des phases et un neutre, et connecté : d'une part en aval de l'onduleur (9) de tension, et d'autre part en parallèle au point de raccordement (C) entre le réseau (1) électrique donné et les charges (2) électriques non linéaires et linéaires, le filtre (11) de sortie LCL étant dimensionné pour bloquer les composantes harmoniques dues à la commutation de l'onduleur (9) ;
- une unité de contrôle-commande (12) comprenant une unité de calcul (25) des courants de référence, les courants de référence comprenant :

i. au moins un courant perturbateur non actif destiné à être injecté au point de raccordement en opposition de phase pour annuler, du côté réseau électrique (1), les perturbations du signal générées par les charges non linéaires et linéaires (2),
présentant tout ou une partie des harmoniques, et à la fréquence fondamentale tout ou une partie du courant réactif et/ou un déséquilibré,
ii. au moins un courant actif de recharge de l'élément de stockage (3),
iii. au moins un courant actif correspondant à un point de puissance maximale de l'unité de puissance à génération d'énergie renouvelable (100),

l'unité de contrôle-commande (12) comprenant également :

un dispositif de pilotage de commutation (21) qui commande la commutation de l'onduleur (9) via un contrôleur non linéaire (23) par mode glissant continu, adapté au filtre (11) de type LCL qui assure en boucle fermée le contrôle de toute la bande de fréquence de 50 à 2500 Hz pour l'injection du courant perturbateur non actif et du courant actif,

en fonction de l'identification des courants de référence par l'unité de calcul (25) ;

la commande de commutation de l'onduleur (9) étant réalisée de manière à laisser passer à travers l'unité de filtrage (10) de sortie au point de raccordement (C ) :

- une partie ou la totalité des courants perturbateurs non actifs injectés en opposition de phase comprenant des courants harmoniques, ainsi que des courants réactif et déséquilibré à la fréquence fondamentale, dans les charges (2) électriques non linéaires et linéaires,

pour satisfaire la demande de consommation d'énergie non active des charges (2) électriques non linéaires et linéaires, tout en dépolluant le réseau (1) électrique de ces courants perturbateurs non actifs ;

- un courant actif correspondant à un point de puissance maximale disponible au sein de l'unité de puissance à génération d'énergie renouvelable (100), pour satisfaire la demande de consommation d'énergie active des charges électriques (2) non linéaires et linéaires, tout en assurant la recharge de l'élément de stockage (3).

5. Procédé selon la revendication 4, dans lequel la commande de commutation de l'onduleur (9) est réalisée de manière à laisser passer aussi à travers l'unité de filtrage (10) de sortie :

une partie du courant actif, dans le réseau (1) électrique donné dépourvu alors des courants perturbateurs non actifs, lorsque la production de l'unité de puissance à génération d'énergie renouvelable (100) est supérieure à la puissance consommée par les charges (2) électriques non linéaires et linéaires.

6. Procédé selon l'une des revendications 4 ou 5, dans lequel l'unité de puissance à génération d'énergie renouvelable (100) est couplée sans hacheur ni autres dispositifs d'électronique de puissance à l'élément de stockage d'énergie (3).

7. Procédé selon l'une quelconque des revendications 4 à 6, dans lequel l'unité de contrôle-commande (12) comporte :

- un hacheur configuré pour maintenir une tension continue constante prédéfinie aux bornes de l'élément de stockage d'énergie (3) de l'onduleur (9), indépendamment du niveau de tension de la source (100) d'énergie renouvelable pour assurer un filtrage harmonique inchangé.
- un double hacheur pour le cas d'un réseau électrique îloté.

8. Procédé selon l'une quelconque des revendications 4 à 7, dans lequel l'unité de contrôle-commande (12) comporte un contrôleur par mode glissant continu de $1^{er}$ ordre ou d'un ordre supérieur, présentant une surface de glissement adaptée de $1^{er}$ ordre, $2^{ème}$ ordre, de $3^{ème}$ ordre ou autres.

9. Procédé selon l'une quelconque des revendications 4 à 8, dans lequel l'unité de contrôle-commande (12) comporte au moins l'un des deux contrôleurs à mode glissant suivants :

- l'un comportant une fonction Signe approximée en fonction Sigmoïde avec une surface de glissement adaptée de $2^{ème}$ ordre ; et
- l'autre est basé sur une méthode d'augmentation artificielle du degré relatif comportant une fonction Signe avec une surface de glissement adaptée de $3^{ème}$ ordre, suivie par un intégrateur.

10. Procédé selon l'une quelconque des revendications 4 à 9, dans lequel l'unité de contrôle-commande (12) comporte au moins un des trois contrôleurs à mode glissant d'ordre supérieur suivants :

- le premier se base sur un contrôleur par mode glissant d'ordre supérieur continu C-HOSM comportant trois fonctions Signe, avec une surface de glissement adaptée de $1^{er}$ ordre,
- le deuxième emploie un contrôleur 2-SMC Twisting avec augmentation artificielle du degré relatif, comportant deux fonctions Signe, avec une surface de glissement adaptée de $2^{ème}$ ordre, suivie par un intégrateur,
- le troisième est un contrôleur 2-SMC Super-Twisting comportant une fonction Signe, avec une surface de glissement adaptée de $2^{ème}$ ordre, sans augmentation artificielle du degré relatif.

11. Procédé selon l'une quelconque des revendications 4 à 10, dans lequel l'unité de puissance à génération d'énergie renouvelable (100) est :

- choisie parmi la liste suivante : un ou plusieurs panneaux photovoltaïques, éolienne(s), pile(s) à combustible ou autres,
- couplée, directement à un élément de stockage capacitif (3) en cas d'une production continue, ou via un redresseur de puissance alternatif/continu en cas d'une production alternative.

12. Procédé selon l'une quelconque des revendications 4 à 11, dans lequel le réseau est choisi parmi la liste suivante : le réseau électrique principal, un micro-réseau électrique local îloté ou raccordé au réseau électrique principal, ou un réseau électrique embarqué.

13. Procédé selon l'une quelconque des revendications 4 à 11, comportant en outre un bâtiment intelligent (27), et dans lequel l'unité de contrôle-commande (12) est connectée à une unité de gestion décentralisée (70) du bâtiment intelligent (27), l'unité de contrôle-commande (12) compare la puissance maximale disponible de l'unité de puissance à génération d'énergie renouvelable (100) avec la charge totale du bâtiment intelligent (27).

14. Procédé selon la revendication 13, dans lequel l'unité de contrôle-commande (12) est configurée pour optimiser la consommation des différents appareils fonctionnant au sein de ce bâtiment intelligent (27) en répartissant les charges correspondant aux charges non-linéaires/linéaires selon au moins deux modes de fonctionnement :

- un premier mode de répartition dit mode de consommation adaptée dans lequel l'unité de contrôle-commande (12) pilote l'unité de gestion décentralisée (70) du bâtiment intelligent (27) de manière à adapter la consommation du bâtiment intelligent avec la production de l'unité de puissance à génération d'énergie renouvelable (100), pour que la courbe de charge totale du bâtiment intelligent présente un facteur de simultanéité maximal correspondant au fonctionnement de toutes les charges du bâtiment en même temps, dans la limite de l'énergie renouvelable produite,
- en cas d'insuffisance de production d'énergie renouvelable, un deuxième mode de répartition dit mode de consommation modulée dans lequel l'unité de contrôle-commande (12) pilote l'unité de gestion décentralisée (70) du bâtiment intelligent (27) de manière à moduler la consommation des appareils du bâtiment intelligent (27) pour tendre à une courbe de charge totale du bâtiment intelligent sensiblement constante en fonction du temps,
- dans le même cas de figure et si le réseau électrique (1) est intelligent, un troisième mode de répartition adapté à la production du réseau électrique (1) intelligent est envisageable.

15. Procédé selon l'une quelconque des revendications 10 à 14, comprenant en outre :

- un réseau local (28) connecté au réseau (1), et
- des unités de production de puissance à origine conventionnelle (fossile) (80), et
- un système de gestion semi-décentralisée (29), et
- une pluralité d'unités de puissance à génération d'énergie renouvelable (100) connectées au réseau local (28), par un dispositif de compensation (7), chaque dispositif de compensation (7) étant connecté au système de gestion semi-décentralisée (29) auquel il communique des informations concernant la production d'énergie, actuelle et à venir, de chacune des unités de puissance à génération d'énergie renouvelable (100), et
- une pluralité de postes de consommation correspondant aux charges (2) non linéaires et linéaires, chacun des postes de consommation étant connecté au réseau local (28) et équipé par un dispositif de compensation (7), connecté au système de gestion semi-décentralisée (29) auquel il communique des informations concernant la consommation instantanée et la consommation à venir en fonction du fonctionnement programmé des postes de consommation,
- une pluralité d'unités de puissance à génération d'énergie renouvelable (100) et de charges linéaires et non linéaires (2) des bâtiments intelligents (27) à énergie positive, qui assurent l'autoconsommation et où le surplus éventuel d'énergie est stocké ou échangé avec les autres bâtiments intelligents ou délivré au réseau local (28) via l'unité de contrôle commande (12) du dispositif de compensation (7), en coordination avec le système de gestion semi-décentralisée (29) en cas d'échange avec le réseau local (28).

**Patentansprüche**

1. Verfahren zur Modellierung des elektrischen Betriebs eines Industriestandorts, der eine Vielzahl von Maschinen aufweist, die anhand elektronischer Leistungswandler gesteuert werden und die auf eine oder mehrere Produktionslinien verteilt sind, wobei die gesteuerten Maschinen durch Stromquellen modelliert werden, die den Gesamtverbrauch (Wirkleistung, Blindleistung und Oberschwingungen) der gesteuerten Maschinen darstellen, gemessen von einem am Eingang jeder Produktionslinie installierten Energieanalysator, **dadurch gekennzeichnet, dass** die Schritte des Verfahrens wie folgt sind:

1- Installieren eines einzigen Messgeräts, das ein Spektralanalysator/Energiequalitätsanalysator ist, am Eingang jeder Produktionslinie des untersuchten Industriestandorts, wobei jede Produktionslinie mehrere gesteuerte Maschinen umfasst, wobei das Messgerät die elektrischen Größen des Netzes bereitstellt: die Wirk-, Blind- und Scheinleistung, den Leistungsfaktor, die Grundkomponenten von Strom und Spannung, den Gesamtgrad der harmonischen Verzerrung THD von Strom und Spannung, den individueller Grad der harmonischen Verzerrung der Ströme und der Spannungen,

2- Modellieren der Wirk- und Blindleistung durch einen parallelen R-L-Zweig oder durch eine einzige Stromquelle, die den Grundstrom darstellt, mit einem Winkel, der dem Leistungsfaktor entspricht; wobei die Fließrichtung des Stroms vom Stromnetz (1) zu einer Last (2) verläuft,

3- Modellieren des individuellen Grads der harmonischen Verzerrung der Ströme und der Spannungen durch Stromquellen; wobei jede einer Oberschwingungsstufe entspricht, wobei die Fließrichtung der Oberschwingungsströme von der Last (2) zum Stromnetz (1) verläuft,

4- Verbinden aller diese in den Schritten 2 und 3 modellierten Stromquellen mit einem oder mehreren Widerständen mit ausgewählten Werten, um den Stromfluss in eine einzige Richtung zu erzwingen:

- vom Stromnetz (1) zu den Lasten (2) für den Grundstrom, und
- von den Lasten (2) zum Stromnetz (1) für die Oberschwingungsströme, und

5- Erhalten der Modellierung des elektrischen Betriebs des gegebenen Industriestandorts (1) hinsichtlich Stromquellen und Widerständen.

**2.** Verfahren nach Anspruch 1, wobei das Netz mehrere Spannungsebenen hat, mehrere Leistungstransformatoren mit Stromkabeln und -leitungen umfasst sowie Dutzende gesteuerte Maschinen, die mehreren aktiven Dekontaminierungsfiltern zugeordnet sind.

**3.** Verfahren nach einem der Ansprüche 1 bis 2, wobei die Maschinen von Leistungswandlern wie Wechselrichtern, Gleichrichtern gesteuert werden.

**4.** Verfahren nach einem der Ansprüche 1 bis 3, wobei der untersuchte gegebene Industriestandort aufweist:

- nichtlineare/lineare Lasten (2),
- mindestens eine Leistungseinheit zur Erzeugung erneuerbarer Energie (100), und
- eine Stromkompensationsvorrichtung (7) vom Typ aktiver Filter parallel zur Erzeugung erneuerbarer Energie, die imstande ist, verbunden zu werden:

➢ an ihrem Eingang, mindestens einer Leistungseinheit zur Erzeugung erneuerbarer Energie (100) nachgelagert, die mit einem Energiespeicherelement (3) verbunden ist, und
➢ parallel, an ihrem Ausgang, einem Anschlusspunkt (C) vorgelagert, zwischen einerseits einem gegebenen Stromnetz (1) und andererseits nichtlinearen und linearen elektrischen Lasten (2),

wobei die Stromkompensationsvorrichtung (7) aufweist:

- eine Leistungsumwandlungseinheit (8), die mindestens eine Spannungswechselrichter (9) aufweist, der einen Wechselstrom mit einem Frequenzband von 50 bis 2500 Hz erzeugt, das abdeckt:

a) das gesamte Frequenzband des nichtaktiven Störstroms, das aufweist: alle oder einen Teil der Oberschwingungen, und bei der Grundfrequenz die gesamte oder einen Teil der Blindleistung und/oder eine Unsymmetrie,
b) sowie den maximalen Wirkstrom, der von der Leistungseinheit zur Erzeugung erneuerbarer Energie (100) erzeugt wird;

- eine Ausgangsfiltereinheit (10), die einen Filter (11) vom Typ LCL für jede der Phasen und einen Neutralleiter aufweist, und verbunden ist mit: einerseits dem Spannungswechselrichter (9) nachgelagert und andererseits parallel zum Anschlusspunkt (C) zwischen dem gegebenen Stromnetz (1) und den nichtlinearen und linearen elektrischen Lasten (2), wobei der LCL-Ausgangsfilter (11) dimensioniert ist, um die durch die Umschaltung des Wechselrichters (9) verursachten Oberschwingungskomponenten zu blockieren;
- eine Steuer- und Regeleinheit (12), die eine Einheit zur Berechnung (25) der Referenzströme umfasst, wobei die Referenzströme umfassen:

i. mindestens einen nichtaktiven Störstrom, der dazu bestimmt ist, am Anschlusspunkt in Gegenphase eingespeist zu werden, um auf der Seite des Stromnetzes (1) die durch die nichtlinearen und linearen Lasten (2) erzeugten Signalstörungen aufzuheben,
die alle oder einen Teil der Oberschwingungen aufweisen, und bei der Grundfrequenz den gesamten oder einen Teil des Blindstroms und/oder eine Unsymmetrie,
ii. mindestens einen Wirkstrom zum Aufladen des Speicherelements (3),
iii. mindestens einen Wirkstrom, der einem Punkt maximaler Leistung der Leistungseinheit (100) zur Erzeugung erneuerbarer Energie entspricht,

wobei die Steuer- und Regeleinheit (12) ebenfalls umfasst:

eine Umschaltsteuervorrichtung (21), die das Umschalten des Wechselrichters (9) über einen nichtlinearen Regler (23) im kontinuierlichen Gleitmodus steuert, der an den Filter (11) vom Typ LCL angepasst ist, der in einem geschlossenen Regelkreis die Steuerung des gesamten Frequenzbandes von 50 bis 2500 Hz für die Einspeisung des nichtaktiven Störstroms und des Wirkstroms sicherstellt,
in Abhängigkeit von der Identifizierung der Referenzströme durch die Recheneinheit (25);
wobei die Umschaltsteuerung des Wechselrichters (9) so ausgeführt ist, dass sie durch die Ausgangsfiltereinheit (10) am Anschlusspunkt (C) hindurchlässt:

• einen Teil oder die Gesamtheit der gegenphasig eingespeisten nichtaktiven Störströme, einschließlich der Oberschwingungsströme, sowie des reaktiven und unsymmetrischen Stroms mit der Grundfrequenz in die nichtlinearen und linearen elektrischen Lasten (2),
um den Blindleistungsbedarf der nichtlinearen und linearen elektrischen Lasten (2) zu decken und um gleichzeitig das Stromnetz (1) von diesen nichtaktiven Störströmen zu dekontaminieren;
• einen Wirkstrom, der einem Punkt maximaler verfügbarer Leistung innerhalb der Leistungseinheit zur Erzeugung erneuerbarer Energie (100) entspricht, um den Wirkstromverbrauchsbedarf der nichtlinearen und linearen elektrischen Lasten (2) zu decken und gleichzeitig das Aufladen des Speicherelements (3) sicherzustellen.

5. Verfahren nach Anspruch 4, wobei die Umschaltsteuerung des Wechselrichters (9) so ausgeführt wird, dass sie durch die Ausgangsfiltereinheit (10) auch hindurchlässt:
einen Teil des Wirkstroms in das gegebene Stromnetz (1) dann frei von nichtaktiven Störströmen, wenn die Produktion der Leistungseinheit zur Erzeugung erneuerbarer Energie (100) größer ist als die von den nichtlinearen und linearen elektrischen Lasten (2) verbrauchte Leistung.

6. Verfahren nach einem der Ansprüche 4 oder 5, wobei die Leistungseinheit zur Erzeugung erneuerbarer Energie (100) ohne Zerhacker oder andere Leistungselektronikvorrichtungen mit dem Energiespeicherelement (3) verbunden ist.

7. Verfahren nach einem der Ansprüche 4 bis 6, wobei die Steuer- und Regeleinheit (12) aufweist:

- einen Zerhacker, der ausgelegt ist, um eine vordefinierte konstante Gleichspannung an den Klemmen des Energiespeichers (3) des Wechselrichters (9) aufrechtzuerhalten, unabhängig vom Spannungsniveau der Quelle (100) erneuerbarer Energie, um eine unveränderte Oberschwingungsfilterung sicherzustellen,
- einen Doppelzerhacker für den Fall eines Inselstromnetzes.

8. Verfahren nach einem der Ansprüche 4 bis 7, wobei die Steuer- und Regeleinheit (12) einen Regler mit kontinuierlichem Gleitmodus erster oder einer höheren Ordnung umfasst, der eine angepasste Gleitfläche erster, zweiter, dritter oder anderer Ordnung aufweist.

9. Verfahren nach einem der Ansprüche 4 bis 8, wobei die Steuer- und Regeleinheit (12) mindestens einen der beiden folgenden Gleitmodus-Regler aufweist:

- einen, der eine als Sigmoidfunktion approximierte Signumfunktion mit einer angepassten Gleitfläche zweiter Ordnung aufweist; und
- einen anderen, der auf einem Verfahren zur künstlichen Erhöhung des relativen Grades basiert, mit einer Signumfunktion mit einer angepassten Gleitfläche dritter Ordnung, gefolgt von einem Integrator.

10. Verfahren nach einem der Ansprüche 4 bis 9, wobei die Steuer- und Regeleinheit (12) mindestens einen der folgenden drei Gleitmodus-Regler höherer Ordnung umfasst:

- der erste basiert auf einem kontinuierlichen Gleitmodus-Regler höherer Ordnung C-HOSM, der drei Signumfunktionen aufweist, mit einer angepassten Gleitfläche erster Ordnung,
- der zweite verwendet einen 2-SMC-Twisting-Regler mit künstlicher Erhöhung des relativen Grades, der zwei Signumfunktionen aufweist, mit einer angepassten Gleitfläche zweiter Ordnung, gefolgt von einem Integrator,
- der dritte ist ein 2-SMC-Super-Twisting-Regler, der eine Signumfunktion aufweist, mit einer angepassten Gleitfläche zweiter Ordnung ohne künstliche Erhöhung des relativen Grades.

11. Verfahren nach einem der Ansprüche 4 bis 10, wobei die Leistungseinheit zur Erzeugung erneuerbarer Energie (100):

- aus der folgenden Liste ausgewählt ist: aus einem oder mehreren Photovoltaikmodulen, einer oder mehreren Windkraftanlage(n), einer oder mehreren Brennstoffzelle(n) oder Sonstigem,
- bei kontinuierlicher Erzeugung direkt mit einem kapazitiven Speicherelement (3) oder bei alternativer Erzeugung über einen Wechselstrom-/Gleichstrom-Gleichrichter gekoppelt ist.

12. Verfahren nach einem der Ansprüche 4 bis 11, wobei das Netz aus der folgenden Liste ausgewählt ist: aus dem Hauptstromnetz, aus einem lokalen Insel- oder an das Hauptstromnetz angeschlossenen Mikronetz oder einem Bordnetz.

13. Verfahren nach einem der Ansprüche 4 bis 11, das ferner ein intelligentes Gebäude (27) aufweist und wobei die Steuer- und Regeleinheit (12) mit einer dezentralen Verwaltungseinheit (70) des intelligenten Gebäudes (27) verbunden ist, wobei die Steuer- und Regeleinheit (12) die maximal verfügbare Leistung der Leistungseinheit zur Erzeugung erneuerbarer Energie (100) mit der Gesamtlast des intelligenten Gebäudes (27) vergleicht.

14. Verfahren nach Anspruch 13, wobei die Steuer- und Regeleinheit (12) ausgelegt ist, um den Verbrauch der verschiedenen in diesem intelligenten Gebäude (27) betriebenen Geräte durch Verteilung der Lasten, die den nichtlinearen/linearen Lasten entsprechen, gemäß mindestens zwei Betriebsmodi zu optimieren:

- einem ersten Verteilungsmodus, bezeichnet als Modus des angepassten Verbrauchs, in dem die Steuer- und Regeleinheit (12) die dezentrale Verwaltungseinheit (70) des intelligenten Gebäudes (27) so steuert, dass der Verbrauch des intelligenten Gebäudes an die Produktion der Leistungseinheit zur Erzeugung erneuerbarer Energie (100) angepasst wird, damit die Gesamtlastkurve des intelligenten Gebäudes einen maximalen Gleichzeitigkeitsfaktor aufweist, der dem gleichzeitigen Betrieb aller Lasten des Gebäudes innerhalb der Grenzen der erzeugten erneuerbaren Energie entspricht,
- einem zweiten Verteilungsmodus, bezeichnet als Modus des modulierten Verbrauchs, bei einer unzureichenden Erzeugung erneuerbarer Energie, in dem die Steuer- und Regeleinheit (12) die dezentrale Verwaltungseinheit (70) des intelligenten Gebäudes (27) so steuert, dass der Verbrauch der Geräte des intelligenten Gebäudes (27) moduliert wird, dass eine im Wesentlichen konstante Gesamtlastkurve des intelligenten Gebäudes in Abhängigkeit von der Zeit angestrebt wird,
- einem dritter Verteilungsmodus, in derselben Situation und wenn das Stromnetz (1) intelligent ist, der an die Erzeugung des intelligenten Stromnetzes (1) angepasst ist.

15. Verfahren nach einem der Ansprüche 10 bis 14, das ferner umfasst:

- ein lokales Netz (28), das mit dem Netz (1) verbunden ist, und
- konventionelle (fossile) Energieerzeugungseinheiten (80), und
- ein halbdezentrales Verwaltungssystem (29), und
- eine Vielzahl von Leistungseinheiten zur Erzeugung erneuerbarer Energie (100), die über eine Kompensationsvorrichtung (7) mit dem lokalen Netz (28) verbunden sind, wobei jede Kompensationsvorrichtung (7) mit dem halbdezentralen Verwaltungssystem (29) verbunden ist, an das sie Informationen über die aktuelle und zukünftige Energieerzeugung jeder der Leistungseinheiten zur Erzeugung erneuerbarer Energie (100) übermittelt, und

- eine Vielzahl von Verbrauchsstellen, die den nichtlinearen und linearen Lasten (2) entsprechen, wobei jede der Verbrauchsstellen mit dem lokalen Netz (28) verbunden und mit einer Kompensationsvorrichtung (7) ausgestattet ist, die mit dem halbdezentralen Verwaltungssystem (29) verbunden sind, an das sie Informationen über den momentanen Verbrauch und den zukünftigen Verbrauch entsprechend dem programmierten Betrieb der Verbrauchsstellen übermittelt,

- eine Vielzahl von Leistungseinheiten zur Erzeugung erneuerbarer Energie (100) und linearer und nichtlinearer Lasten (2) der intelligenten Gebäude (27) mit positiver Energie, die den Eigenverbrauch sicherstellen und bei denen der eventuelle Energieüberschuss gespeichert oder mit anderen intelligenten Gebäuden ausgetauscht oder über die Steuer- und Regeleinheit (12) der Kompensationsvorrichtung (7) in Abstimmung mit dem halbdezentralen Verwaltungssystem (29) dem lokalen Netz bereitgestellt wird, im Falle eines Austauschs mit dem lokalen Netz (28).

## Claims

1. Method for modeling the electrical operation of an industrial site comprising a plurality of machines controlled by electronic power converters and distributed across one or more production lines,

   the controlled machines being modeled by current sources, representing the total consumption (active, reactive, and harmonics) of the controlled machines, measured by an energy analyzer installed at the input of each production line,
   **characterized in that** the steps of the method are as follows:

   1- installing a single measuring device, which is a spectrum analyzer/power quality analyzer, at the input of each production line of the industrial site under study, each production line comprising several controlled machines, the measuring device providing the electrical quantities of the network: active, reactive, and apparent power; power factor; fundamental components of current and voltage; total harmonic distortion (THD) of current and voltage; individual harmonic distortion of currents and voltages,

   2- modeling the active and reactive powers using a parallel R-L branch or a single current source representing the fundamental current, with an angle corresponding to the power factor; the direction of current flow is from the electrical network (1) to a load (2),

   3- Modeling the individual harmonic distortion rate of currents and voltages using current sources, each corresponding to a harmonic rank, with the direction of harmonic currents flowing from the load (2) to the electrical network (1).

   4- Connecting all these current sources modeled in steps 2 and 3 to one or more resistors of selected values to force the currents to flow in a single direction:

   - from the electrical network (1) to the loads (2) for the fundamental current, and
   - from the loads (2) to the electrical network (1) for harmonic currents, and

   5- obtaining a model of the electrical operation of the given industrial site (1) in terms of current sources and resistors.

2. Method according to claim 1, in which the network has several voltage levels, comprises several power transformers with cables and power lines, as well as dozens of controlled machines associated with several active pollution control filters.

3. Method according to one of claims 1 to 2, in which the machines are controlled by power converters, such as inverters and rectifiers.

4. Method according to one of claims 1 to 3, in which the given industrial site studied has:

   - non-linear/linear loads (2),
   - at least one renewable energy generation power unit (100), and

   - a renewable energy generation parallel active filter type current compensation device (7), capable of being connected:

➢ at its input, downstream of at least one renewable energy generation power unit (100) coupled to an energy storage element (3), and
➢ in parallel, at its output, upstream of a connection point (C) between, on the one hand, a given electrical network (1) and, on the other hand, nonlinear and linear electrical loads (2),

the current compensation device (7) comprising:

- a power conversion unit (8), comprising at least one voltage inverter (9) generating an alternating current, with a frequency band ranging from 50 to 2500Hz, covering:

a) the entire frequency band of the non-active disturbance current, which has: all or part of the harmonics, and at the fundamental frequency , all or part of the reactive power and/or an imbalance,
b) as well as the maximum active current generated by the renewable energy generation power unit (100);

- an output filtering unit (10), comprising an LCL-type filter (11) for each of the phases and a neutral, and connected: on the one hand downstream of the voltage inverter (9), and on the other hand in parallel with the connection point (C) between the given electrical network (1) and the non-linear and linear electrical loads (2), the LCL output filter (11) being dimensioned to block the harmonic components due to the switching of the inverter (9);
- a control unit (12) comprising a reference current calculation unit (25), the reference currents comprising:

i. at least one non-active disturbance current intended to be injected at the connection point in opposite phase to cancel, on the electrical network side (1), the signal disturbances generated by the nonlinear and linear loads (2),
presenting all or part of the harmonics, and at the fundamental frequency all or part of reactive and/or unbalanced current,
ii. at least one active current for recharging the storage element (3),
iii. at least one active current corresponding to a maximum power point of the renewable energy generation power unit (100),

the control unit (12) also comprising:

a switching control device (21) that controls the switching of the inverter (9) via a nonlinear controller (23) using a continuous sliding mode, adapted to the LCL-type filter (11) which provides closed-loop control of the entire frequency band from 50 to 2500 Hz for the injection of the non-active disturbance current and the active current,
based on the identification of the reference currents by the calculation unit (25);
the switching control of the inverter (9) being performed in such a way as to allow the output filter unit (10) to pass through the connection point (C):

• a part or all the non-active disturbance currents injected in opposition phase comprising harmonic currents, as well as reactive and unbalanced currents at the fundamental frequency, in the nonlinear and linear electrical loads (2),
to satisfy the reactive energy consumption demand of the nonlinear and linear electrical loads (2), while cleaning up the electrical network (1) of these reactive disturbance currents;
• an active current corresponding to a maximum power point available within the renewable energy generation power unit (100), to satisfy the active energy consumption demand of the nonlinear and linear electrical loads (2), while ensuring the recharging of the storage element (3).

5. Method according to claim 4, wherein the switching control of the inverter (9) is performed so as to also allow the following to pass through the output filter unit (10):
a portion of the active current into the given electrical network (1), which is then free of non-active disturbance currents, when the output of the renewable energy generation power unit (100) exceeds the power consumed by the nonlinear and linear electrical loads (2).

6. Method according to one of claims 4 or 5, in which the renewable energy generation power unit (100) is coupled without a chopper or other power electronic devices to the energy storage element (3).

7. Method according to any of claims 4 to 6, wherein the control unit (12) comprises:

   - a chopper configured to maintain a predefined constant DC voltage across the energy storage element (3) of the inverter (9), ly of the voltage level of the renewable energy source (100) to ensure unchanged harmonic filtering.
   - a double chopper for the case of an isolated electrical network.

8. Method according to any of claims 4 to 7, in which the control unit (12) comprises a continuous sliding mode controller of $1^{st}$ order or higher order, having a sliding surface adapted to $1^{st}$ order, $2^{nd}$ order, $3^{rd}$ order, or others.

9. Method according to any of claims 4 to 8, wherein the control unit (12) comprises at least one of the following two sliding mode controllers:

   - one comprising an approximate sign function as a sigmoid function with a 2nd-order sliding surface; and
   - the other is based on an artificial relative degree increase method comprising a sign function with an adapted $3^{rd}$ order sliding surface, followed by an integrator.

10. Method according to any of claims 4 to 9, in which the control unit (12) includes at least one of the following three higher-order sliding mode controllers:

    - the first is based on a continuous higher-order sliding mode controller C-HOSM comprising three sign functions, with an adapted sliding surface of the $1^{st}$ order,
    - the second uses a 2-SMC Twisting controller with artificial increase in relative degree, comprising two Sign functions, with an adapted sliding surface of $2^{nd}$ order, followed by an integrator,
    - the third is a 2-SMC Super-Twisting controller with a Sign function, with an adapted sliding surface of the $2^{nd}$ order, without artificial increase in the relative degree.

11. Method according to any of claims 4 to 10, in which the renewable energy generation power unit (100) is:

    - selected from the following list: one or more photovoltaic panels, wind turbine(s), fuel cell(s) or others,
    - coupled directly to a capacitive storage element (3) in the case of continuous production, or via an AC/DC power rectifier in the case of alternating production.

12. Method according to any of claims 4 to 11, wherein the grid is selected from the following list: the main electrical grid, a local microgrid that is isolated or connected to the main electrical grid, or an on-board electrical grid.

13. Method according to any of claims 4 to 11, further comprising a smart building (27), and in which the control unit (12) is connected to a decentralized management unit (70) of the smart building (27), the control unit (12) compares the maximum available power of the renewable energy generation unit (100) with the total load of the smart building (27).

14. Method according to claim 13, wherein the control unit (12) is configured to optimize the consumption of the various devices operating within this smart building (27) by distributing the loads corresponding to the non-linear/linear loads according to at least two operating modes:

    - a first distribution mode known as the adapted consumption mode, in which the control unit (12) controls the decentralized management unit (70) of the smart building (27) so as to adapt the consumption of the smart building to the production of the renewable energy generation power unit (100), so that the total load curve of the smart building has a maximum simultaneity factor corresponding to the operation of all the building's loads at the same time, within the limits of the renewable energy produced,
    - in the event of insufficient renewable energy production, a second distribution mode known as the modulated consumption mode, in which the control unit (12) controls the decentralized management unit (70) of the smart building (27) in order to modulate the consumption of the smart building's appliances (27) to achieve a total load curve for the smart building that is substantially constant over time,
    - in the same scenario and if the electrical network (1) is smart, a third distribution mode adapted to the production of the smart electrical network (1) is possible.

15. Method according to any of claims 10 to 14, further comprising:

    - a local network (28) connected to the network (1), and

# EP 3 818 606 B1

- conventional (fossil) power generation units (80), and
- a semi-decentralized management system (29), and
- a plurality of renewable energy generation power units (100) connected to the local network (28) by a compensation device (7), each compensation device (7) being connected to the semi-decentralized management system (29) to which it communicates information concerning the current and future energy production of each of the renewable energy generation power units (100), and
- a plurality of consumption stations corresponding to non-linear and linear loads (2), each of the consumption stations being connected to the local network (28) and equipped with a compensation device (7), connected to the semi-decentralized management system (29) to which it communicates information concerning instantaneous consumption and future consumption based on the programmed operation of the consumption stations,
- a plurality of renewable energy generation power units (100) and linear and non-linear loads (2) of positive energy smart buildings (27), which ensure self-consumption and where any surplus energy is stored or exchanged with other smart buildings or delivered to the local grid (28) via the control unit (12) of the compensation device (7), in coordination with the semi-decentralized management system (29) in the event of exchange with the local grid (28).

**FIG. 1a**

**FIG. 1b**

EP 3 818 606 B1

# FIG. 2

EP 3 818 606 B1

FIG. 3

FIG. 4

FIG. 5

FIG. 6

FIG. 7

FIG. 8

**FIG. 9**

EP 3 818 606 B1

FIG. 10

## FIG. 11

EP 3 818 606 B1

FIG. 12

FIG. 13a

FIG. 13b

FIG. 13c

# FIG. 14

$I_{inj}/I_{ref}(s)$

EP 3 818 606 B1

**FIG. 15**

$I_{ref}, I_{inj}$
Fonction Signe

$I_{ref}, I_{inj}$
Fonction Sigmoïde

$I_{ref}, I_{inj}$
AIRD

Commande :
**u** : Fonction Signe

Commande :
**u** : Fonction Sigmoïde

Commande :
**u** : AIRD

Commande continue

Commande
discontinue

EP 3 818 606 B1

**FIG. 16**

EP 3 818 606 B1

## FIG. 17

Réseau | Transformateur | Ligne électrique

Rcc  Lcc  E  △/Y  Rcable  Lcable  Charge linéaire ou non linéaire

## FIG. 18

**FIG. 19**

Amplitude (A)
Phase (Deg)
Fréquence (Hz)

EP 3 818 606 B1

## FIG. 20a

---- IL1 ······· IL2 —— IL3

## FIG. 20b

---- Vs1 ······· Vs2 —— Vs3

## FIG. 20c

---- PF1 ······· PF2 —— PF3

## FIG. 20d

---- THDi1    ······ THDi2    —— THDi3

## FIG. 20e

---- THDV1    ······ THDv2    —— THDv3

## FIG. 20f

---- (%) I5-ph1    ······ (%) I5-ph2    —— (%) I5-ph3

## FIG. 20g

---- (%) I7-ph1 ······· (%) I7-ph2 —— (%) I7-ph3

## FIG. 20h

---- (%) I11-ph1 ······· (%) I11-ph2 —— (%) I11-ph3

## FIG. 20i

---- (%) I13-ph1 ······· (%) I13-ph2 —— (%) I13-ph3

## FIG. 21a

## FIG. 21b

# FIG. 21c

## FIG. 21d

## FIG. 21e

## FIG. 21f

## FIG. 22

## FIG. 23

FIG. 24

Contrôleur C-HOSM

Non traité

Us1  Us2  Us3

(V)

500

0

-500

0.04    0.06    0.08    0.1    0.12    0.14    0.16

Is1  Is2  Is3

(A)

500

0

-500

0.04    0.06    0.08    0.1    0.12    0.14    0.16

THD-Is2    THD-Is3

THD-Is1

THD-Vs3

(-)

0.1

0.05

THD-Vs1    THD-Vs2

0.04    0.06    0.08    0.1    0.12    0.14    0.16

t (s)

EP 3 818 606 B1

**FIG. 25**

FIG. 26

FIG. 27

Caractéristiques courant-tension

Point de puissance maximum

$I_{CC}$

$I_{MPP}$

Courant (A)

Tension (V)

$U_{MPP}$   $U_{CO}$

Caractéristiques puissance-tension

Point de puissance maximum

$P_{MPP}$

Puissance (W)

Tension (V)

$U_{MPP}$   $U_{CO}$

EP 3 818 606 B1

FIG. 28

EP 3 818 606 B1

**FIG. 29**

FIG. 29

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ALALI MHD A E et al.** A Lyapunov approach based higher order sliding mode controller for grid connected shunt active compensators with a LCL filter. *2017 19TH EUROPEAN CONFERENCE ON POWER ELECTRONICS AND APPLICATIONS (EPE'17 ECCE EUROPE)*